(19) Europäisches Patentamt
European Patent Office
Office européen des brevets

(11) EP 1 657 573 A2

(12) # EUROPEAN PATENT APPLICATION
published in accordance with Art. 158(3) EPC

(43) Date of publication:
**17.05.2006 Bulletin 2006/20**

(21) Application number: **04771749.1**

(22) Date of filing: **11.08.2004**

(51) Int Cl.:
***G02B 5/22*** *(1968.09)* ***G01J 3/46*** *(1968.09)*
***G09F 9/00*** *(1968.09)* ***B32B 27/18*** *(1968.09)*

(86) International application number:
**PCT/JP2004/011788**

(87) International publication number:
**WO 2005/014270 (17.02.2005 Gazette 2005/07)**

(84) Designated Contracting States:
**AT BE BG CH CY CZ DE DK EE ES FI FR GB GR HU IE IT LI LU MC NL PL PT RO SE SI SK TR**

(30) Priority: **11.08.2003 JP 2003291785**
**11.08.2003 JP 2003291787**
**26.12.2003 JP 2003432735**
**26.12.2003 JP 2003434288**
**26.12.2003 JP 2003434290**
**18.06.2004 JP 2004180939**

(71) Applicant: **Toyo Boseki Kabushiki Kaisha**
**Osaka 530-0004 (JP)**

(72) Inventors:
- **MORI, Kenichi**
**Toyo Boseki K.K. Films R.& D. Centr.**
**Otsu-shi,**
**Shiga530-0004 (JP)**
- **YOSHIMI, Akira**
**Toyo Boseki K.K. Fiilm R.&D. Centr.**
**Otsu-shi,**
**Shiga 520-0292 (JP)**
- **ONOMICHI, Shinya**
**Toyo Boseki K.K.Films R&D Centr.**
**Otsu-shi ,**
**Shiga 520-0292 (JP)**
- **SHIMIZU, T.**
**Toyo Boseki K.K. Films R.& D. Center**
**Otsu-shi,**
**Shiga 520-0292 (JP)**
- **KOSAKA, Tasuku**
**Toyo Boseki K.K. Films R.&D. Centr.**
**Otsu-shi,**
**Shiga 520-0292 (JP)**
- **TAKI, Hiroshi**
**Toyo Boseki K.K. Films R.& D. Centr.**
**Otsu-shi,**
**Shiga 520-0292 (JP)**
- **MIZUNO, Naoki**
**Toyo Boseki K.K. Films R.& D. Centr.**
**Otsu-shi,**
**Shiga 520-0292 (JP)**
- **IKEHATA, Y.**
**Toyo Boseki K.K. Films R.& D.Center**
**Tsuruga-shi,**
**Fukui 9140047 (JP)**
- **MORISHIGE, C.**
**Toyo Boseki K.K. Films R.& D. Center**
**Otsu-shi,**
**Shiga 520-0292 (JP)**

(74) Representative: **Müller-Boré & Partner**
**Patentanwälte**
**Grafinger Strasse 2**
**81671 München (DE)**

(54) **NEAR-INFRARED ABSORBING FILM, PROCESS FOR PRODUCING THE SAME, NEAR-INFRARED ABSORBING FILM ROLL, PROCESS FOR PRODUCING THE SAME AND NEAR-INFRARED ABSORBING FILTER**

(57) The near-infrared ray absorption film of the present invention is a near-infrared ray absorption film in which a near-infrared ray absorption layer comprising a composition containing a near-infrared ray absorbing dye having maximum absorption at a wavelength of 800 to 1200 nm, and a resin is provided on a transparent substrate film, and is **characterized** that a surfactant having HLB of 2 to 12 is contained in the composition at 0.01 to 2.0% by mass. There can be provided a near-infrared ray absorption film excellent in coated film appearance which has the wide absorbing ability in the near-infrared ray absorbing region, has a high light transmittance in the visible light region, has little change in optical properties with time, and can respond to a higher luminance of a display, and higher-definition and higher image quality by Hi-Vision broadcasting in recent years.



Printed by Jouve, 75001 PARIS (FR)

(Cont. next page)

# FIG.5

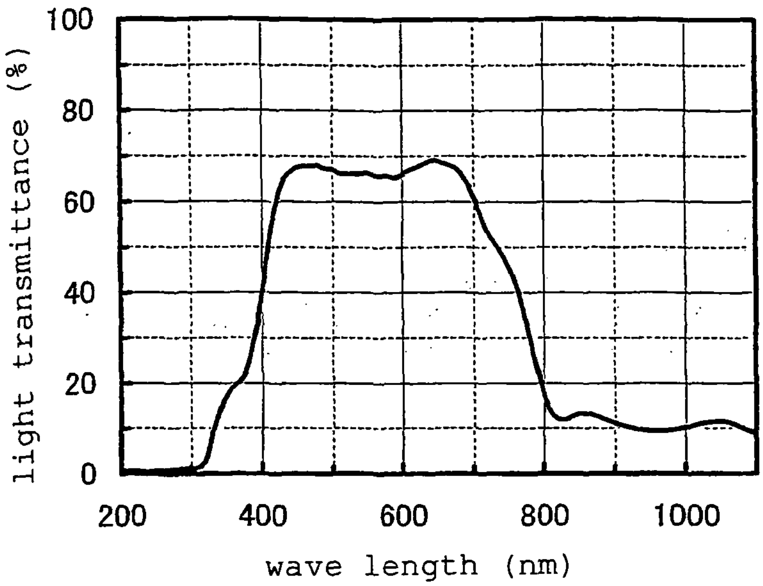
100
80
60
40
20
0
light transmittance (%)
200
400
600
800
1000
wave length (nm)

## Description

TECHNICAL FIELD

The present invention relates to a near-infrared ray absorption film and a process for its production, the film having a high transmittance in the visible light region, having little change in the transmittance with time, being uniform in coated film appearance, and being suitable for display filters; a near-infrared ray absorption film roll and a process for its production, the roll having little variation in the color tone and the like of a long film; and a near-infrared ray absorption filter using the film.

BACKGROUND ART

A filter having the ability to absorb a near-infrared ray has the property of cutting off a near-infrared ray and making visible light pass therethrough, and is used as a near-infrared ray absorption filter in various applications.

For example, in recent years, attention has been focused on a plasma display as a thin-type large screen display, but since there is a problem that an electronic equipment using a near-infrared remote control causes erroneous motions due to a near-infrared ray released from a plasma display, an attempt has been made to prevent these erroneous motions by disposing the above-described near-infrared ray absorption filter in front of a plasma display.

As a near-infrared ray absorption filter, there have been used so far, (1) a filter containing a metal ion such as copper or iron in a phosphate-type glass, (2) a interference filter through which a particular wavelength is transmitted by laminating layers having different refractive indices on a substrate and making transmitted light interfere, (3) an acryl-type resin filter containing a copper ion in a copolymer, and (4) a filter in which a layer obtained by dispersing or dissolving a dye in a resin is laminated on a substrate.

In these filters, the filter (4) is better in processability and productivity, and has a relatively great freedom degree of optical design, and various methods have been proposed, for example, in Japanese Patent Application Laid-Open (JP-A) No. 2002-82219, JP-A No. 2002-214427, JP-A No. 2002-264278, JP-A No. 2002-303720, JP-A No. 2002-333517, JP-A No. 2003-82302, JP-A No. 2003-96040, and JP-A No. 2003-114323.

However, in these methods, there are some methods having the ability to sufficiently cut off a near-infrared ray released from a plasma display, and has no change with time even when used for a long period of time, but they are not sufficiently satisfactory in the coated film appearance of a near-infrared ray absorption layer for a higher luminance of a plasma display in recent years, as well as for a higher-definition and a higher quality image due to Hi-Vision broadcasting. The coated film appearance of a near-infrared ray absorption layer should have no defects having a size of 300 μm or greater, more preferably 100 μm, in diameter. Defects having a size of 300 μm or greater look like luminescent spots, and such defects become remarkable, when disposed in front of a plasma display. Defects of not smaller than 100 μm and smaller than 300 μm may be highlighted in some cases due to the lens effect in the attachment by adhesion processing or the like, and defects should be eliminated from the coated film as much as possible. In addition, a thin streak, a lack of application uniformity, or the like of the coated film also become remarkable in front of a display, which becomes problematic.

In addition, a filter is required to have other functions such as color tone adjustment for imparting particular absorption in a visible light region, reflection prevention, and flaw resistance on the surface, in addition to possession of the near-infrared ray absorbing ability. Further, there has been proposed impartation of the ultraviolet absorbing ability to a filter. This is because an ultraviolet-ray is contained in light which is introduced into a near-infrared ray absorption filter from the outside in many cases, this ultraviolet-ray causes deterioration in a near-infrared ray absorbing dye, and this becomes a cause for deterioration in the near-infrared ray absorption filter with time.

For imparting these functions to a filter, for example, a multilayer-type near-infrared ray absorption film is disclosed in which a functional layer having various functions is made of multiple layers (WO 97/38855). In this gazette, as a layer having a function other than the near-infrared ray absorbing ability, there are disclosed an electromagnetic wave absorption layer, an anti-reflective layer, and an ultraviolet absorption layer, but the electromagnetic wave absorption layer and the anti-reflective layer are described in detail, and the Detailed Explanation of the Invention and the Examples are completely silent on the ultraviolet absorption layer. The conversion of an electromagnetic wave absorption layer and an anti-reflective layer described in detail into a multilayer is implemented by a method of attaching functional entities having the respective functions with a near-infrared ray absorption film.

In addition, a filter for direct attachment to a plasma display panel is disclosed in which a near-infrared ray-cut film obtained by combining an antistatic layer-containing anti-reflective function and an ultraviolet absorption layer is directly applied to the surface of a plasma display panel (JP-A No. 2002-189423). This gazette discloses a structure in which a film having the anti-reflective function containing an antistatic layer is attached to a near-infrared ray-cut film with a transparent adhesive (sticky) layer containing an ultraviolet absorbing agent and, further, a transparent pressure-sensitive adhesive (sticky) layer is combined on the surface of the near-infrared ray-cut film.

In addition, a filter is disclosed on which an ultraviolet absorption layer and a hard coat layer are laminated, although a near-infrared ray absorbing agent is limited to a nickel complex compound (JP-A No. 2003-4904). Also in this technique, an ultraviolet absorbing agent-containing film is attached to a near-infrared ray absorbing dye-containing sheet.

In the prior art technique regarding these composite type filters by attachment, there is a problem that attachment with a sticky layer interposed increases an interface and, consequently, optical properties are deteriorated, and there still remains a problem that an attachment step is necessary and is thus economically disadvantageous. In addition, since the total thickness of a filter becomes great, there is a problem that the workability of attachment to a subject to be attached, such as a display, becomes poor.

As the technique of preventing the ultraviolet deterioration of a near-infrared ray absorbing dye in a near-infrared ray absorption filter, and further aiming at multiple functions, JP-A No. 2002-138203 discloses a laminate for shutting off a near-infrared ray in which an anti-reflective film, a transparent substrate, a near-infrared ray shutting off layer, and a transparent sticky layer are laminated in this order. This transparent sticky layer is used to adhere a laminate to a transparent hard substrate such as a display, and this gazette discloses a description to the effect that, for the purpose of suppressing deterioration in a near-infrared ray absorbing dye, it is preferable that an ultraviolet absorbing agent is contained in a transparent sticky composition forming the transparent sticky layer. However, in the mode of actual use of a filter, since a transparent sticky layer is situated at a position on a display side than a near-infrared ray shutting off layer, and a ultraviolet ray is introduced from an anti-reflective layer side together with visible light, the action of absorbing an incident ultraviolet ray before irradiation at a near-infrared ray absorbing dye cannot be exhibited, from the viewpoint of a structure. Therefore, this cannot respond to a demand for the suppression of deterioration in the near-infrared ray absorbing dye due to the incident ultraviolet ray under the current circumstances.

However, for a higher luminance of a plasma display in recent years, as well as for a higher-definition and a higher-quality image due to Hi-Vision broadcasting, it becomes important that color tone variation between products is as small as possible, and the coated film appearance of a near-infrared ray absorption layer is excellent, in addition to not only the above-described fundamental properties, but also, of course, a small variation in a color tone throughout a screen. However, each of the above-described gazettes neither describes nor suggests a method of improving color tone variation and coated film appearance, particularly, for a long near-infrared ray absorption film.

In addition, since a plasma display also has a tendency to have a large screen, as a film for reducing a light transmittance and color spots when applied to such a large screen display, a wavelength-controlled film in which a variation in a light transmittance for a specified wavelength in the longitudinal direction of the film is proposed in JP-A No. 2002-341132 (e.g., JP-A No. 2002-341132). This technique is to coat a light absorption layer on a film, after which this is irradiated with laser light having a specified wavelength before drying or cooling, and the rotation number of a microgravure is controlled so that a variation in the transmission intensity becomes small, thereby making an application amount uniform and reducing a light transmittance and color spots in a large screen of a plasma display when applied to the screen. However, in this method, color tone variation in the longitudinal direction (MD direction) of a film can be controlled to some extent, but the suppression of color tone variation in the film width direction (TD direction) is not sufficient. In addition, it is difficult to highly decrease color tone variation for a long near-infrared ray absorption film only by control of an application amount by the rotation number of a microgravure and, further, appearance is not satisfactory.

It is an object of the present invention to provide a near-infrared ray absorption film and a near-infrared ray absorption filter excellent in coated film appearance, which has the wide absorbing ability in a near-infrared ray region, has a light transmittance in a visible light region, has a little change in optical properties with time, and can respond to a higher luminance of a display in recent years, as well as to a higher-definition and a higher quality image due to Hi-Vision broadcasting. It is another object of the present invention to establish a process for producing a near-infrared ray absorption film and a process for producing a near-infrared ray absorption film roll, which can prevent a lack of application uniformity in appearance and optical performance in a large screen and between products.

DISCLISURE OF THE INVENTION

The near-infrared ray absorption film of the present invention is a near-infrared ray absorption film in which a near-infrared ray absorption layer comprising a composition containing a near-infrared ray absorbing dye having maximum absorption in a range of 800 nm in wavelength to 1200 nm in wavelength, and further containing a resin is provided on a transparent substrate film, wherein a surfactant having an HLB in a range of 2 to 12 is contained in the composition at not smaller than 0.01% by mass and not greater than 2.0% by mass. The "film" used in the present invention has a concept including a "sheet". Besides, a front filter for plasma displays using the near-infrared ray absorption film of the present invention is also included in the present invention.

In addition, a process for producing a near-infrared ray absorption film of the present invention is a process for producing a near-infrared ray absorption film comprising: applying a coating solution containing a near-infrared ray absorbing dye, a resin, a surfactant, and an organic solvent to a transparent substrate film; and drying the coating solution

to form a near-infrared ray absorption layer, wherein a surfactant having an HLB of 2 to 12 is used as the surfactant and, at the same time, this surfactant is contained at not smaller than 0.01% by mass and not greater than 2.0% by mass, relative to the solid content of the coating solution.

BRIEF DESCRIPTION OF DRAWINGS

Fig.1 is a schematic view of a reverse gravure coat-type application apparatus used in Experiments 5 to 8 in the present invention.
Fig.2 is a schematic view showing a structure example of the near infrared ray absorption film of the present invention.
Fig.3 is a schematic view showing a structure example of the near-infrared ray absorption film of the present invention.
Fig.4 is a schematic view showing a structure example of the near-infrared ray absorption film of the present invention.
Fig.5 is a graph showing the spectroscopic properties of near-infrared ray absorption film No. 1 prepared in Example 9-1-1.

(Explanation of Numerals)

1: Transparent substrate before application of coating solution
2: Gravure roll
3: Solution supplying pan
4: Doctor blade
5: Transparent substrate after application of coating solution
10: Substrate film
20: First adhesion modifying layer
30: Near-infrared ray absorption layer

BEST MODE FOR CARRYING OUT THE INVENTION

The near-infrared ray absorption film of the present invention essentially comprises a transparent substrate film and a near-infrared ray absorption layer as constituent elements. The present invention will be explained below in detail.

[Transparent substrate film]

The transparent substrate for the near-infrared ray absorption film of the present invention can be a glass, but from the viewpoint of ensuring of high transparency and from the viewpoints of cost and easy handling property, a plastic film is preferable. Specific examples thereof include various resin films of the polyester type, the acryl type, the cellulose type, the polyolefin type (polyethylene, polypropylene, and other copolymerized type), the polyvinyl chloride type, the polycarbonate type, the phenol type, and the urethane type. In particular, from the viewpoint of good balance between heat resistance and flexibility, a polyester type film is preferable, polybutylene terephthalate, polyethylene-2,6-naphthalate, and polyethylene terephthalate (PET) films are more preferable, and a biaxially stretched PET film is most preferable.
The "transparent" in the transparent substrate film means that the total light transmittance is 80% or higher, preferably 90% or higher. In addition, the haze of a substrate film is preferably 5% or lower, more preferably 2% or lower. When the transparency of a substrate film is poor, the brightness of a display is lowered, and the sharpness of an image is deteriorated. The above-described total light transmittance and haze are values measured by methods prescribed in JIS-K7136.
Examples of the polyester used in a polyester type film include polyesters obtained by the esterification or transesterification of an aromatic dicarboxylic acid or an ester thereof, such as terephthalic acid, isophthalic acid, or naphthalene dicarboxylic acid, and a glycol such as ethylene glycol, diethylene glycol, 1,4-butanediol, or neopentyl glycol, followed by polycondensation, and these polyesters are usually supplied in the form of polymer chips. The polyester type film is usually a film prepared by melting the polymer chips, extruding the melt into a sheet through a T-die to obtain an unstretched film, and stretching this unstretched film at least in a monoaxial direction (preferably biaxial direction), followed by heat fixing treatment and relaxing treatment.
As the polyester type film, a biaxially stretched film is particularly preferable from the viewpoint of strength. As the stretching method, a tubular stretching method, a simultaneous biaxially stretching method, and a successive biaxially

stretching method are usually used and, from the viewpoints of planarity, dimensional stability, and a lack of thickness uniformity of the resulting film, a successive biaxially stretching method is recommended. The successive biaxially stretched film is prepared, for example, by roll-stretching a polyester type unstretched film at 2.0- to 5.0-fold in the longitudinal direction thereof at a temperature of a glass transition temperature (Tg) of the polyester to Tg + 50°C, subsequently, stretching this film at 1.2-to 5.0-fold in the width direction thereof at a temperature of 120°C to 150°C using a tenter, further, after the biaxial stretching, carrying heat fixing treatment at a temperature of 220°C or higher, and relaxing this film in the width direction thereof by 3% to 8%. In addition, in order to further improve dimensional stability of a film in the longitudinal direction thereof, longitudinal relaxing treatment may be used in combination.

A biaxially stretched PET film which is most suitable as a constituent element of a substrate film is obtained, for example, by the following preparation method. The following preparation method is merely a typical example, but a substrate film used in the film of the present invention is not limited to those which are prepared by the following method.

PET resin pellets are sufficiently dried under reduced pressure, supplied to an extruder, a melted PET resin at about 280°C is extruded into a sheet through a T-die, and the sheet-like melted PET resin is cooled and solidified using a rotating cooling roll by the electrostatic application method to obtain an unstretched PET film. This unstretched PET film may have a mono-layered structure, or may have a multi-layered structure by the co-extrusion method.

The above-described unstretched PET film is stretched at 2.5- to 5.0-fold in the longitudinal direction thereof with a roll heated at 80°C to 120°C to obtain a monoaxially stretched PET film. Further, the ends of the monoaxially stretched film are grasped with clips, and the film is introduced into a hot air zone heated at 70°C to 140°C, and is stretched at 2.5-to 5.0-fold in the width direction thereof. Subsequently, the film is introduced into a heat treatment zone at 160°C to 240°C, and heat treated for 1 to 60 seconds to complete crystallization. Thus, a biaxially stretched PET film can be obtained.

For the purpose of improving handling property (e.g., windability after the formation of a near-infrared ray absorption layer), it is desirable to form a projection on the surface of a substrate film by allowing it to contain particles. Examples of the particles include inorganic particles such as silica, kaolinite, talc, calcium carbonate, zeolite, alumina, barium sulfate, carbon black, zinc oxide, and titanium oxide; and organic particles such as an acryl type resin, a polyamide type resin, a polystyrene type resin, a polyester type resin, and a benzoguanamine-formalin condensate. In order to maintain the transparency of a film, it is preferable to reduce the amount of particles contained in a substrate film, for example, to reduce it to not lower than 1 ppm and not higher than 1,000 ppm. Further, in order to maintain transparency, it is desirable to select particles having a refractive index close to that of a substrate resin. In addition, in order to impart various functions, if necessary, a substrate film may contain various additives such as a coloring agent, a light resistance agent (ultraviolet preventing agent), a dye, and an antistatic agent.

A substrate film may have a mono-layered structure, or may have a laminated structure of, for example, two layers or more (two layers, three layers, four layers, or the like). In the case of a laminated structure, there is the advantage that the functions of the respective layers can be designed independently. For example, in the case of a bi-layered structure, forming a layer as a thin layer, which layer is to be a surface layer on the opposite side of the near-infrared ray absorption layer of a near-infrared ray absorption film, allowing particles to be contained only in the thin layer to form irregularities on the surface thereof, forming a layer (central layer) as a thick layer, which layer is to be between the surface layer and the near-infrared ray absorption layer, and allowing substantially no particles to be contained in the thick layer, make it possible to secure high handling property, while the amount of particles contained is reduced to improve transparency.

The above-described state by "allowing substantially no particles to be contained" is the state where particles are allowed not to be intentionally contained, except for particles which are unavoidably mixed from the outside and, for example, in the case of inorganic particles, the state is the state where quantitative analysis by the fluorescent X-ray method finds that it is lower than the detection limit (the same holds below, in the present specification).

A process for preparing a substrate film with a laminated structure is not particularly limited, but in view of productivity, the "co-extrusion" method can preferably be employed, in which starting materials for the respective layers are extruded through separate extruders, and introduced into one die to obtain an unstretched film with a laminated structure, which is then subjected to the above-described stretching.

The thickness of a substrate film is different depending on the material thereof and, when a polyester film is used, the substrate is preferably 35 μm or greater, more preferably 50 μm or greater, particularly preferably 100 μm or greater. On the other hand, the upper limit of thickness is preferably 260 μm or smaller, more preferably 200 μm or smaller. When the thickness is small, not only handling property is deteriorated, but also thermal wrinkles are generated on a film and planarity may easily be deteriorated when heated at drying to reduce a solvent remaining in a near-infrared ray absorption layer. On the other hand, when the thickness is great, not only there is a problem on the cost, but also planarity may easily be deteriorated due to winding habit when a film is wound on a roll and stored.

Since in the near-infrared ray absorbing dyes described later, there are some dyes, degradation of which is promoted by a ultraviolet ray contained in the sunlight, it is preferable to use a substrate film having the function of cutting a ultraviolet ray (light resistance) as the substrate film of a near-infrared ray absorption film, and construct a filter in

which a near-infrared ray absorption layer of a near-infrared ray absorption film is disposed on a display side.

In order to impart light resistance to a substrate film, it is preferable that an ultraviolet absorbing agent is contained in the substrate film. Examples of the ultraviolet absorbing agent include organic ultraviolet absorbing agents and inorganic ultraviolet absorbing agents and, from the viewpoint of transparency, organic ultraviolet absorbing agents are preferable. As the organic ultraviolet absorbing agent, any of the well-known agents can be used. In particular, benzotriazole, benzophenone, and cyclic iminoesters are preferable, and from the viewpoint of heat resistance, cyclic iminoesters are particularly preferable. In addition, two or more kinds of the ultraviolet absorbing agents may be used in combination.

Examples of the benzotriazole type ultraviolet absorbing agent include

2-[2'-hydroxy-5'-(methacryloyloxymethyl)phenyl]-2H-benzotriazole,
2-[2'-hydroxy-5'-(methacryloyloxyethyl)phenyl]-2H-benzotriazole,
2-[2'-hydroxy-5'-(methacryloyloxypropyl)phenyl]-2H-benzotriazole,
2-[2'-hydroxy-5'-(methacryloyloxyhexyl)phenyl]-2H-benzotriazole,
2-[2'-hydroxy-3'-tert-butyl-5'-(methacryloyloxyethyl)phenyl]-2H-benzotriazole,
2-[2'-hydroxy-5'-tert-butyl-3'-(methacryloyloxyethyl)phenyl]-2H-benzotriazole,
2-[2'-hydroxy-5'-(methacryloyloxyethyl)phenyl]-5-chloro-2H-benzotriazole,
2-[2'-hydroxy-5'-(methacryloyloxyethyl)phenyl]-5-methoxy-2H-benzotriazole,
2-[2'-hydroxy-5'-(methacryloyloxyethyl)phenyl]-5-cyano-2H-benzotriazole,
2-[2'-hydroxy-5'-(methacryloyloxyethyl)phenyl]-5-tert-butyl-2H-benzotriazole, and
2-[2'-hydroxy-5'-(methacryloyloxyethyl)phenyl]-5-nitro-2H-benzotriazole.

Examples of the benzophenone type ultraviolet absorbing agent include

2,2',4,4'-tetrahydroxybenzophenone,
2,2'-dihydroxy-4,4'-dimethoxybenzophenone,
2,2'-dihydroxy-4-methoxybenzophenone,
2,4-dihydroxybenzophenone,
2-hydroxy-4-acetoxyethoxybenzophenone,
2-hydroxy-4-methoxybenzophenone,
2,2'-dihydroxy-4-methoxybenzophenone,
2,2'-dihydroxy-4,4'-dimethoxybenzophenone,
2-hydroxy-4-n-octoxybenzophenone, and
2,2'-dihydroxy-4,4'-dimethoxy-5,5'-disulfobenzophenone disodium salt.

Examples of the cyclic iminoester type ultraviolet absorbing agent include

2,2'-(1,4-phenylene)bis(4H-3,1-benzoxazine-4-one),
2-methyl-3,1-benzoxazine-4-one,
2-butyl-3,1-benzoxazine-4-one,
2-phenyl-3,1-benzoxazine-4-one, 2-(1- or
2-naphthyl)-3,1-benzoxazine-4-one,
2-(4-biphenyl)-3,1-benzoxazine-4-one,
2-p-nitrophenyl-3,1-benzoxazine-4-one,
2-m-nitrophenyl-3,1-benzoxazine-4-one,
2-p-benzoylphenyl-3,1-benzoxazine-4-one,
2-p-methoxyphenyl-3,1-benzoxazine-4-one,
2-o-methoxyphenyl-3,1-benzoxazine-4-one,
2-cyclohexyl-3,1-benzoxazine-4-one, 2-p-(or m-)phthalimidophenyl-3,1-benzoxazine-4-one,
2,2'-(1,4-phenylene)bis(4H-3,1-benzoxazinone-4-one)
2,2'-bis(3,1-benzoxazine-4-one),
2,2'-ethylenebis(3,1-benzoxazine-4-one),
2,2'-tetramethylenebis(3,1-benzoxazine-4-one),
2,2'-decamethylenebis(3,1-benzoxazine-4-one),
2,2'-p-phenylenebis(3,1-benzoxazine-4-one),
2,2'-m-phenylenebis(3,1-benzoxazine-4-one),
2,2'-(4,4'-diphenylene)bis(3,1-benzoxazine-4-one),
2,2'-(2,6- or 1,5-naphthalene)bis(3,1-benzoxazine-4-one),

2,2'-(2-methyl-p-phenylene)bis(3,1-benzoxazine-4-one),
2,2'-(2-nitro-p-phenylene)bis(3,1-benzoxazine-4-one),
2,2'-(2-chloro-p-phenylene)bis(3,1-benzoxazine-4-one),
2,2'-(1,4-cyclohexylene)bis(3,1-benzoxazine-4-one), 1,3,5-tri(3,1-benzoxazine-4-one-2-yl)benzene.

In addition, there can also be used as the cyclic iminoester type ultraviolet absorbing agent,

1,3,5-tri(3,1-benzoxazine-4-one-2-yl)naphthalene,
2,4,6-tri(3,1-benzoxazine-4-one-2-yl)naphthalene,
2,8-dimethyl-4H,6H-benzo(1,2-d;5,4-d')bis-(1,3)-oxazine-4,6-dione,
2,7-dimethyl-4H,9H-benzo(1,2-d;5,4-d')bis-(1,3)-oxazine-4,9-dione,
2,8-diphenyl-4H,8H-benzo(1,2-d;5,4-d')bis-(1,3)-oxazine-4,6-dione,
2,7-diphenyl-4H,9H-benzo((1,2-d;5,4-d')bis-(1,3)-oxazine-4,6-dione,
6,6'-bis(2-methyl-4H,3,1-benzoxazine-4-one),
6,6'-bis(2-ethyl-4H, 3,1-benzoxazine-4-one),
6,6'-bis(2-phenyl-4H,3,1-benzoxazine-4-one),
6,6'-methylenebis(2-methyl-4H,3,1-benzoxazine-4-one)
6,6'-methylenebis(2-phenyl-4H,3,1-benzoxazine-4-one),
6,6'-ethylenebis(2-methyl-4H,3,1-benzoxazine-4-one),
6,6'-ethylenebis(2-phenyl-4H,3,1-benzoxazine-4-one),
6,6'-butylenebis(2-methyl-4H,3,1-benzoxazine-4-one),
6,6'-butylenebis(2-phenyl-4H,3,1-benzoxazine-4-one),
6,6'-oxybis(2-methyl-4H,3,1-benzoxazine-4-one),
6,6'-oxybis(2-phenyl-4H,3,1-benzoxazine-4-one),
6,6'-sulfonylbis(2-methyl-4H,3,1-benzoxazine-4-one),
6,6'-sulfonylbis(2-phenyl-4H,3,1-benzoxazine-4-one),
6,6'-carbonylbis(2-methyl-4H,3,1-benzoxazine-4-one),
6,6'-carbonylbis(2-phenyl-4H,3,1-benzoxazine-4-one),
7,7'-methylenebis(2-methyl-4H,3,1-benzoxazine-4-one),
7,7'-methylenebis(2-phenyl-4H,3,1-benzoxazine-4-one), 7,7'-bis(2-methyl-4H,3,1-benzoxazine-4-one),
7,7'-ethylenebis(2-methyl-4H,3,1-benzoxazine-4-one),
7,7'-oxybis(2-methyl-4H,3,1-benzoxazine-4-one),
7,7'-sulfonylbis(2-methyl-4H,3,1-benzoxazine-4-one),
7,7'-carbonylbis(2-methyl-4H,3,1-benzoxazine-4-one),
6,7'-bis(2-methyl-4H,3,1-benzoxazine-4-one),
6,7-bis(2-phenyl-4H,3,1-benzoxazine-4-one),
6,7'-methylenebis(2-methyl-4-H,3,1-benzoxazine-4-one), and
6,7'-methylenebis(2-phenyl-4H,3,1-benzoxazine-4-one).

It is preferable for reducing step pollution at the formation of a substrate film that the ultraviolet absorbing agent has a thermal degradation initiating temperature of 290°C or higher. When a polyester containing a ultraviolet absorbing agent having a thermal degradation initiating temperature of lower than 290°C is melted, and extruded into a sheet on a rotating cooling roll, the degradation product of the ultraviolet absorbing agent is attached to the roll and then re-attached to the film, so that flaws may be formed on the film, which easily results in optical defects, which is not preferable.

An object of blending an ultraviolet absorbing agent in a substrate film is to improve light resistance, to the outside light, of the near-infrared ray absorption layer exhibiting the near-infrared ray absorbing ability which is a main function of the near-infrared ray absorption film of the present invention. That is, the object is to exhibit the action of suppressing the deterioration of a near-infrared ray absorbing dye contained in the near-infrared ray absorption layer due to ultraviolet-ray contained in the outside light.

Specifically, it is preferable that a layer containing an ultraviolet absorbing agent has a transmittance, for example, at a wavelength of 380 nm, of 10% or lower. It is more preferable that the transmittance at a wavelength of 390 nm is 10% or lower, and it is particularly preferable that the transmittance at a wavelength of 400 nm is 10% or lower. The amount of low-molecular type ultraviolet absorbing agent contained meeting such properties is preferably 0.1% to 4% by mass, more preferably 0.3% to 2% by mass, relative to the constituent resin of an ultraviolet absorption layer. When the amount of ultraviolet absorbing agent is too small, the ultraviolet absorbing ability becomes small and, when the amount is too large, a film may be yellowed in some cases, and the film forming property of a film may be lowered in some cases, both of which are not preferable.

In addition, it is also recommended to use a polymer type of an ultraviolet absorbing agent in that a problem

due to bleeding on the film surface is avoided. In addition, since bleeding out on a film is reduced, adherability with another layer to be formed thereon is enhanced. The polymer type ultraviolet absorbing agent means a polymer having a framework useful as an ultraviolet absorbing agent on a side chain. In view of compatibility with a polyester, polyester type ultraviolet absorbing agents and acryl type polymer ultraviolet absorbing agents are preferable. For example, a polyester type ultraviolet absorbing agent (Novapex U-110, available from Mitsubishi Chemical Co., Ltd.) in which a polyester has been synthesized from terephthalic acid as a dicarboxylic acid component and ethylene glycol and/or 1,4-butanediol as diol components, which are as main components, and, further, naphthalene tetracarboxylic acid diimide represented by the general formula (I) or naphthalene dicarboxylic acid represented by the general formula (II) as a copolymerizable component; and an acryl type polymer (UVA-1635, available from BASF) having a 2-(2-hydroxyphenyl) benzotriazole framework on a side chain are preferable in that properties such as transparency in addition to the objective ultraviolet absorbing property can be retained.

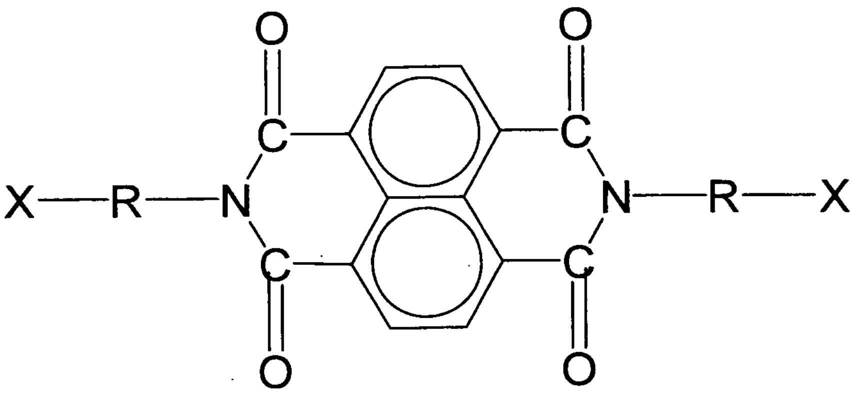

(I)

In the above general formula (I), R represents an organic residue (alkylene group or the like), and X represents a hydroxyl group.

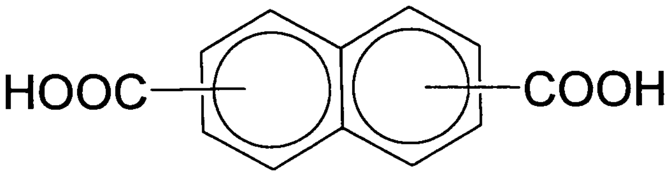

(II)

The amount of polymer type ultraviolet absorbing agent contained is preferably 0.1% to 20% by mass, further preferably 0.5% to 15% by mass, relative to the constituent resin of an ultraviolet absorption layer. When the amount of ultraviolet absorbing agent is too small, the ultraviolet absorbing ability is reduced and, when the amount is too large, a film may be yellowed in some cases, and the film forming property of a film may be reduced in some cases, both of which are not preferable.

In a substrate film, it is preferable to employ a laminated structure of at least three layers (three layers, four layers, five layers, or the like), and form an intermediate layer (a substrate intermediate layer) as a ultraviolet absorption layer without allowing substantially no ultraviolet absorbing agent to be contained in both surface layers thereof.

When an ultraviolet absorbing agent has been contained in a substrate film with a mono-layered structure, the ultraviolet absorbing agent is sublimated at the extrusion step in the film formation, and this adheres to the discharge port of a dye, the cooling roll used for cooling a polyester which has been melt extruded into a sheet, and the tenter used for stretching, and this then adheres to a melted polyester further extruded, resulting in a possible cause for optical defects in some cases. However, by employing the above-described substrate film with a laminated structure, an ultraviolet absorbing agent contained in an intermediate layer can remarkably be suppressed from bleeding out on the film surface in the preparation of a film. For this reason, the pollution of the discharge port of a dye, the cooling roll, the tenter, and the like is reduced, and the occurrence of defects in a film due to the pollution is suppressed. In addition, reduction in adherability between the respective layers due to bleeding out of an ultraviolet absorbing agent is also suppressed.

In the case where a polyester film forming a substrate film has a tri-layered structure, only a substrate intermediate layer contains an ultraviolet absorbing agent. In the case of four or more layers, it is enough that any one or more layers, except for both surface layers, contain an ultraviolet absorbing agent, and all layers, except for both surface

layers, may contain an ultraviolet absorbing agent. The "substantially" in the "without substantially no ultraviolet absorbing agent" in both surface layers is intended to exclude the case where an ultraviolet absorbing agent is unavoidably mixed such as the case where an ultraviolet absorbing agent bled out from a layer containing the agent is diffused into both surface layers. The most preferable substrate film has a tri-layered structure in which a substrate intermediate layer is an ultraviolet absorption layer.

The ratio of thicknesses of the laminated layers of a substrate film with a laminated structure is not limited, but may be freely selected. It is a preferable embodiment that each of the thicknesses of both surface layers is not smaller than 3%, more preferably not smaller than 5%, and not greater than 15%, more preferably not greater than 10%, of the total thickness. When any one of both surface layers has a too small thickness, the sublimation and bleeding out of an ultraviolet absorbing agent cannot sufficiently be prevented in some cases. In addition, when any one of them has a too large thickness, not only the effect of preventing the sublimation and bleeding out of an ultraviolet absorbing agent is saturated, but also an ultraviolet absorbing agent concentration (amount to be present per unit area) of a film when viewed as a plane is reduced, and the ultraviolet absorbing effect may become insufficient in some cases depending on the balance with respect to the amount of ultraviolet absorbing agent contained, which is not preferable.

It is desirable that the respective layers of a laminated substrate film are formed of polyesters, all of these polyesters may be the same kind or different kinds, only a part of the layers may be the same kind and, from the viewpoints of easiness of production management and recovery of scrap resins, it is a preferable embodiment that those polyesters are the same kind, and PET is used in all the layers.

In addition, the degree of uneven distribution of an ultraviolet absorbing agent in the film thickness direction which is exhibited by the multiple layers of a laminated substrate film can be evaluated using the surface IR analysis method. The details of the evaluation method will be described in the "Evaluation Method" of Examples, and it is preferable that the effect of multiple layers is controlled by a numerical value obtained by the present evaluation method. The degree of uneven distribution of an ultraviolet absorbing agent in the thickness direction of a film is greatly influenced by the ratio of thicknesses of both surface layers and other layer (substrate immediate layer) of a laminated substrate film and, even at the same thickness ratio, the degree of uneven distribution is changed, for example, also by a resin temperature at a melted resin transferring tube and at a flat die after the filter in the film formation. The degree of uneven distribution of an ultraviolet absorbing agent obtained by the above-described evaluation method is preferably 0.20 or lower, more preferably 0.10 or lower, particularly preferably 0.05 or lower.

The method of incorporating an ultraviolet absorbing agent into a polyester film is not limited, but it is preferable to incorporate the ultraviolet absorbing agent at the polymerization or melt extrusion of a polyester. At that time, it is a preferred embodiment that master batch pellets containing an ultraviolet absorbing agent are prepared in advance, and the ultraviolet absorbing agent is added in this way. For example, as a preferred embodiment, the following method is exemplified. First, a polyester is blended with an ultraviolet absorbing agent to prepare master batch pellets. These master batch pellets are pellets containing substantially no particles for the purpose of imparting easy slidability. These master batch pellets and virgin polyester pellets are mixed to obtain starting material pellets, which are sufficiently vacuum dried, supplied to an extruder, melt extruded into a film, and cooled to solidify on a casting roll to form an unstretched polyester film. For forming the respective layers, there can preferably be employed the co-extrusion method of extruding polyester pellets forming the respective layers through separate extruders, and introducing them into one die to obtain an unstretched film with a laminated structure.

At the time of the above-described extrusion, it is preferable that the resin temperature until the extruder melting part, the kneading part, the polymer tube, the gear pump, and the filter is 280°C to 290°C, and the resin temperature until the polymer tube thereafter and the flat dye is 270°C to 280°C, from the viewpoint of prevention of the sublimation of an ultraviolet absorbing agent at the die discharge port, and the pollution of the cooling roll.

In addition, it is desirable to carry out high precision filtration at arbitrary positions where the melted polyester is retained at about 280°C, in order to remove foreign matters contained in the polyester. When such foreign matters remain in a substrate film, they become a cause for optical defects when the substrate film is applied to a plasma display as a near-infrared ray absorption filter, and they also become a factor for the occurrence of flaws causing optical defects in the production of a near-infrared ray absorption filter.

The filtering material used in the high precision filtration of a melted polyester is not particularly limited, but the filtering material made of a stainless steel sintered body is suitable since it is excellent in the performance of removing aggregates containing Si, Ti, Sb, Ge, and Cu as main components, and high melting point organic substances. Further, the filtering particle size (initial filtering efficiency, 95%) of a filtering material is preferably 20 μm or smaller, more preferably 15 μm or smaller. When a filtering particle size (initial filtering efficiency, 95%) of a filtering material is greater than 20 μm, foreign matters having a size greater than 20 μm which become the cause for optical defects or the factor for the occurrence of flaws cannot sufficiently be removed. The high precision filtration of a melted resin using a filtering material having a filtering particle size (initial filtering efficiency, 95%) of 20 μm or smaller may reduce productivity in some cases, but this is recommended for obtaining a film having little projections due to coarse particles, and in which the occurrence of flaws is suppressed in the preparation of a near-infrared ray absorption filter.

When foreign matters present in the starting material polyester remain, or when an ultraviolet absorbing agent, which has been bled out from the melted polyester in the film formation and pollutes a die discharge port, adheres to a film, the orientation of polyester molecules is disturbed around the foreign matters and the ultraviolet absorbing agent (hereinafter referred to as the "foreign matters and the like") at the stretching step in the film formation, and optical disturbance is generated. Since this optical disturbance is recognized as a considerably greater defect than the actual size of the foreign matters and the like, quality may be remarkably deteriorated in some cases. For example, even foreign matters having a size of 20 μm are optically recognized as a size of 50 μm or greater, and may further be recognized as optical defects having a size of 100 μm or greater in some cases. In addition, there is a tendency that as transparency of a film is increased, optical defects due to fine foreign matters become clearer. There is also a tendency that as a film becomes thicker, the amount of the foreign matters and the like contained per unit area of a film when viewed as a plane becomes greater than that of a thin film, and this problem becomes further serious. Therefore, it is preferable to remove the foreign matters and the like in a polyester as much as possible, and it is recommended to employ the above-described various procedures.

The resulting unstretched film is stretched at 2.5- to 5.0-fold in the longitudinal direction thereof (lengthwise direction thereof: the running direction in the formation of a laminated film) with a roll heated at 80°C to 120°C to obtain a monoaxially oriented film. Subsequently, by grasping the ends of the film with clips, the film is introduced into a hot air zone heated at 120°C to 150 °C, stretched at 2.5- to 5.0-fold in the width direction thereof, heat treated at 200°C to 250°C and, if necessary, subjected to relaxation treatment by about 3% in the width direction thereof during this heat treatment step, to obtain a laminated substrate film.

The laminated polyester film obtained by the above-described method is preferably such that the number of flaws having a depth of 1 μm or greater and a length of 3 mm or greater present on the substrate is 100 flaws/$m^2$ or smaller. The number of flaws is more preferably 30 flaws/$m^2$ or smaller, particularly preferably 10 flaws/$m^2$ or smaller. When the above-described number of flaws is in such a range, a problem due to optical defects is not generated.

Examples of the procedure of preventing the occurrence of flaws on a film include: (a) no occurrence of "defects" being a cause for flaws on the film surface itself, on the roll surface, particularly, on the surface of a roll contacting with a film; and (b) no slippage of a film on the surface of a contacting roll both in the longitudinal direction thereof and in the traverse direction thereof. The above-described "defects" refer to all factors generating fine flaws on a film by contacting with the film, such as flaws formed on the roll surface, deposited substances, adhering substances, and foreign matters. Therefore, by removing these defects, the occurrence of flaws on the film surface can be reduced. In order to prevent the occurrence of the defects, for example, the following method can be employed.

Examples thereof include a method of setting the surface roughness expressed by Ra of a roll used in the film formation to be 0.1 μm or lower, and a method of disposing a roll cleaner on a roll at a pre-heating inlet roll and a cooling roll at the longitudinal stretching step for preventing the deposition of flaws-generating factors such as deposited substances, adhering substances, and foreign matters on the roll surfaces.

In addition, there is a method of setting the clean degree at the step of film formation to be class 1,000 or lower (not less than 1,000 particles of 0.5 μm or greater in the 1 cubic feet volume), and it is preferable to use clean air of class 100 or lower, particularly, at the periphery of a roll, and clean air of class 100 or lower also at a blast cooling apparatus for cooling the reverse roll surface at the casting step.

Further examples thereof include a method of cleaning a roll by the work of cutting off defects on the roll using an abrasive before the above-described film formation. Additional examples thereof include a method of disposing an apparatus for removing electricity so that the electrification amount of film becomes ± 1,500V or smaller at all the steps in order to avoid the adsorption of dusts onto the film due to the generation of static electricity, resulting in defects. The step of from casting of a biaxially oriented laminated polyester film to a tenter described later is a step where flaws may easily be generated mainly, and the compact layout of this section, resulting in a passage time of 5 minutes or shorter, can also contribute to the suppression of the occurrence of defects.

A roll can be made to have a structure in which defects on the roll surface cannot come in direct contact with a film, by forming a water film on the roll surface, or using an air floating type roll. Alternatively, the adhesion of defects to the roll surface can be suppressed by reducing to by decreasing the amount of oligomer precipitated from a film to 1000 ppm or lower, so that the defects on the roll surface can be reduced.

Further, defects cannot be brought in contact with a film in a film winding apparatus, by placing the surface of a film on the end sides in the width direction thereof with a roller with projections to form irregularities on that part and, at the same time, winding the film with the irregularities formed thereon into a roll with a winding mechanism at the winding step after stretching and, further, forming the projections on the roller with the projections into a tapered shape to make the tops of the projections round, and setting the curvature radius on the top surfaces at 0.4 mm or smaller.

In addition, it is also effective not to slip a film on the roll surface, as the flaw occurrence preventing method. For example, the following method can be employed. For example, the occurrence of long flaws can be suppressed by increasing the adhering force of a film to a roll by reducing the diameter of a roll, or using a suction roll, or using electrostatic adhesion or a part nip adhering apparatus. In particular, reduction in the diameter of a roll can also minimize the slippage

amount of film, and can contribute to the prevention of the occurrence of long flaws. In addition, since in most of flaws, their length and frequency are increased towards the end parts in the roll width direction, and it is difficult to obtain a part of no flaw at the end parts in the roll width direction, it becomes possible to obtain a film having little flaw by trimming a part near the center in the roll width direction having little flaw.

In addition, examples of the occurrence factors for longitudinal direction flaws or traverse direction flaws include deformation due to inflation or shrinkage of a film in the longitudinal direction thereof or in the traverse direction thereof, respectively. The deformation of a film is generated mainly by a change in the temperature of the film. Therefore, for example, by suppressing a change in the temperature of a film on the roll surface, the amount of such film deformation due to a temperature can be reduced, and the occurrence of longitudinal direction flaws or traverse direction flaws can be prevented. Specifically, it is recommended to set a change in the temperature of a film per roll at 40°C or smaller, preferably 30°C or smaller, further preferably 20°C or smaller, further more preferably 10°C or smaller, particularly preferably 5°C or smaller. Examples of the method of suppressing a change in the temperature of a film on the roll surface include air cooling between rolls and water cooling by passing the film through a water bath. Further, by increasing the number of rolls, a change in the temperature of a film on the roll surface per roll can be reduced. Preferably, the number of rolls at the longitudinal stretching step is 10 rolls or more.

In addition, by setting a relationship between the relative rates of a plurality of rolls at a rate profile closest to the amount of deformation due to the temperature or tension of a film, the slippage of a film in the longitudinal direction thereof can be reduced. Further, by setting drying condition so that drying is completed at the initial stage of a drier section and a film is cooled towards an outlet at the step of applying a coating solution to form an adhesion modifying layer described later, the film temperature at a dryer outlet can be set to be 40°C or lower, so that the slippage of a film due to a temperature change can be reduced.

In addition, since when a tension at the film running is too low, a grasping force is reduced to generate slippage and, when a tension is too high, stress deformation becomes great to generate slippage, it is preferable to control a tension with a driving roll rate and a tension adjusting means so that it is in an optimal tension range of 4.9 to 29.4 MPa. Alternatively, by setting a friction coefficient between the film and the roll at the use temperature in the preparation to be 0.2 or greater, the slippage of a film on the roll surface can be suppressed.

Further, it is preferable to employ special bearings regarding a free roll to realize a rotation resistance of 19.6 N or smaller. Regarding a driving roll, it is preferable to control a lack of uniformity of rotation at 0.01% or smaller.

The successive biaxially stretching method has been explained above. The stretching procedure may be the simultaneous biaxially stretching method. Alternatively, it may be the multiple-stage stretching method.

[Near-infrared ray absorption layer]

The near-infrared ray absorption layer in the film of the present invention is formed of a composition containing, as main components, a near-infrared ray absorbing dye having a maximum absorption at a wavelength of 800 to 1,200 nm and a resin. In the near-infrared ray absorption layer, the sum of the near-infrared ray absorbing dye and the resin is preferably 80% by mass or greater, more preferably 85% by mass or greater, further preferably 90% by mass or greater.

The near-infrared ray absorbing dye which can be used in the film of the present invention is not particularly limited, so far as it is a dye having a maximum absorption in the near-infrared ray region (wavelength of 800 to 1,200 nm). However, the near-infrared ray absorption film of the present invention is suitable for use in displays, particularly, in plasma displays, a great absorption in the near-infrared ray region is required and, at the same time, a high transmittance in the visible light region is preferable and, from such a viewpoint, it is recommended to select a dye having a high transmittance in the visible light region. Specifically, it is preferable to use a diimmonium salt type compound represented by the following general formula (III) and at least one or more kinds of other near-infrared ray absorbing dyes in combination.

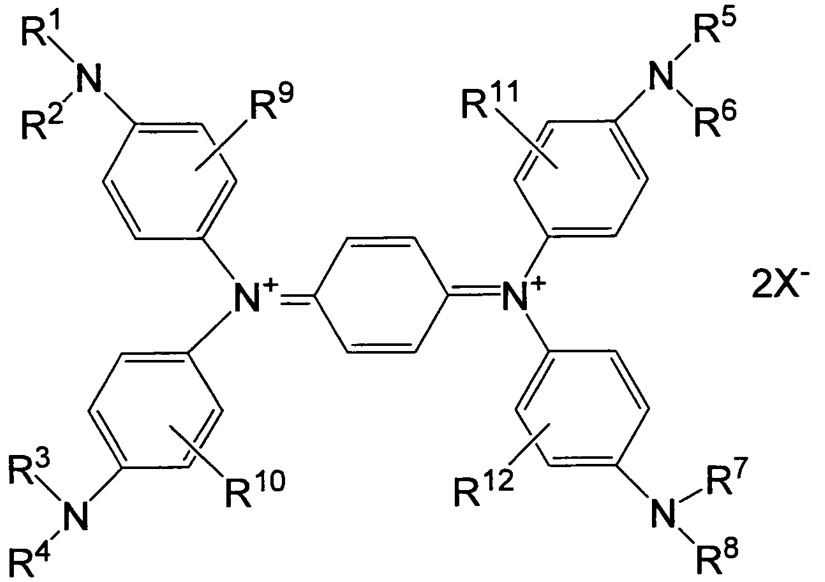

(III)

wherein $R^1$ to $R^8$ are independently the same or different, each of which represents a hydrogen atom, an alkyl group, an aryl group, an alkenyl group, an aralkyl group, or an alkynyl group; $R^9$ to $R^{12}$ are independently the same or different, each of which represents a hydrogen atom, a halogen atom, an amino group, a cyano group, a nitro group, a carboxyl group, an alkyl group, or an alkoxy group; $R^1$ to $R^{12}$ which can be bound to a substituent (s) may have a substituent (s); and $X^-$ represents an anion.

When each of $R^1$ to $R^8$ in the above general formula (III) is (a) an alkyl group, (b) an aryl group, (c) an alkenyl group, or (d) an aralkyl group, the following groups can be exemplified, respectively.

(a) an alkyl group: a methyl group, an ethyl group, an n-propyl group, an iso-propyl group, an n-butyl group, an iso-butyl group, a t-butyl group, an n-amyl group, an n-hexyl group, an n-octyl group, a 2-hydroxyethyl group, a 2-cyanoethyl group, a 3-hydroxypropyl group, a 3-cyanopropyl group, a methoxyethyl group, an ethoxyethyl group, a butoxyethyl group, and the like.
(b) an aryl group: a phenyl group, a fluorophenyl group, a chlorophenyl group, a tolyl group, a diethylaminophenyl group, a naphthyl group, and the like.
(c) an alkenyl group: a vinyl group, a propenyl group, a butenyl group, a pentenyl group, and the like.
(d) an aralkyl group: a benzyl group, a p-fluorobenzyl group, a p-chlorophenyl group, a phenylpropyl group, a naphthylethyl group, and the like.
In addition, as (e) a halogen atom, (f) an amino group, (g) an alkyl group, or (h) an alkoxy group as each of $R^9$ to $R^{12}$ in the above general formula (III), the following groups can be exemplified, respectively.
(e) a halogen atom: fluorine, chlorine, bromine, and the like.
(f) an amino group: a diethylamino group, a dimethylamino group, and the like.
(g) an alkyl group: a methyl group, an ethyl group, a propyl group, a trifluoromethyl group, and the like.
(h) an alkoxyl group: a methoxy group, an ethoxy group, a propoxy group, and the like.

In addition, examples of $X^-$ in the above general formula (III) include anions such as a fluorine ion, a chlorine ion, a bromine ion, an iodine ion, a perchlorate ion, a hexafluoroantimonate ion, a hexafluorophosphate ion, a tetrafluoroborate ion, and a bis(trifluoromethanesulfonyl)imidate ion.
As the diimmonium salt type compound represented by the above general formula (III), commercially available products can be used. For example, Kayasorb IRG-022, IRG-023, and IRG-024 (all available from Nippon Kayaku Co., Ltd.); and CIR-1080, CIR-1081, CIR-1083, and CIR-1085 (all available from Japan Carlit Co., Ltd.) are preferable.
The above-described diimmonium salt type compound has the characteristic that absorption in the near-infrared ray region is great, a wavelength region which can be absorbed is wide, and a transmittance in the visible light region is high. However, the diimmonium salt type compound also has the properties that it may easily be denatured at a high temperature under a high humidity, absorption in the near-infrared ray region is small, a transmittance in a part of the

visible light region is reduced, and a color tone may easily be changed. However, by using an adhesion modifying layer described later, which is formed from a coating solution containing an adhesion modifying resin having an acid value of 200 eq. /t or greater, the denaturation of a diimmonium salt type compound can be suppressed, even when a film is allowed to stand for a long time under a high temperature and a high humidity.

In order to increase absorption in the near-infrared ray region, it is preferable that at least two kinds of near-infrared ray absorbing dyes are contained in the near-infrared ray absorption layer. At that time, it is preferable to use the above-described diimmonium salt type compound and a dye other than this compound in combination. This is because a wider absorption wavelength region can be secured.

Examples of other near-infrared ray absorbing dye which can be used in combination with the above-described diimmonium salt type compound include phthalocyanine type compounds, dithiol metal complex type compounds, cyanine type compounds, naphthalocyanine type compounds, squarylium salt type compounds, pyrylium salt type compounds, thioperylium type compounds, croconium type compounds, and indoaniline chelate type dyes, indonaphthol chelate type dyes, azo type dyes, azo chelate type dyes, aluminum salt type dyes, quinone type dyes, anthraquinone type dyes, polymethine type dyes, and triphenylmethane type dyes.

For example, as the above-described phthalocyanine type compound, commercially available products can be used. Specifically, preferable examples include Excolor IR-1, IR-2, IR-3, IR-4, IR-10, IR-10A, IR-12, IR-14, TXEX-805K, TXEX-809K, TXEX-810K, TXEX-811K, TXEX-812K, TXEX-813K, and TXEX-814K (all available from by Nippon Shokubai Co., Ltd.); and MIR-369 and MIR-389 (both available from Mitsui Chemicals, Inc.).

As the above-described dithiol metal complex compound, for example, compounds represented by the following general formula (IV) are preferable.

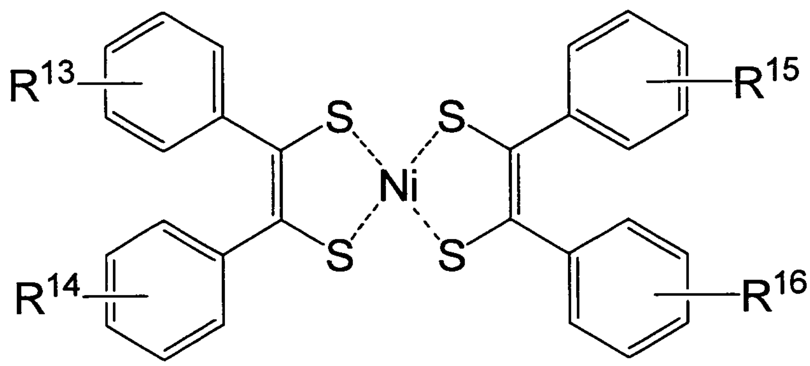

(IV)

wherein $R^{13}$ to $R^{16}$ are independently the same or different, each of which represents a hydrogen atom, a halogen atom, an alkyl group, an alkoxyl group, an aryl group, an aralkyl group, or an amino group; and M represents nickel, copper, cobalt, palladium, or platinum.

Examples of $R^{13}$ to $R^{16}$ in the above general formula (IV) include halogen atoms such as fluorine, chlorine and bromine; alkyl groups such as a methyl group, an ethyl group, an n-propyl group, an iso-propyl group, an n-butyl group, an iso-butyl group, a t-butyl group, an n-amyl group, an n-hexyl group, an n-octyl group, a 2-hydroxyethyl group, a 2-cyanoethyl group, a 3-hydroxypropyl group, a 3-cyanopropyl group, a methoxyethyl group, an ethoxyethyl group, and a butoxyethyl group; alkoxy groups such as a methoxy group, an ethoxy group, a propoxy group, and a butoxy group; aryl groups such as a phenyl group, a fluorophenyl group, a chlorophenyl group, a tolyl group, a diethylaminophenyl group, and a naphthyl group; aralkyl groups such as a benzyl group, a p-fluorobenzyl group, a p-chlorophenyl group, a phenylpropyl group, and a naphthylethyl group; and amino groups such as dimethylamino group, a diethylamino group, a dipropylamino group, and a dibutylamino group.

As the dithiol metal complex compound of the above general formula (IV), for example, commercially available products such as SIR-128, SIR-130, SIR-132, and SIR-159, available from by Mitsui Chemicals, Inc., can also suitably be used.

In addition, as the cyanine type compound, there are preferable, TZ-103, TZ-104, TZ-105, TZ-109, TZ-111, and TZ-114 available from by Asahi Denka Co. , Ltd.; CY-9, CY-10, CY-20, and CY-30 available from Nippon Kayaku Co., Ltd.; and IR-301 available from Yamada Chemical Co., Ltd.

In addition, when the near-infrared ray absorption film of the present invention is used in a front side filter for

plasma displays, in order to improve color balance, it is also possible that a color correcting dye which absorbs neon light emitted from the plasma display is contained in the near-infrared ray absorption layer. Specifically, it is preferable that a color correcting dye having a maximum absorption in the wavelength range of 550 to 620 nm is contained at a particular amount in the near-infrared ray absorption layer so that a light transmittance in the wavelength region of 550 nm to 600 nm becomes 10% to 60%, and a light transmittance in the wavelength region of 820 nm to 1,100 nm becomes 20% or lower.

As the color correcting dye which can be used is not particularly limited, but the selection of a dye having a half width of absorption of not greater than 60 nm is preferable. A further preferable half width of absorption is not greater than 50 nm. In addition, a dye having no or little interaction with the above-described near-infrared ray absorbing dye is preferable. Examples of the particularly preferable color correcting dye include compounds of the cyanine type, the polymethine type, the squarylium salt type, the phthalocyanine type, the naphthalocyanine type, the quinone type, the azaporphyrin type, the azo type, the azo chelate type, the azulenium type, the pyrylium type, the croconium type, the indoaniline chelate type, the indonaphthol chelate type, the azo chelate type, the dithiol metal complex type, the pyromethene type, the azomethine type, the xanthene type, and the oxonol type. In these color correcting dyes, there are the same kinds as those of the above-described near-infrared ray absorbing dyes and, by selecting the kind of a substituent to be introduced, and using a dye with an adjusted chain length in, for example, a cyanine type dye, a maximum absorption can be imparted to the wavelength of 550 to 620 nm.

It is preferable that a near-infrared ray absorption layer is in the state where the above-described near-infrared ray absorbing dye is dispersed in a resin. In addition, the amount of diimmonium salt type compound contained, relative to the resin, is preferably 7% by mass or smaller, more preferably 5% by mass or smaller, and further preferably 4% by mass or smaller. In addition, the lower limit of the amount of diimmonium salt type compound contained, relative to the resin, is preferably 0.5% by mass, more preferably 1% by mass, and further preferably 1.5% by mass.

When the amount of diimmonium salt type compound contained, relative to the resin, is greater than the above-mentioned range, the concentration of a near-infrared ray absorbing dye in the resin is increased, and a distance between the dyes becomes shorter. For this reason, interaction between the near-infrared ray absorbing dyes, particularly, between the diimmonium salt type compound and other dyes may easily be generated. When such a near-infrared ray absorption film is allowed to stand at a high temperature under a high humidity, the dyes are denatured by the above-described interaction, and a change in spectroscopic properties and color tone may easily be generated. The amount of dye contained, other than the diimmonium salt type compound, is preferably 0.01% to 10% by mass, more preferably 0.05% to 8% by mass, relative to the resin.

In the formation of a near-infrared ray absorption layer in the state where a near-infrared ray absorbing dye is dispersed in a resin, for example, it is preferable to employ a method of preparing a coating solution in which a near-infrared ray absorbing dye and a resin are dissolved or dispersed in a solvent, and applying the coating solution on a substrate film directly or with any other layer being interposed therebetween, followed by drying.

The resin used in a near-infrared ray absorption layer having a higher glass transition temperature (Tg) is preferable. Specifically, it is preferable that Tg is in the range of 80°C to 250°C (more preferably 100°C to 160°C). When a resin having Tg of lower than 80°C is used, since a near-infrared ray absorbing dye may easily move at a high temperature under a high humidity, interaction between the dyes may easily be generated, and there is a tendency that the denaturation of the dyes becomes remarkable. Therefore, there is a tendency that a change in the spectroscopic properties and color tone of a film may easily be generated.

In addition, for example, in the case where a near-infrared ray absorption layer is formed using the above-described coating solution, when a resin having Tg higher than 250°C is used, there is a tendency that, in the formation of a near-infrared ray absorption layer by applying and drying, the efficacy of evaporation of a solvent is worse, and the amount of solvent remaining in the layer is increased. As a result, the heat resistance and moisture resistance of a near-infrared ray absorption layer may be reduced in some cases.

As the resin for a near-infrared ray absorption layer, a resin having Tg in the above-described range may be selected from, for example, synthetic polymer resins such as polyester type resins, acryl type resins, polyamide type resins, polyurethane type resins, polyolefin type resins, polycarbonate type resins, and polystyrene type resins; and natural polymer resins such as gelatin and cellulose derivatives. Alternatively, there may also be used copolymerized polyesters having a fluorene ring (e.g., "O-PET" available from Kanebo, Ltd.), non-polar cycloolefin polymers (e.g., "ZEONEX" available from Nippon Zeon Co. , Ltd.), resin with a norbornene framework having polar groups on side chains (e.g., "ARTON" available from by JSR Corporation), and alicyclic acryl resins (e.g., "Optolets" available from Hitachi Chemical Co., Ltd.) .

Alternatively, for the purpose of improving light resistance of a film, the ultraviolet absorbing agent may also be contained in the near-infrared ray absorption layer. In this case, there can be employed, for example, a method of adding an ultraviolet absorbing agent to the above-mentioned coating solution for forming a near-infrared ray absorption layer.

In the present invention, it is important that a surfactant having an HLB of 2 to 12 is further contained at an

amount of 0.01% to 2.0 % by mass in the near-infrared ray absorption layer. Therefore, for example, when a near-infrared ray absorption layer is formed using the above-described coating solution for forming a near-infrared ray absorption layer, it is preferable that a surfactant having an HLB of 2 to 12 is further contained in this coating solution at 0.01% to 2.0 % by mass, relative to the solid content of the coating solution.

In the present invention, even when a surfactant is not blended, heat resistance and moisture resistance of a near-infrared ray absorption layer are sufficiently exhibited, but by adding a surfactant, the dispersibility of a near-infrared ray absorbing dye in a resin is improved, the coated film appearance of the near-infrared ray absorption layer is improved, and particularly, pits due to fine bubbles, recesses due to the adhesion of foreign matters, and repulsion at the drying step are prevented. Further, according to the localization of a surfactant by bleeding out on the surface due to heating at applying and drying, when a surfactant having a low HLB is added, not only durability is improved, but also slidability is imparted to the surface of a near-infrared ray absorption layer. For this reason, there is the advantage that, even when surface irregularities are not formed on a near-infrared ray absorption layer or on the opposite side thereof, handling property becomes better, and winding up into a roll becomes easy.

As the above-described surfactant, the well-known cationic, anionic, and nonionic surfactants can suitably be used and, from the viewpoint of a problem such as deterioration of a near-infrared ray absorbing dye, nonionic surfactants having no polar group are preferable and, particularly, silicone type or fluorine type surfactants excellent in surface active ability are preferable.

Examples of the silicone type surfactant include dimethylsilicone, aminosilane, acrylsilane, vinylbenzylsilane, vinylbenzylaminosilane, glycidosilane, mercaptosilane, dimethylsilane, polydimethylsiloxane, polyalkoxysiloxanes, hydrogen-modifiedsiloxanes, vinyl-modified siloxanes, hydroxy-modified siloxanes, amino-modified siloxanes, carboxyl-modified siloxanes, halogenated modified siloxanes, epoxy-modified siloxanes, methacryloxy-modified siloxanes, mercapto-modified siloxanes, fluorine-modified siloxanes, alkyl group-modified siloxanes, phenyl-modified siloxanes, and alkylene oxide-modified siloxanes.

Examples of the fluorine type surfactant include tetrafluoroethylene, perfluoroalkylammonium salts, perfluoroalkylsulfonic acid amides, sodium perfluoroalkylsulfonates, perfluoroalkyl potassium salts, perfluoroalkylcarboxylic acid salts, perfluoroalkylsulfonic acid salts, perfluoroalkylethylene oxide adducts, perfluoroalkyltrimethylammonium salts, perfluoroalkylaminosulfonic acid salts, perfluoroalkylphosphoric acid esters, perfluoroalkylalkyl compounds, perfluoroalkylalkylbetaine, and perfluoroalkyl halides.

It is important that a surfactant is contained in the near-infrared ray absorption layer at an amount of not smaller than 0.01% by mass and not greater than 2.0% by mass. When the amount of surfactant contained is small, coated film appearance and slidability may become insufficient in some cases. On the other hand, when the amount of surfactant contained is great, the near-infrared ray absorption layer adsorbs moisture, so that the deterioration of a dye may be promoted in some cases. When an adhesion modifying layer described later is used, since it serves to suppress the deterioration of a dye, there is the advantage that the appropriate range of the amount of surfactant contained is widened.

In the present invention, the HLB of a surfactant is 2 to 12, and the lower limit value of HLB is preferably 3, particularly preferably 4. On the other hand, the upper limit value of HLB is preferably 11, particularly preferably 10.

When the HLB is low, the surface becomes water-repulsive, so that the deterioration of a dye can be suppressed by moist heat resistance, and slidability can easily be imparted. However, when the HLB is too low, leveling property becomes insufficient due to a lack of surface active ability.

In contrast, when the HLB is high, not only slidability becomes insufficient, but also the near-infrared ray absorption layer can easily absorb moisture, so that the stability of a dye with time becomes worse.

By the way, the "HLB" is a value named "Hydrophil Lyophile Balance" by W.C. Griffin of Atlas Powder Company, which is obtained by making an index of the balance between hydrophilic groups and lipophilic groups contained in the molecule of a surfactant as a characteristic value, and its lower value means higher lipophilicity and, in contrast, its higher value means higher hydrophilicity.

The localization of a surfactant on the surface of a near-infrared ray absorption layer may vary depending on the kind of resin and a solvent, and it most frequently occurs in the case where the value of HLB is around 7, and the localization can easily occur when initial drying is milder. The degree of the localization of a surfactant on the surface of a near-infrared ray absorption layer can be identified by comparing the amount of surfactant contained in the near-infrared ray absorption layer with the amount of surfactant on the surface of the near-infrared ray absorption layer. For example, in the case of a silicone type surfactant, the amount of Si element on the surface of a near-infrared ray absorption layer can be determined by the ESCA analysis.

When a near-infrared ray absorption layer is formed by a coating solution, a solvent which can be used in the coating solution is not particularly limited, so far as it can uniformly dissolve or disperse the above-described respective dyes and the above-described resin. Examples thereof include ketones such as acetone, methyl ethyl ketone, methyl isobutyl ketone, cyclopentanone, and cyclohexanone; esters such as ethyl acetate and propyl acetate; alcohols such as methanol, ethanol, butanol, and isopropanol; cellosolves such as ethylcellosolve and butylcellosolve; aromatic hydrocarbons such as benzene, toluene, and xylene; furans such as tetrahydrofuran; diemthoxyethane; aliphatic hydrocarbons such as n-hexane and n-heptane; halogen atom-containing hydrocarbons such as methylene chloride and chloroform; amides such as N,N-dimethylformamide; and water. It is preferable that the above-described halogen atom-containing hydrocarbons are not used as much as possible from the viewpoints of environment and health.

In the above-described organic solvents, ketones, excellent in the solubility of a dye are suitable, and it is preferable that the amount of ketone, relative to the amount of all organic solvents contained in a coating solution, is not smaller than 30% by mass and not greater than 80 % by mass. The organic solvents other than ketones may be selected in view of leveling property and drying property of a coating solution.

The boiling point of an organic solvent is preferably not lower than 60°C and not higher than 180°C. When the boiling point of an organic solvent is too low, the solid content concentration in a coating solution can easily be changed during application, and there arises a problem that it may be difficult to stabilize the coating thickness in some cases. In contrast, when the boiling point of an organic solvent is too high, the amount of a solvent remaining in the near-infrared ray absorption layer can easily be increased, and therefore, there is a tendency that the stability of a dye with time may be deteriorated.

As the method of dissolving or dispersing a near-infrared ray absorbing dye, a resin, and a surfactant in an organic solvent, there can be employed stirring, dispersing, grinding, and other methods, under warming. The warming at dissolution can enhance the solubility of a dye and a resin and can prevent the deterioration of appearance due to undissolved matters. In addition, by dispersing or grinding a resin and a dye in an organic solvent to disperse them in a coating solution in the state of fine particles having an average particle diameter of 0.3 μm or smaller, it becomes possible to form a near-infrared ray absorption layer having excellent transparency. As the dispersing machine or the grinder, the well-known ones can be used. Specific examples thereof include ball mills, sand mills, attritors, roll mills, agitators, colloid mills, ultrasound homogenizers, homomixers, pearl mills, wet jet mills, paint shakers, butterfly mixers, planetary mixers, and Henschel mixers.

The concentration of the above-described coating solution for forming a near-infrared ray absorption layer is such that the concentration of solid contents including a dye, a resin, a surfactant, and other additives which are added, i.f necessary, is preferably 5.0% to 50% by mass, more preferably 10% to 40% by mass, and further preferably 12% to 25% by mass. When the solid content concentration in a coating solution is too low, the amount of organic solvent in the coating solution becomes large, and therefore, there is a tendency that not only drying in the formation of a near-infrared ray absorption layer takes a longer time, and productivity is deteriorated, but also the amount of solvent remaining in the near-infrared ray absorption layer is increased, and the stability of a dye with time is deteriorated and, particularly, there is a tendency that when stored for a long time at a high temperature under a high humidity (e.g., 60°C, relative humidity 95 %, 500 hours), a change in the transmittance and color tone of a film becomes great. On the other hand, when the solid content concentration in a coating solution is too high, the viscosity of the coating solution is increased, leveling property is deficient, and the appearance of a near-infrared ray absorption layer may be deteriorated in some cases. The viscosity of a coating solution is preferably 10 to 300 cps.

In the application of a coating solution for forming a near-infrared ray absorption layer, the well-known coating method can be employed. The details thereof will be described later.

The application amount of a coating solution is preferably 1.0 to 15.0 g/m$^2$, more preferably 2.0 to 12.0 g/m$^2$, in terms of a dry mass (i.e., a mass after the formation of a near-infrared ray absorption layer). When the application amount is smaller than the above-described range, where one tries to obtain a necessary amount of absorption in the near-infrared ray region, the ratio of a dye to a resin is increased, so that heat resistance and moist resistance may consequently be reduced in some cases. On the other hand, the application amount is greater than the above-described range, drying can easily becomes insufficient, the amount of remaining solvent is increased, and heat resistance and moist resistance can easily be reduced (the details thereof will be described later). In addition, when the application amount is great, defects of coated film appearance, such as a lack of application uniformity, can easily be generated.

In addition, when a near-infrared ray absorption layer is formed of the above-described coating solution, it is desirable to select drying condition so that the amount of solvent remaining in the near-infrared ray absorption layer becomes 5% by mass or smaller, more preferably 3% by mass or smaller.

In general, when application is carried out, it is necessary to carry out drying so as not to cause blocking and, in this case, the concentration of remaining solvent is approximately in the range of greater than 5% by mass and not greater than 7% by mass. That is, when the amount of solvent remaining in a near-infrared ray absorption layer is greater than 5% by mass and not greater than 7% by mass, the near-infrared ray absorption layer is apparently dried, and blocking is not caused.

However, when a film having such a near-infrared ray absorption layer is allowed to stand for a long time at a high temperature under a high humidity, the apparent Tg of a resin is reduced by the influence of a remaining solvent, the interactions between the resin and the near-infrared ray absorbing dye, between the dyes, and between the remaining solvent and the dye can easily be generated, and the dye can easily be denatured. As a result, the spectroscopic property and color tone of a film can easily be changed.

In addition, it is desirable that the lower limit value of the amount of solvent remaining in a near-infrared ray

absorption layer is 0.01% by mass. When the amount of solvent remaining in a near-infrared ray absorption layer is smaller than 0.01% by mass, it becomes possible to highly suppress the denaturation of a near-infrared ray absorbing dye when a film is allowed to stand for a long time at a high temperature under a high humidity. On the other hand, by heat treatment necessary for reducing the amount of remaining solvent, the near-infrared ray absorbing dye may be denatured in some cases.

In order to reduce the amount of remaining solvent while the denaturation of a near-infrared ray absorbing dye is suppressed, it is recommended to carry out a multiple-stage (two or more stage) hot air drying step. The details of a drying step will be described later.

[Intermediate layer]

The near-infrared ray absorption film of the present invention has a structure in which a near-infrared ray absorption layer is formed on a transparent substrate film. It is preferable to provide an intermediate layer for the purpose of improving the adhesion between the transparent substrate and the near-infrared ray absorption layer, and improving the transparency of the transparent substrate. In addition, when particles are not contained in the transparent substrate film, high transparency can be obtained while handling property is maintained, by simultaneously providing an intermediate layer containing particles in the preparation of a film.

Examples of the resin forming the above-described intermediate layer include polyester type resins, polyurethane resins, polyester urethane resins, acryl type resins, and melamine resins. It is important to select a resin so that the adhesion between the substrate and the near-infrared ray absorption layer. Specifically, when resins forming the substrate and the near-infrared ray absorption layer are of the ester type, it is preferable to select the resins of the polyester type and of the polyester urethane type, both having similar structures.

The above-described intermediate layer may contain a crosslinking agent to form a cross-linked structure for the purpose of improving adhesion and water resistance. Examples of the crosslinking agent include those of the urea type, the epoxy type, the melamine type, and the isocyanate type. In particular, when whitening, or reduction in the strength, of a resin is caused at a high temperature under a high humidity, the effect due to a crosslinking agent is remarkable. Alternatively, as a resin, graft copolymerized resins having self crosslinking property may be used without using a crosslinking agent.

The intermediate layer may be allowed to contain various particles for the purpose of improving slidability by forming irregularities on the surface thereof. Examples of the particles to be contained in the intermediate layer include inorganic particles such as silica, kaolinite, talc, calcium carbonate, zeolite, and alumina; and organic particles such as acryl, PMMA, nylon, styrene, polyester, and benzoguanamine-formalin condensate. From the viewpoint of transparency, it is preferable to select particles having a refractive index similar to that of a resin to be used.

Further, the intermediate layer may be allowed to contain surfactants, antistatic agents, fluorescent dyes, fluorescent brighteners, dyes, ultraviolet absorbing agents, and the like.

The intermediate layer may be a monolayer, or if necessary, two or more layers may be laminated.

The thickness of this intermediate layer is not particularly limited, so far as the intermediate layer has the objective function, and the thickness is preferably not smaller than 0.01 μm and not greater than 5 μm. When the thickness is small, it becomes difficult for an intermediate layer to exhibit the function and, in contrast, when the thickness is great, transparency can easily be deteriorated.

As the method of providing an intermediate layer, application methods are preferable. As the application method, an intermediate layer can be provided by the in-line coating system for providing a coated layer at the step of forming a film, or by the off-line coating system for providing a coated layer after the film formation, using any of the well-known application methods such as gravure coating systems, kiss coating systems, dipping systems, spray coating systems, curtain coating systems, air knife coating systems, blade coating systems, and reverse roll coating systems. In these systems, in-line coating systems are preferable because they are excellent from the viewpoint of cost and it become unnecessary to allow particles to be contained in a transparent substrate by allowing particles to be contained in a coated layer, so that transparency can highly be improved.

[First adhesion modifying layer]

It is preferable to provide a specific first adhesion modifying layer, in place of the above-described intermediate layer, between the near-infrared ray absorption layer and the transparent substrate film. As this first adhesion modifying layer, an adhesion modifying layer containing, as a main component, an adhesion modifying resin having an acid value of 200 eq./t or higher (hereinafter referred to as the "first adhesion modifying resin") can preferably be utilized. The "main component" means that 80% by mass or greater of a layer is the first adhesion modifying resin. Examples of the component other than resins include inert particles and various additives described later.

As a result of the study by the present inventors, it was found that a close relationship is present between the

stability of a near-infrared ray absorbing dye contained in a near-infrared ray absorption layer, and the acid value of a first adhesion modifying resin for forming a first adhesion modifying layer. That is, when a first adhesion modifying layer is formed using a first adhesion modifying resin having an acid value of 200 eq./t or higher, the denaturation of a near-infrared ray absorbing dye in a near-infrared ray absorption layer is suppressed, and a change in the spectroscopic properties and color tone of a film is suppressed.

Although the reason for the above is not clear, since when a first adhesion modifying resin having a great acid value is used, a crosslinking density of a first adhesion modifying layer can be enhanced (as described later), the mixing of the components of the first adhesion modifying layer with the components of the near-infrared ray absorption layer can be suppressed except only the vicinity of an interface between these layers. As a result, the stability of a near-infrared ray absorbing dye is improved. Since when the components of the first adhesion modifying layer and the components of the near-infrared ray absorption layer are mixed more than necessary, the components of the first adhesion modifying layer make a near-infrared ray absorbing dye denatured, the stability of the near-infrared ray absorbing dye is reduced. In particular, at a high temperature under a high humidity, since such an influence becomes great, the stability of the near-infrared ray absorbing dye is further reduced. In the first adhesion modifying layer according to the present invention, it is thought that since the above-described phenomenon can be suppressed, an improvement in the stability of the near-infrared ray absorbing dye is achieved.

Therefore, where the acid value of the above-described first adhesion modifying resin is lower than 200 eq./t, when a film is allowed to stand for a long time at a high temperature under a high humidity, the stability of a near-infrared ray absorbing dye in a near-infrared ray absorption layer is reduced, and the spectroscopic properties and color tone of the film are changed. In addition, the first adhesion modifying layer plays a role as an adhesive layer between the substrate film and the near-infrared ray absorption layer but, when the acid value of a first adhesion modifying resin is lower than 200 eq./t, the adhesion between the substrate film and the near-infrared ray absorption layer becomes insufficient. The more preferable acid value of a first adhesion modifying resin is 500 eq. /t or higher, further preferably 900 eq./t or higher. In addition, it is desirable that the acid value of a first adhesion modifying resin is 10,000 eq./t or lower.

The acid value of a first adhesion modifying resin is a value obtained by drying the first adhesion modifying resin under heating and reduced pressure, dissolving the resin in a suitable solvent, titrating this solution with an alkali solution in the presence of an indicator, and calculating this as equivalent per $10^6$ g (1 t) of a resin (eq./t). As the indicator for determination, phenolphthalein or the like can be used.

The above-described first adhesion modifying resin can be obtained by introducing a unit containing an acid group such as a carboxyl group into a resin such as a polyester type resin, an acryl type resin, a polyamide type resin, a polyurethane type resin, and a polystyrene type resin, and controlling the composition ratio of the acid group in the resin. In particular, a polyester type graft copolymer in which an acid anhydride having at least one double bond is grafted to a polyester type resin is suitably used.

The above-described polyester type graft copolymer includes from the mode in which all polyester type resin molecules are graft copolymerized with acid anhydrides, to the mode of a mixture of a graft copolymerized molecule in which a polyester type resin is grafted with the acid anhydride, and an unreacted polyester type resin molecule in which the acid anhydride is not grafted.

The above-described polyester type graft copolymer is such that a unit derived from the above-described acid anhydride is introduced into a polyester type resin, and crosslinking can be formed between the resin molecules by the action of the unit. That is, for example, when a coating solution containing the above-described polyester type graft copolymer as a main component is prepared, an acid anhydride group in a resin is changed into a carboxyl group in the composition due to hydrolysis. Thereafter, a coating solution is applied to a substrate film, followed by drying, so that an acid anhydride group is formed between the first adhesion modifying resin molecules by thermal history given in the formation of a first adhesion modifying layer, and an active hydrogen group possessed by other molecules is extracted to produce an ester group, so that crosslinking is formed between the first adhesion modifying resin molecules.

The formation of the above-described crosslinking in a first adhesion modifying layer improves the water resistance of the layer and, consequently, the stability of a near-infrared ray absorbing dye contained in the near-infrared ray absorption layer adjacent to the layer is improved. In addition, when the crosslinking is formed in the first adhesion modifying layer, the mixing of the components of the first adhesion modifying layer with the components of the near-infrared ray absorption layer can be suppressed except only the vicinity of an interface between these layers. This also attains that the stability of a near-infrared ray absorbing dye is improved. The reason is as follows: when the components of a first adhesion modifying layer and the components of a near-infrared ray absorption layer are mixed more than necessary, the components of the first adhesion modifying layer have an influence on a near-infrared ray absorbing dye, and the stability of the dye may be reduced in some cases. Further, the formation of the crosslinking provides the effect that the adhesion between the near-infrared ray absorption layer and the substrate film can be more enhanced.

As described above, in a first adhesion modifying resin for forming a first adhesion modifying layer, since an acid group such as an acid anhydride group can be a crosslinking point, the crosslinking density of the first adhesion modifying layer can be enhanced by increasing the amount of these functional groups. When the amount of acid group

in a first adhesion modifying resin is increased, since the acid value thereof is also increased, in the present invention, by determining the acid value of the first adhesion modifying resin, the crosslinking density of the first adhesion modifying layer is assured, particularly, to such an extent that denaturation of a near-infrared ray absorbing dye can be suppressed.

Examples of the polyester type resin used in the above-described polyester type graft copolymer include polyester type resins containing, as a main constituent unit, an ester unit formed of acid components such as the well-known dicarboxylic acids (including acid anhydrides) and alcohol components such as the well-known glycols.

Examples of the above-described dicarboxylic acid include aromatic dicarboxylic acids such as terephthalic acid, isophthalic acid, orthophthalic acid, naphthalenedicarboxylic acid, and biphenyldicarboxylic acid; aliphatic dicarboxylic acids such as succinic acid, adipic acid, azelaic acid, sebacic acid, dodecanedionic acid, and dimer acid; and alicyclic dicarboxylic acids such as 1,4-cyclohexanedicarboxylic acid, 1,3-cyclohexanedicarboxylic acid, 1,2-cyclohexanedicarboxylic acid, and acid anhydrides thereof. These dicarboxylic acids can be used alone, or by mixing two or more kinds thereof.

In addition, polyvalent carboxylic acids such as trimellitic acid (anhydride), pyromellitic acid (anhydride), benzophenonetetracarboxylic acid (anhydride), trimesic acid, ethylene glycol bis(anhydrotrimellitate), and glycerol tris(anhydrotrimellitate); and dicarboxylic acids having a polymerizable unsaturated double bond may partly be used in combination. Examples of the dicarboxylic acid having a polymerizable unsaturated double bond include $\alpha,\beta$-unsaturated dicarboxylic acids such as fumaric acid, maleic acid, maleic anhydride, itaconic acid, and citraconic acid; alicyclic dicarboxylic acids having an unsaturated double bond such as 2,5-norbornenedicarboxylic anhydride and tetrahydrophthalic anhydride.

Examples of the above-described glycol component include aliphatic glycols having 2 to 10 carbon atoms, alicyclic glycols having 6 to 12 carbon atoms, and ether linkage-containing glycols.

Examples of the aliphatic glycol having a carbon atoms include ethylene glycol, 1,2-propanediol, 1,3-propanediol, 1,4-butanediol, 1,5-pentanediol, neopentyl glycol, 1,6-hexanediol, 3-methyl-1,5-pentanediol, 1,9-nonanediol, and 2-ethyl-2-butylpropanediol. In addition, examples of the alicyclic glycol having a carbon atoms include 1,4-cyclohexanedimethanol.

Examples of the ether linkage-containing glycol include diethylene glycol, triethylene glycol, dipropylene glycol, alkylene oxide adducts of bisphenol compounds or derivatives thereof [e.g., 2,2-bis(4-hydroxyethoxyphenyl)propane], polyethylene glycol, polypropylene glycol, and polytetramethylene glycol.

In addition, polyhydric alcohols such as glycerin, trimethylolethane, trimethylolpropane, and pentaerythritol may partly be used in combination.

The method of synthesizing the above-described polyester type resin is not particularly limited, but the resin can be synthesized by the melt polymerization of the above-described dicarboxylic acids, glycols, and the like by the ordinary method. In the above-described polyester type resin, it is preferable that the components derived from aromatic dicarboxylic acids are 30 mole% or greater in 100 mole% of the components derived from acid components. When the amount of components derived from aromatic dicarboxylic acids is smaller than 30 mole%, since there is a tendency that the hydrolyzability of a polyester type resin becomes remarkable, and the adhesion between the first adhesion modifying layer and the substrate film is reduced with time, which is not preferable.

When the above-described dicarboxylic acid having a polymerizable unsaturated double bond is used, it is preferable that the acid is 10 mole% or smaller in 100 mole% of all the acid components. In addition, when the above-described polyvalent carboxylic acids or polyhydric alcohols are used, it is recommended that polyvalent carboxylic acids are 5 mole% or smaller (more preferably 3 mole% or smaller) in 100 mole% of all the acid components, and polyvalent alcohols are 5 mole% or smaller (more preferably 3 mole% or smaller) in all the alcohol components. When the amounts of dicarboxylic acid having a polymerizable unsaturated double bond, polyvalent carboxylic acid, and polyhydric alcohol are greater than the above range, gelation can easily occur in the polymerization of a polyester type resin or in the graft reaction described later, which is not preferable.

Examples of the "acid anhydride having at least one double bond" used in the above-described polyester type graft copolymer include anhydrides of $\alpha,\beta$-unsaturated dicarboxylic acids, such as maleic anhydride and itaconic anhydride; anhydrides of alicyclic dicarboxylic acids having an unsaturated double bond such as 2,5-norbornenedicarboxylic acid and tetrahydrophthalic anhydride. Further, the above-described polyester type graft copolymer may be grafted with other polymerizable unsaturated monomers in addition to the above-described acid anhydrides.

As the other polymerizable unsaturated monomer, there can be exemplified fumaric acid and fumaric acid monoesters or diesters, such as monoethyl fumarate, monoethyl fumarate, diethyl fumarate, and dibutyl fumarate; maleic acid and maleic acid monoesters or diesters, such as monoethyl maleate, diethyl maleate, and dibutyl maleate; itaconic acid and itaconic acid monoesters or diesters; maleimides such as phenylmaleimide; styrene and derivatives thereof, such as styrene, $\alpha$-methylstyrene, t-butylstyrene, and chloromethylstyrene; aromatic vinyl compounds such as vinyltoluene and divinylbenzene; acryl type monomers such as alkyl acrylates and alkyl methacrylates (as an alkyl group, a methyl group, an ethyl group, an n-propyl group, an isopropyl group, an n-butyl group, an isobutyl group, a t-butyl group, a 2-ethylhexyl group, a cyclohexyl group, a phenyl group, a benzyl group, a phenylethyl group, and the like); hydroxyl

group-containing acryl type monomers such as 2-hydroxyethyl acrylate, 2-hydroxyethyl methacrylate, 2-hydroxypropyl acrylate, and 2-hydroxypropyl methacrylate; amido group-containing acryl type monomers such as acrylamide, methacrylamide, N-methylmethacrylamide, N-methylacrylamide, N-methylolacrylamide, N-methylolmethacrylamide, N,N-dimethylolacrylamide, N-methoxymethylacrylamide, N-methoxymethylmethacrylamide, and N-phenylacrylamide; amino group-containing acryl type monomers such as N,N-diethylaminoethyl acrylate and N,N-diethylaminoethyl methacrylate; epoxy group-containing acryl type monomers such as glycidyl acrylate and glycidyl methacrylate; and acryl type monomer containing a carboxyl group or a salt thereof, such as acrylic acid, methacrylic acid, and salts thereof (sodium salts, potassium salts, ammonium salts).

In the film of the present invention, it is preferable that a first adhesion modifying layer is formed on a substrate film by the application method using a coating solution containing the above-described first adhesion modifying resin. As the coating solution used for forming a first adhesion modifying layer, a coating solution containing the above-described first adhesion modifying resin and further containing water, or a mixture of water and an aqueous solvent, as a constituent component, is preferable. In this coating solution, the first adhesion modifying resin is dissolved, or is present as a dispersion ("emulsion").

The amount of first adhesion modifying resin (solid content concentration) in a coating solution is preferably 3% to 35% by mass, more preferably 7% to 15% by mass. The use of a coating solution containing a first adhesion modifying resin in the above range, a first adhesion modifying layer can be better formed.

As the above-described aqueous solvent, alcohols such as ethanol, isopropanol, and benzyl alcohol are preferable, and alcohols may be contained in the range of smaller than 50% by mass, relative to a coating solution. In addition, as far as it is in the range smaller than 10% by mass, relative to a coating solution, organic solvents other than the above-described alcohols may be mixed in the range where the organic solvents can be dissolved. In this respect, it is desirable that the total amount of alcohols and organic solvents other than alcohols in a coating solution is smaller than 50% by mass.

The incorporation of organic solvents containing alcohols in the above range provides the effect that drying property is improved in the application of a coating solution to a substrate film, and, at the same time, appearance of a first adhesion modifying layer is improved as compared with use of only water. However, when the amounts of organic solvents containing alcohols contained are greater than the above range, the evaporation rate of solvents becomes too fast, a change in the concentration of the composition is caused during the application of a coating solution, and the viscosity of a coating solution is increased and, as a result, there is a tendency that application property is reduced. For this reason, deterioration in appearance of a first adhesion modifying layer can easily be caused. Further, this is not preferable also from the viewpoint of environment, health of workers, and crisis of a fire.

In addition, it is particularly preferable that a coating solution contains the following acid compound. When a first adhesion modifying resin has a unit derived from an acid anhydride, in a coating solution, the acid anhydride group is converted into a carboxyl group by hydrolysis and, by the action of this acid compound, it becomes possible to promote the reaction forming an acid anhydride group or an ester group from the carboxyl group between the first adhesion modifying resin molecules in the drying after the application of a coating solution, to enhance the crosslinking density of a first adhesion modifying layer. In this way, the adhesion to a substrate film and the suppression of degeneration of a near-infrared ray absorbing dye can highly be achieved.

As the above-described acid compound, acid compounds which can easily be vaporized due to heat in the formation of a first adhesion modifying layer, remains in the layer at a small amount and, even when remains, has little adverse influence, is preferable and, specifically, carboxylic acids having a low boiling point are recommended. More specifically, examples thereof include formic acid, acetic acid, propionic acid, butyric acid, valeric acid, and heptanoic acid. It is preferable that the amounts of these acid compounds to be used are 1% to 10% by mass, relative to the first adhesion modifying resin.

The above-described coating solution may contain the well-known anionic surfactants or nonionic surfactants at suitable amounts in order to improve wettability onto a substrate film to attain more uniform application.

In addition, the coating solution may contain additives such as inorganic particles, heat resistant polymer particles, antistatic agents, ultraviolet absorbing agents, organic lubricants, antibacterial agents, and photo-oxidation catalysts from the viewpoint of the provision of other functions such as handling property, antistatic property, and antibacterial property to a film. In particular, when inert particles are not substantially contained in a substrate film, it is desirable that inorganic particles and/or heat resistant polymer particles are contained in a coating solution, and irregularities are formed on the surface of a first adhesion modifying layer in order to improve the handling property of a film. Further, since as the coating solution, an aqueous coating solution is suitable as described above, other water-soluble resins, water-dispersible resins, emulsions, and the like may be contained in the above-described composition aiming at an improvement in film performance.

The first adhesion modifying layer can be formed by applying a coating solution to a substrate film, and drying it as described above ("off-line coating method"). In addition, when a biaxially stretched film is used as a substrate film, a method of applying a coating solution on an unstretched or monoaxially stretched film, and subjecting to stretching

and heat fixation at the stage of forming a first adhesion modifying layer ("in-line coating method") may be employed. From the viewpoint of the effect of the present invention, it is more preferable to employ the latter in-line application method. When a substrate film with a coating solution applied thereto is introduced into a tenter for stretching (e.g., traverse stretching) and heat fixation, and this film is heated, a crosslinking reaction progresses more due to the heat; therefore, a more stable first adhesion modifying layer can be formed. As the method of applying a coating solution to a substrate film, the well-known application methods can be employed. Specifically, examples thereof include reverse roll coating methods, gravure coating methods, kiss coating methods, die coater methods, roll brushing methods, spray coating methods, air knife coating methods, wire bar coating methods, pipe doctor methods, impregnation coating methods, and curtain coating methods. These methods can be carried out alone or in combination.

The application amount of a coating solution is preferably 0.01 to 1 $g/m^2$, more preferably 0.08 to 0.8 $g/m^2$, in terms of a dry mass (i.e., mass after the formation of a first adhesion modifying layer). When the application amount of a coating solution is smaller than the above range, the effect of provision of a first adhesion modifying layer may become insufficient in some cases. On the other hand, when the application amount of a coating solution is greater than the above range, the total transmittance of a film may be reduced in some cases.

As a representative, a method of forming a first adhesion modifying layer by the in-line application method will be explained below. A coating solution is applied to an unstretched or monoaxially stretched substrate film, and this film is dried. In the in-line application method, it is necessary to remove only a solvent content such as water at this drying step, and select a temperature and time such that the reaction of crosslinking the first adhesion modifying layer does not progress.

Specifically, the drying temperature is preferably 70°C to 140°C, and the drying time is adjusted depending on the contents of a coating solution and the application amount. For example, it is preferable that a product of the drying temperature (°C) and the drying time (sec.) is 3,000 or smaller. When the above-described product is greater than 3,000, there is a tendency that the reaction of crosslinking a first adhesion modifying layer is initiated before stretching, and cracks or the like are formed in the first adhesion modifying layer; therefore, it becomes difficult to attain the object of the present invention.

After the application of a coating solution and drying, stretching is carried out. The stretching condition in this case may appropriately be selected depending on the material for a substrate film and, for example, when the material is PET, the stretching condition described above in term of a substrate film may be employed.

The film after stretching is usually subjected to relaxation treatment by about 2% to 10%. In the present invention, it is preferable to heat a first adhesion modifying layer with, for example, an infrared heater in the state where the first adhesion modifying layer has small distortion, that is, in the state where the length in the width direction of the film is fixed. It is desirable that heating at that time is carried out at about 250°C to 260°C in a short time such as about 0.5 to 1 second. Such an operation further promotes the crosslinking of a first adhesion modifying resin in the first adhesion modifying layer, so that the first adhesion modifying layer becomes further firm and the adhesion between the first adhesion modifying layer and the substrate film becomes further better.

When the heating temperature or the heating time in the above-described relaxation treatment is greater than the above-described preferable range, the crystallization or melting of a substrate film can easily be generated, which is not preferable. On the other hand, when the above-described heating temperature or the above-described heating time is smaller than the above-described preferable range, the crosslinking of a first adhesion modifying layer may become insufficient in some cases, so that the adhesion between the first adhesion modifying layer and the substrate film and the near-infrared ray absorption layer may become insufficient in some cases.

The first adhesion modifying layer provided on a substrate film has better adhesion to not only the near-infrared ray absorption layer but also various materials. For the purpose of further improving adhesion, the first adhesion modifying layer may be subjected to surface treatment such as corona discharge treatment, fire treatment, or electron beam irradiation.

[Anti-reflective layer]

The near-infrared ray absorption film of the present invention is preferably such that an anti-reflective layer is provided on the side opposite to a near-infrared ray absorption layer provided on a transparent substrate film. This anti-reflective layer has the reflection preventing function, and the "anti-reflective function" as used herein refers to the function of preventing surface reflection, increasing a light transmittance and, at the same time, preventing the "glare" of a film. The method of imparting the reflection preventing function is not limited, but can freely be selected. For example, a method of forming a layer having a different refractive index on the surface of a substrate film, and reducing reflection utilizing the interference of reflected light at the interface of the layer is suitable.

In the present invention, it is preferable to simultaneously carry out, at the formation of an anti-reflection layer, the procession of imparting the function which is better to be possessed in the application as a near-infrared ray absorption filter, such as hard processing for imparting flaw preventing property, electrification preventing procession for imparting

electrification preventing property, and anti-stain procession for preventing the adhesion of stains such as fingerprints, sebum, sweat, cosmetic, and the like, and imparting the function of easily wiping the stains even when attached. In particular, hard procession is strongly required in a market, and it is preferable that the pencil hardness of an anti-reflection layer is 1H or higher.

Specifically, it is preferable that an anti-reflective layer has a tri-layered structure in which a low refractive index layer, a high refractive index layer, and a hard coating layer are formed in this order from the uppermost surface side [on the opposite side of a substrate film]. That is, the utilization of interference of reflected light at the interface between the low refractive index layer and the high refractive index layer can reduce surface reflection and, at the same time, the hard coated layer can prevent flaws on a near-infrared ray absorption filter.

As the hard coated layer, preferable are layers obtained by curing a resin (hereinafter referred to as the "photo-curable resin") which can be cured by an electron beam or light (ultraviolet rays or the like).

As the photo-curable resin, there can be used resins (oligomers or polymers) having two or more (meth) acryloyl groups which can be cured by irradiation with an electron beam or light (ultraviolet rays or the like) in a molecule, such as the well-known epoxy acrylates (vinyl ester resins), polyester acrylates, and urethane acrylates.

The above-described photo-curable resin is mixed with a reactive diluent and used as a photo-curable resin composition. The reactive diluent has one or more reactive groups in a molecule, and has a role in adjusting the viscosity of a photo-curable resin composition, and a role in contributing to a curing reaction to enhance the adhesion to other layers and the hardness. Specifically, examples thereof include aromatic monomers such as styrene, vinyl toluene, and divinyl benzene; vinyl acetate; N-vinyl pyrrolidone; (meth)acrylates such as methyl (meth)acrylate, ethyl (meth)acrylate, butyl (meth)acrylate, ethylhexyl (meth)acrylate, hexanediol (meth)acrylate, (di)ethyleneglycol di(meth)acrylate, propyleneglycol di(meth)acrylate, tripropyleneglycol di(meth)acrylate, trimethylolpropane di(meth)acrylate, trimethylolpropane tri(meth)acrylate, pentaerythritol tri(meth)acrylate, pentaerythritol tetra(meth)acrylate, dipentaerythritol hexa(meth)acrylate, 1,6-hexanediol di(meth)acrylate, and neopentyl glycol di(meth)acrylate. These reactive diluents can be used alone or by mixing two or more kinds thereof.

In addition, when cured with light (ultraviolet rays or the like), it is desirable that a photo-polymerization initiator and a light sensitizer are contained in the photo-curable resin composition. As the photo-polymerization initiator, there can be used compounds well known as photo-polymerization initiators, such as acetophenones, benzophenones, Michler's benzoyl benzoate, α-amyloxim esters, tetramethylthiuram monosulfide, and thioxanthones. As the light sensitizer, there can be used compounds well known as light sensitizers, such as n-butylamine, triethylamine, and tri-n-butylphosphine.

The photo-curable resin composition may contain a solvent for the purpose of adjusting a viscosity. Examples thereof include hydrocarbons such as toluene and xylene; cellosolves such as cellosolve and butylcellosolve; carbitols such as carbitol and butylcarbitol; esters such as cellosolve acetate, carbitol acetate, and propylene glycol monomethyl ether acetate; ketones such as methyl isobutyl ketone and methyl ethyl ketone; and ethers such as diethylene glycol dimethyl ether.

For forming a hard coated layer, there may be employed a method of coating the above-described photo-curable resin composition on a substrate film directly or with any other layer being interposed, followed by drying, and irradiating it with an electron beam or light (ultraviolet rays or the like) to cure it. For example, in the case of the electron beam curing method, there can be used an electron beam having an energy of 50 to 1000 keV, preferably 100 to 300 keV, which is emitted from various electron beam accelerators such as those of the Cockcroft-Walton type, the Van de Graaff type, the resonance voltage transformation type, the insulating core transformer type, the linear type, the Dynamitron type, and the high frequency type. In the case of the photo-curing method, there can be utilized ultraviolet rays generated from light rays such as those from ultrahigh pressure mercury lamps, high pressure mercury lamps, low pressure mercury lamps, carbon arcs, xenon arcs, and metal halide lamps. The thickness of a hard coated layer is preferably 0.5 to 10 μm. When the thickness of a hard coated layer is smaller than 0.5 μm, sufficient hard coating property cannot be maintained and, when the thickness is greater than 10 μm, this is not preferable from the viewpoint of productivity.

The low refractive index layer and the high refractive index layer are not particularly limited. They may be organic layers or inorganic layers, or inorganic/organic hybrid layers. As the method of forming these layers, examples of the method of forming mainly an inorganic layer include a method of depositing a compound forming a layer by the deposition method or the sputtering method, and examples of a method of forming mainly an organic layer include a method of applying a coating solution containing a compound (resin and the like) forming a layer, followed by drying.

As the material forming a low refractive index layer, it is preferable to use a dielectric substance such as $CaF_2$, $MgF_2$, $NaAlF_4$, $SiO_2$, $ThF_4$, $ZrO_2$, $Nd_2O_3$, $SnO_2$, $TiO_2$, $CeO_2$, ZnS, and $In_2O_3$. The low refractive index layer can be formed by using these materials by a dry coating process, for example, the vacuum deposition method, the sputtering method, the CVD method, or the ion plating method, or by a wet coating process, for example, the gravure method, the reverse method, or the die method.

The high refractive index layer is enough, so far as it is a layer having a higher refractive index than that of a

low refractive index layer formed on the surface thereof, and a near-infrared ray absorption layer or other function imparting layers (ultraviolet absorption layer, electromagnetic shutting off layer, hard coated layer, and the like) may also function as a high refractive index layer. In the case of an inorganic system, it is enough to form a layer of, for example, ZnO, $TiO_2$, $CeO_2$, $SnO_2$, $ZrO_2$, and ITO (indium-tin oxide) (e.g., having a refractive index of 1.65 or higher) is formed by the deposition method or the sputtering method. In the case of an organic system, it is preferable to use a resin, and preferable examples thereof include polyester type resins, polyether type resins, acryl type resins, epoxy resins, urethane type resins, polycarbonate type resins, and polystyrene type resins. Further, inorganic particles can be dispersed in a polymer resin to enhance a refractive index.

Besides, silane compounds (organic silane compounds) may be hydrolyzed and condensed to form a low refractive index layer and a high refractive index layer. That is, a coating solution containing a silane compound is applied and dried and, at the same time, it is hydrolyzed and condensed to form a layer. The hydrolysis condensation may be carried out in a coating solution, or there may be used silane compounds which have already been hydrolyzed and condensed. Examples of the silane compound which can be used include γ-aminopropyltrimethoxysilane (and partial hydrolysis condensates thereof) and tetraethoxysilane. In order to make a difference in a refractive index between the low refractive index layer and the high refractive index layer, the kinds of silane compounds to be used in the respective layers may be changed. For example, when γ-aminopropyltrimethoxysilane (and partial hydrolysis condensates thereof) is used in a low refractive index layer, tetraethoxysilane may be used in a high refractive index layer.

Examples of the solvent used in a coating solution include water; a mixed solvent of water and alcohols (methanol, ethanol, isopropanol, and the like). If necessary, acids (inorganic acids such as hydrochloric acid, and the like) may be added. After the application of a coating solution, this may be dried (and hydrolyzed) to form a low refractive index layer and a high refractive index layer.

From the viewpoint of an improvement in flaw resistance, it is desirable that the anti-reflective layer has a high hardness and, for example, has a pencil hardness (pencil hardness measured according to the provision of JIS-K 5400) of the uppermost surface of 1H or higher, more preferably 2H or higher. When each layer structure exemplified above is employed, such a hardness can be secured.

In addition, the well-known other functional layers may be provided on the surface side of an anti-reflective layer (on the surface of a low refractive index layer). Examples thereof include anti-static layers for securing antistatic property, and anti-stain layers having the function of preventing the adhesion of stains such as fingerprints, sebums, sweats, and cosmetics, and capable of easily wiping the stains even when attached.

[Intermediate refractive index layer] (layer having interference fringe suppressing function)

It is preferable to provide an intermediate refractive index layer between the above-described anti-reflective layer and the substrate film. As an anti-reflective layer, a structure in which a low refractive index layer, a high refractive index layer, and a hard coated layer are formed in this order from the uppermost surface side, is preferably employed and, since a hard coated layer is obtained by curing a specific curing resin, a difference in refractive index between the hard coated layer and the substrate film (polyester film) is great. When a near-infrared ray absorption film with such an anti-reflective layer provided thereon is applied to a filter for absorbing a near-infrared ray in a plasma display, iris-like colors (interference fringes) are generated by the interference action of light at a layer interface in the inside of the filter. As the method of suppressing the generation of the above-described interference fringes, it is known that it is preferable to lower a difference in refractive index between the hard coated layer and the substrate film small and, for the purpose of attaining this, it is effective to introduce a layer between these layers, the introduced layer having a refractive index between the refractive index of the hard coated layer and the refractive index of the substrate film.

As the above-described intermediate refractive index layer, a layer formed from a coating solution containing an aqueous polyester resin, and at least one kind of a water-soluble titanium chelate compound, a water-soluble titanium acylate compound, a water-soluble zirconium chelate compound, and a water-soluble zirconium acylate compound is extremely effective in suppressing the generation of the interference fringes, and can also contribute to improvement in adhesion between the substrate film and the anti-reflective layer. That is, when a near-infrared ray absorption filter is required to suppress the generation of the interference fringes, it is preferable that a near-infrared ray absorption film has the above-described intermediate refractive index layer (layer having the interference fringe suppressing function) between the substrate film and the anti-reflective layer.

The aqueous polyester resin forming an intermediate refractive index layer means a polyester resin having solubility or dispersibility in water or a water-soluble organic solvent, for example, an aqueous solution containing smaller than 50% by mass of an alcohol, an alkylcellosolve, a ketone type solvent, or an ether type solvent. In order to impart aqueous property to a polyester resin, it is enough that hydrophilic groups such as hydroxy groups, carboxyl groups, sulfonic acid groups, phosphoric acid groups, and ether groups are introduced into a polyester molecule and, from the viewpoints of coated film physical properties and adhesion, the introduction of sulfonic acid groups is preferable.

When sulfonic acid groups are introduced, a polyester may be synthesized using a dicarboxylic acid having a

sulfonic acid group as a copolymerizable component. For introducing other hydrophilic groups, a method of synthesizing a polyester using copolymerizable components having the respective groups can be employed. When a dicarboxylic acid having a sulfonic acid group is used, it is preferable to use then in the range of 1 to 10 mole% in all acid components for synthesizing a polyester. When the amount of dicarboxylic acid having a sulfonic acid group to be used are too small, since the exhibition of aqueous property of a polyester resin itself is poor, and the compatibility with a water-soluble titanium or zirconium chelate compound or an acylate compound is reduced, a uniform and transparent coated layer cannot be obtained. On the other hand, when the amount of a dicarboxylic acid having a sulfonic acid group to be used are too great, the moist resistance of an intermediate refractive index layer is reduced.

Examples of the dicarboxylic acid having a sulfonic acid group include sulfoterephthalic acid, 5-sulfoisophthalic acid, 4-sulfonaphthaleneisophthalic acid-2,7-dicarboxylic acid, 5-(4-sulfophenoxy)isophthalic acid, and salts thereof.

It is preferable that an aqueous polyester resin has a glass transition temperature (Tg) of 40°C or higher. When Tg is too low, the moist resistance of an intermediate refractive index layer is reduced. In addition, since there is a tendency that the refractive index of a polyester having Tg lower than 40°C is structurally reduced, and the refractive index of an intermediate refractive index layer is also reduced, the effect of suppressing the generation of interference fringes may be reduced in some cases.

In order to synthesize an aqueous polyester resin having the above-described Tg, it is preferable to use an aromatic dicarboxylic acid such as terephthalic acid, isophthalic acid, and naphthalenedicarboxylic acid as a main components of the polyvalent carboxylic acid components, in addition to the copolymerizable components for introducing the above-described hydrophilicity. As a polyhydric alcohol, preferable are glycols having relatively small numbers of carbon atoms, such as ethylene glycol, propane glycol, 1,4-butanediol, and neopentyl glycol; and aromatic ring-containing diols such as ethylene oxide adducts of bisphenol A. Alternatively, when a rigid component such as biphenyl, or a dicarboxylic acid or diol having an atom having a high refractive index such as bromine and sulfur is used in such a range that the physical properties of a film are not reduced, this is not particularly problematic.

Another main component forming an intermediate refractive index layer is a water-soluble titanium or zirconium chelate compound or acylate compound. As used herein, the "water-soluble" means that a compound has solubility in water or an aqueous solution containing a water-soluble organic solvent.

Examples of the water-soluble titanium chelate compound include ammonium salts of diisopropoxybis(acetylacetonato)titanium, isopropoxy(2-ethyl-1,3-hexanediolato)titanium, diisopropoxybis(triethanolaminato)titanium, di-n-butoxybis(triethanolaminato)titanium, hydroxybis(lactato)titanium, and hydroxybis(lactato)titanium; and ammonium salts of titaniumveroxocitric acid. In addition, examples of the water-soluble titanium acylate compound include oxotitanium bis(monoammoniumoxalate).

Examples of the water-soluble zirconium chelate compound include zirconium tetraacetylacetonate, zirconium tributoxyacetylacetonate, and zirconium acetate. In addition, examples of the water-soluble zirconium acylate compound include zirconium tributoxystearate.

In an intermediate refractive index layer, an alkyd resin, a polyurethane resin, an acrylic resin, and a vinyl type resin such as polyvinyl alcohol may be used in combination in such a range that the effect thereof is not deteriorated. In addition, it is also possible to use crosslinking agents in combination in such a range that there is no adverse influence on the effect of an intermediate refractive index layer. Examples of the crosslinking agent which can be used include amino resins such as adducts of urea, melamine or benzoguanamine and formaldehyde, and alkyl ether compounds comprising these adducts and an alcohol having 1 to 6 carbon atoms; polyfunctional epoxy compounds; polyfunctional isocyanate compounds; polyfunctional block isocyanate compounds; polyfunctional aziridine compounds; and oxazoline compounds.

As described above, an intermediate refractive index layer is formed using a coating solution for forming an intermediate refractive index layer and, in the coating solution, it is preferable that the mixing ratio (mass ratio) of an aqueous polyester resin, and at least one kind of water-soluble titanium chelate compounds, water-soluble titanium acylate compounds, water-soluble zirconium chelate compounds, and water-soluble zirconium acylate compounds, is 90/10 to 5/95.

[Second adhesion modifying layer] (easy adhesive layer)

In the case where the suppression of the generation of the above-described interference fringes is not required in the near-infrared ray absorption film of the present invention, a layer which has the action of improving the adhesion between the substrate film and the anti-reflective layer, but has no action of suppressing the generation of interference fringes may be provided as a "second adhesion modifying layer". This second adhesion modifying layer may be provided in place of the above-described first adhesion modifying layer between the substrate film and the near-infrared ray absorption layer. In this respect, in order to prevent the denaturation of a dye at a high temperature under a high humidity, it is desirable to employ a first adhesion modifying layer.

Examples of the resin forming a second adhesion modifying layer include copolymerized polyester resins,

polyurethane resins, acrylic resins, styrene-maleic acid-grafted polyester resins, and acryl-grafted polyester resins, and it is preferable to use at least one selected from these resins. In particular, copolymerized polyester type resins, polyurethane type resins, and styrene-maleic acid-grafted polyester resins are particularly preferable since they have excellent adhesion.

A second adhesion modifying layer is formed by preparing a coating solution for forming a second adhesion modifying layer, and coating this on a substrate film, followed by drying. The method of preparing a coating solution for forming a second adhesion modifying layer will be explained below using, as an example, a system using a copolymerized polyester resin and a polyurethane resin.

The above-described copolymerized polyester resin has a branched glycol as a constituent component. As used herein, the "branched glycol" includes

2,2-dimethyl-1,3-propanediol,
2-methyl-2-ethyl-1,3-propanediol,
2-methyl-2-butyl-1,3-propanediol,
2-methyl-2-propyl-1,3-propanediol,
2-methyl-2-isopropyl-1,3-propanediol,
2-methyl-2-n-hexyl-1,3-propanediol,
2,2-diethyl-1,3-propanediol,
2-ethyl-2-n-butyl-1,3-propanediol,
2-ethyl-2-n-hexyl-1,3-propanediol,
2,2-di-n-butyl-1,3-propanediol,
2-n-butyl-2-propyl-1,3-propanediol, and
2,2-di-n-hexyl-1,3-propanediol.

The branched glycol is used preferably at a ratio of 10 mole% or greater, further preferably at a ratio of 20 mole% or greater, in all polyhydric alcohols. As a polyhydric alcohol other than branched glycols, ethylene glycol is most preferable. At a small ratio, there may be used diethyleneglycol, propyleneglycol, butanediol, hexanediol, 1,4-cyclohexanedimethanol, and the like.

As the polyvalent carboxylic acid for synthesizing the copolymerized polyester resin, terephthalic acid and isophthalic acid are most preferable. At a small ratio, aromatic dicarboxylic acids such as diphenylcarboxylic acid and 2,6-naphthalenedicarboxylic acid may be added for copolymerization. In order to impart water dispersibility, it is preferable to use dicarboxylic acids having a sulfonic acid group in the range of 1 to 10 mole% in addition to the above-described polyvalent dicarboxylic acid. As the dicarboxylic acids having a sulfonic acid group, there can be exemplified various compounds exemplified as a copolymerizable component of the aqueous polyester resin of an intermediate refractive index layer.

The above-described polyurethane type resin is, for example, a resin containing a block type isocyanate group, and examples thereof include thermal reaction-type water-soluble polyurethanes in which terminal isocyanate groups are blocked (hereinafter referred to as the "block") with hydrophilic groups. Examples of the blocking agent for an isocyanate group include bisulfurous acid salts, sulfonic acid group-containing phenols, alcohols, lactams, oxims, and active methylene compounds. In the blocking agents, particularly preferable are bisulfurous acid salts which have appropriate thermal treatment temperatures and thermal treating times and which are industrially widely used.

The blocked isocyanate groups make a urethane prepolymer hydrophilic or water soluble. When a heat energy is given during drying or at a heat set process in the film formation, blocking agents are released from isocyanate groups, resulting in self-crosslinking to form a net, in which the above-described copolymerized polyester resin which has been mixed is fixed. In addition, they are also reacted with the terminal groups of the copolymerized polyester resin.

In the preparation of a coating solution for forming a second adhesion modifying layer, since the above-described polyurethane resin is hydrophilic, it has poor water resistance, but when coating, drying, and heat setting are carried out to complete the thermal reaction, since hydrophilic groups (i.e., blocking agents) of the polyurethane resin are removed, there is formed a layer having better water resistance.

A urethane prepolymer used in the above-described polyurethane resin is a compound which is obtained by reacting (1) an organic polyisocyanate having 2 or more active hydrogen atoms in one molecule thereof, or a compound having 2 or more active hydrogen atoms in one molecule thereof and having a molecular weight of 200 to 20,000; (2) an organic polyisocyanate having 2 or more isocyanate groups in one molecule thereof; and (3) a chain extender having at least 2 active hydrogen atoms in one molecule thereof, and which has terminal isocyanate groups.

A compound which is usually known as the compound (1) contains two or more hydroxy groups, carboxyl groups, amino groups, or mercapto groups at the termini thereof or in the molecule chain thereof, and examples of its particularly preferable compound include polyether polyols, polyester polyols, and polyether ester polyols.

As the polyether polyol, there are, for example, polymers of compounds such as alkylene oxides, e.g., ethylene

oxide, propylene oxide; styrene oxide; and epichlorohydrin, random copolymers of these compounds, block copolymers of these compounds, and polymers obtained by the addition polymerization of these compounds to polyhydric alcohols.

Examples of the polyester polyol and polyether ester polyol mainly include straight or branched compounds. They are obtained by condensing polyvalent carboxylic acids, i.e., polyvalent saturated or unsaturated carboxylic acids such as succinic acid, adipic acid, phthalic acid, and maleic anhydride, and anhydrides of these carboxylic acids; and polyhydric alcohols, i.e., polyhydric saturated or unsaturated alcohols such as ethylene glycol, diethylene glycol, 1,4-butanediol, neopentyl glycol, 1,6-hexanediol, and trimethylolpropane, polyalkylene ether glycols such as relatively low-molecular weight polyethylene glycols and relatively low-molecular weight polypropylene glycols, and mixtures of these alcohols. Further examples of the polyester polyether include polyesters obtained from lactones and hydroxy acids. Besides, as the polyether ester polyol, there can also be used polyether esters in which ethylene oxide or propylene oxide is added to polyesters which have been prepared in advance.

Examples of the above-described organic polyisocyanate (2) include aromatic diisocyanates such as isomers of toluylene diisocyanate, and 4,4-diphenylmethane diisocyanate; aromatic aliphatic diisocyanates such as xylilene diisocyanate; alicyclic diisocyanates such as isophorone diisocyanate and 4,4-dicyclohexylmethane diisocyanate; aliphatic diisocyanates such as hexamethylene diisocyanate and 2,2,4-trimethylhexamethylene diisocyanate; and polyisocyanates in which trimethylolpropane or the like is added to these compounds alone or mixtures thereof.

Examples of the above-described chain extender (3) include glycols such as ethylene glycol, diethyleneglycol, 1,4-butanediol, and 1,6-hexanediol; polyhydric alcohols such as glycerin, trimethylolpropane, and pentaerythritol; diamines such as ethylenediamine, hexamethylenediamine, and piperazine; aminoalcohols such as monoethanolamine and diethanolamine; thiodiglycols such as thiodiethylene glycol; and water.

For synthesizing the above-described urethane polymer, usually, the reaction is carried out at a temperature of 150°C or lower, preferably 70°C to 120°C, for 5 minutes to a few hours by the one-stage or multiple-state isocyanate polycondensation method using the above-described chain extender. The ratio of isocyanate groups to active hydrogen atoms can freely be selected, so far as the ratio is 1 or greater, and it is necessary that free isocyanate groups remain in the urethane prepolymer obtained. Further, the amount of free isocyanate groups contained is 10% by mass or smaller and, taking the stability of a urethane polymer aqueous solution after blocking into consideration, the amount thereof is preferably 7% by mass or smaller.

The urethane prepolymer thus obtained is blocked using a blocking agent (preferably a bisulfurous acid salt). When a bisulfurous acid salt is used, the urethane prepolymer is mixed with an aqueous solution of the bisulfurous acid salt, and the reaction is allowed to progress, while stirring well for about 5 minutes to 1 hour. It is preferable that the reaction temperature is 60°C or lower. Thereafter, the reaction mixture is diluted with water to have a suitable concentration, thereby giving a thermal reaction-type water-soluble urethane composition. When this composition is used, the composition is adjusted to have a suitable concentration and viscosity. Since when the above-described composition is usually heated to about 80°C to 200°C, the bisulfurous acid salt of a blocking agent is dissociated, and an active isocyanate group is regenerated, so that a polyurethane polymer is produced by the polyaddition reaction occurring in the molecule of a prepolymer or between the molecules, or the urethane prepolymer becomes to have the property of causing addition to other functional groups.

As the polyurethane resin having the above-described block type isocyanate groups, there is typically exemplified "ELASTORON (trade name)" available from Dai-ichi Kogyo Seiyaku Co., Ltd. ELASTORONE is such that isocyanate groups are blocked with sodium bisulfite, and since carbamoylsulfonate groups having strong hydrophilicity are present at the molecule termini thereof, this polyurethane resin is water soluble.

In the preparation of a coating solution for forming a second adhesion modifying layer, the mass ratio of the above-described copolymerized polyester resin (a) to the above-described polyurethane resin (b) is preferably such that (a) : (b) = 90 : 10 to 10 : 90, more preferably (a) : (b) = 80 : 20 to 20 : 80.

In order to promote a thermally crosslinking reaction, a catalyst may be added to a coating solution for forming an intermediate refractive index layer or a second adhesion modifying layer. As the catalyst, there can be used various chemical substances, for example, inorganic substances, salts, organic substances, alkaline substances, acidic substances, and metal-containing organic compounds. In addition, in order to adjust the pH of an aqueous solution, alkaline substances or acidic substances may be added.

In the formation of an intermediate refractive index layer or a second adhesion modifying layer on a substrate film surface by the coating method, the well-known anionic or nonionic surfactants may be used by addition in order to enhance wettability on the substrate film to uniformly apply a coating solution.

Examples of the solvent used in a coating solution for forming an intermediate refractive index layer or a coating solution for forming a second adhesion modified layer include water; and mixed solvents of water and alcohols (such as ethanol, isopropanol, and benzyl alcohol). When alcohols are used, it is preferable that the amount of alcohols is smaller than 50% by mass in the entire coating solution. Further, when the amount is smaller than 10% by mass in the entire coating solution, organic solvents other than alcohols may be mixed in a range making possible the dissolution of these organic solvents. In this respect, the total amount of alcohols and other organic solvents in a coating solution

is smaller than 50% by mass.

When organic solvents containing alcohols are used at amounts of not greater than the above-described upper limit, the effects of enhancing drying property at drying after the application of a coating solution, and improving the appearance of a coated film as compared with the case of only water are obtained. When the amounts of organic solvents containing alcohols are greater than the above-described upper limit, since the evaporation rate of a solvent becomes faster, a change in the concentration of a coating solution is caused during application, and the viscosity of a coating solution is increased, and coating property is reduced; therefore, a deterioration in the appearance of a coated film is caused and, further, crisis of a fire is feared.

In addition, it is recommended that the solid content concentration (except for particles described later) in a coating solution for forming an intermediate refractive index layer or a coating solution for forming a second adhesion modifying layer is 30% by mass or smaller, more preferably 10% by mass or smaller.

The solution viscosity of a coating solution is preferable 1.0 Pa.s or lower. When the solution viscosity is too high, streak-like irregularities in application thickness can easily be generated.

It is desirable that an intermediate refractive index layer and a second adhesion modifying layer contain particles which is to be a lubricant, for the purpose of imparting easily sliding property. As described above, in a biaxially oriented laminated polyester film, from the viewpoint of improvement in transparency, it is preferable to employ a structure substantially not containing particles. However, when such a structure is employed, a problem arises that the handling property of a substrate film is deteriorated, such as slidability and winding property. In order to solve this problem, in an intermediate refractive index layer and a second adhesion modifying layer, it is preferable that lubricant particles for the purpose of imparting easy slidability are contained, and suitable projections are formed on the surface of these layers.

Therefore, it is preferable that particles which is to be a lubricant is contained in a coating solution for forming an intermediate refractive index layer and a coating solution for forming a second adhesion modifying layer. Examples of such particles include inorganic particles such as calcium carbonate, calcium phosphate, silica, kaolin, talc, titanium dioxide, alumina, barium sulfate, calcium fluoride, lithium fluoride, zeolite, and molybdenum sulfide; organic particles such as cross-linked polymer particles (e.g. cross-linked poly(methyl methacrylate) particles), and calcium oxalate. In particular, when a polyester is used in a resin forming an intermediate refractive index layer or a second adhesion modifying layer, silica is preferable since the refractive index thereof is relatively close to that of the polyester, and high transparency can easily be obtained.

The average particle diameter of the above-described particles is generally 0.01 to 1.0 μm, more preferably 0.01 to 0.5 μm, and further preferably 0.01 to 0.1 μm. When the average particle diameter thereof is too great, the surface of an intermediate refractive index layer or a second adhesion modifying layer is roughened too much, and there is a tendency that transparency is reduced. On the other hand, the use of particles having a too small average particle diameter cannot easily secure easy slidability in some cases.

In addition, the amount of particles contained in a coating solution for forming an intermediate refractive index layer or a coating solution for forming a second adhesion modifying layer is such that the amount of particles contained in a layer after application and drying is generally 60% by mass or smaller, more preferably 50% by mass or smaller, and further more preferably 40% by mass or smaller. When the amount of particles contained is too great, the adhesion improving effect due to an intermediate refractive index layer or a second adhesion modifying layer may be deteriorated in some cases.

Two or more kinds of particles may be blended, or the same kind of particles having different average particle diameters may be blended. In any event, it is preferable that the average particle diameter of all particles and the total amount of all particles contained are adjusted so as to meet the above range.

When a coating solution for forming an intermediate refractive index layer and a coating solution for forming a second adhesion modifying layer are applied to a biaxially oriented laminated polyester, it is preferable to remove coarse aggregates of particles in the coating solution by filtration. The type of a filtering material is not particularly limited, but examples thereof include the filament type, the felt type, and the mesh type. The material for a filtering material is not particularly limited, so far as the material has the above performance, and has no adverse influence on a coating solution, but examples thereof include polyethylene, polypropylene, and nylon, in addition to the above-described stainless steel.

Various additives such as antistatic agents, pigments, organic fillers, and lubricants may be mixed in a coating solution for forming an intermediate refractive index layer or a coating solution for forming a second adhesion modifying layer in such a range that the effect is not deteriorated. Further, since a coating solution is aqueous, other water-soluble resins, water-dispersible resins, and emulsions may be added to the coating solution in such a range that the effect is not deteriorated, for the purpose of improving further performance.

The application of a coating solution for forming an intermediate refractive index layer or a coating solution for forming a second adhesion modifying layer on a substrate film can be carried out by any of the well-known methods, examples of which include the reverse roll coating method, the gravure coating method, the kiss coating method, the roll brushing method, the spray coating method, the air knife coating method, the wire bar coating method, the pipe doctor method, the impregnation coating method, and the curtain coating method, and these methods may be carried

out alone or in combination.

The timing of applying a coating solution may be, when the substrate film is a biaxially stretched film, a time point at which, after biaxial stretching, heat fixation has been completed, and a biaxially oriented film has been obtained, and preferably during the step of preparing a biaxially oriented film, more preferably at the stage before the completion of crystal orientation of a biaxially oriented film. In this case, the amount of coating solution to be applied [the amount to be attached to a substrate film] for both of the intermediate refractive index layer and the second adhesion modifying layer is preferably 0.01 to 5 g, more preferably 0.2 to 4 g, per $m^2$ of a running biaxially oriented laminated polyester film [or an intermediate product of the biaxially oriented laminated polyester film].

For example, when a biaxially oriented laminated polyester film is prepared by the successive biaxially stretching method, and each of the above-described coating solution is applied after monoaxial stretching (to a monoaxially oriented film) at the step of preparing a biaxially oriented laminated polyester film, the monoaxially oriented film after application is introduced to a tenter for stretching and heat fixation, and heated therein, so that a substrate film is obtained in which stable films [an intermediate refractive index layer and a second adhesion modifying layer] are formed by the thermal crosslinking reaction.

From the viewpoint of further enhancement of the adhesion between the hard coated layer of an anti-reflective layer and an intermediate refractive index layer, and the adhesion (of an intermediate refractive index layer or a second adherability modifying layer) to the near-infrared ray absorption layer, it is desirable to carry out heat treatment at a temperature of 100°C or higher for 1 minute or longer after the application of a coating solution.

In addition, as the environment for the application of a coating solution for forming an intermediate refractive index layer or a coating solution for forming a second adhesion modifying layer, it is desirable to attain the clean degree is class 1,000 or lower in order to reduce the attachment of dusts.

[Sticky layer]

When the near-infrared ray absorption film of the present invention is used as a near-infrared ray absorption filter, it is desirable that the film is provided with a sticky layer for attaching and fixing the film to the surface of a plasma display panel or an electromagnetic shutting off layer (described later). For this reason, a sticky layer is formed on the surface of a near-infrared ray absorption layer. A transparent sticking agent used in this sticky layer is not particularly limited, but sticking agents well known in the art can be used. Examples thereof include acryl type sticking agents such as butyl acrylate; rubber type sticking agents; and sticking agents based on thermoplastic elastomers (TPEs) such as SEBS (styrene-ethylene-butadiene-styrene) and SBS (styrene-butadiene-styrene). It is preferable that the surface of a sticky layer is protected with the well-known separator film (silicone-treated PET film or the like) until the use of the sticky layer.

[Properties of near-infrared ray absorption film]

The preferable properties of the near-infrared ray absorption film of the present invention will be explained below. These properties can be secured by the film of the present invention employing the above-described structure.

As described above, the near-infrared ray absorption film of the present invention is required to have great absorption in the near-infrared region and, at the same time, the film has preferably a high transmittance in the visible light region. Specifically, it is recommended that the light transmittance in the wavelength region of 450 to 650 nm is 55% or higher, more preferably 60% or higher, and the light transmittance in the wavelength region of 820 to 1,100 nm is 20% or lower, more preferably 15% or lower.

In a front filter for plasma displays using the near-infrared ray absorption film of the present invention, as described above, it is also possible to improve the color balance of an image displayed on the display by absorbing a specific wavelength selectively so that the transmittance in the wavelength region of 550 nm to 600 nm becomes 10% to 60% and the transmittance in the wavelength region of 820 nm to 1,100 nm becomes 20% or lower, using a color correcting dye having the maximum absorption in the range of a wavelength of 550 to 620 nm. The transmittance in the wavelength region of 550 nm to 600 nm is more preferably 15% to 50%, particularly preferably 18% to 45%. In addition, the transmittance in the wavelength region of 820 nm to 1,100 nm is more preferably 15% or lower.

In particular, in the case where a first adhesion modifying layer is used, even when the near-infrared ray absorption film of the present invention is allowed to stand for a long term at a high temperature under a high humidity, a change in the spectroscopic properties and color tone thereof is extremely suppressed and, specifically, the film becomes to have the following properties.

Regarding the spectroscopic properties, it is recommended that the maximum of the change amount V (%) of a transmittance represented by the following equation (1) is 7% or smaller, more preferably 5% or smaller.

$$V = 100 \times |T_{0(WL)} - T_{1(WL)}|/T_{0(WL)} \quad ...(1)$$

wherein $T_{0(WL)}$ and $T_{1(WL)}$ are transmittances of a film at a wavelength of WL, and mean values measured before the storage ($T_{0(WL)}$) for 500 hours at a temperature of 60°C under a relative humidity of 95% and after the storage ($T_{1(WL)}$), respectively, and WL represents each wavelength in the range of 450 nm to 1,100 nm.

That is, this means that, regarding a film before and after the storage under the conditions of a temperature: 60°C, a relative humidity: 95%, and a time: 500 hours, when the transmittance of light at each wavelength in the range of 450 to 1, 100 nm is measured, the change amount V at a wavelength where a change in transmittance is greatest is 7% or smaller. When the maximum of a change amount V is greater than the above-described upper limit, there is a tendency that a change in color tone becomes remarkable when a film is compared between before and after the storage.

Regarding a color tone, it is recommended that a difference Δb* in the color coordinate b* of the L*a*b* color coordinate system represented by the following equation (2) is not smaller than -3 and not greater than 3, more preferably not smaller than -2 and not greater than 2.

$$\Delta b^* = b^*_1 - b^*_0 \quad ...(2)$$

wherein $b^*_0$ and $b^*_1$ are the b*s of a film obtained from transmitted light, and represent values measured before the storage ($b^*_0$) for 500 hours at a temperature of 60°C under a relative humidity of 95% and after the storage ($b^*_1$). The "color coordinate b* of the L*a*b* color coordinate system" means b* defined by CIE 1976 (L*a*b* color space).

When Δb* is outside the above-described range, there is a tendency that a change in color tone becomes remarkable when a film is compared between before and after the storage. In addition, it is meant that as b* becomes negatively greater, it grows bluish and, as b* becomes positively greater, it grows yellowish. [Properties of near-infrared ray absorption film roll]

The properties of a near-infrared ray absorption film roll on which a long film which is the near-infrared ray absorption film of the present invention and has a length of 100 m or longer and a width and 0.5 m or wider is wound, will be explained below.

The long film wound on this roll has the maximum of a color difference ΔE (MD) in the longitudinal direction (MD) of the film measured by the following measuring method (A) of 2.0 or smaller.

(A) In the measurement of a color tone of the film, regarding a longitudinal direction (MD) of the above-described film, letting one end of a steady region where the film properties are stabilized to be a first end and letting the other end to be a second end, first measurement is carried out within 2 m on the inner side of the first end, and final measurement is carried out within 2 m on the inner side of the second end and, at the same time, measurement is carried out every about 10 m from the first measurement part, and a color difference ΔE (MD) defined by the following equation (3) is calculated at each measurement part.

$$\Delta E\ (MD) = [(L_a - L_m)^2 + (a_a - a_m)^2 + (b_a - b_m)^2]^{1/2} \quad ...(3)$$

wherein $L_m$, $a_m$, and $b_m$ mean color tones L, a, and b at each measurement part, respectively, and $L_a$, $a_a$, and $b_a$ mean averages of color tones L, a and b, respectively, at all measurement parts.

In addition, the maximum of a color difference ΔE (TD) regarding the width direction of a film (direction perpendicular to the longitudinal direction of a film; TD) obtained by the following measuring method (B) is 1.0 or smaller.

(B) In the measurement of a color tone of the above-described film, regarding the width direction (TD) of the film, letting one end of a steady region where the film properties are stabilized to be a first end and letting the other end to be a second end, first measurement is carried out within 0.1 m on the inner side of the first end, and final measurement is carried out within 0.1 m on the inner side of the second end and, at the same time, three parts measurement is carried out at approximately equal intervals between the first measurement part and the final measurement part, and a color difference ΔE (TD) defined by the following equation (4) is calculated at these five measurement parts.

$$\Delta E\ (TD) = [(L_a - L_m)^2 + (a_a - a_m)^2 + (b_a - b_m)^2]^{1/2} \quad ...(4)$$

wherein $L_m$, $a_m$, $b_m$, $L_a$, $a_a$, and $b_a$ have the same meanings as those in the case of the above (A).

The reason why a color tone is measured in the steady region of a film is as follows: the film of the present invention is prepared by way of the step of applying a coating solution for forming a near-infrared ray absorption layer on a transparent substrate, followed by drying, as described later, and film properties may vary in some cases until operations at the step of applying a coating solution and the step of drying are stabilized. The present invention is not based on the technical idea of making uniform color differences ΔE (MD) and ΔE (TD) of a film obtained when operations at the above-described application step and the drying step are unstable, but it has an intention to make uniform a color difference Δ more highly than previous ones in a film having stabilized physical properties obtained where operations at these steps are stabilized and preparation falls into the steady state.

The number of steady regions where film physical properties are stabilized (parts of a film obtained when preparation falls into the steady state) is usually only one part (including the case where there is one part over a film full length) in a film. However, steady regions can be present at a plurality of parts depending on the preparation circumstances, in which case color tone measurement may be carried out only at the steady regions. In addition, the above-described steady region can be evaluated, for example, by the value of a color difference Δ. That is, a stabilized region where a color difference Δ is 2 or smaller may be regarded as a steady region.

The color tone measurement is carried out by irradiating the side of a near-infrared ray absorption layer with light using a color difference meter (ZE-2000 available from Nippon Denshoku Industries Co., Ltd.) and a D65 light source as standard light at a field angle of 10 degrees, to obtain the L value, the a value, and the b value in the Lab color coordinate system. For color tone measurement, a method of cutting out a measurement sample at each of the above-described measurement parts, and measuring the color tones of these samples and, in the case of color tone measurement in the longitudinal direction, an on-line measuring method can also be used, in which a film is wound up into a film roll, extracting the film from the film roll, and measuring while the film is wound up on another roll.

The color difference ΔE (MD) in the longitudinal direction is obtained by the following measuring method.

First, the color tone measurement of a film is carried out. The color tone measurement is carried out at the steady regions where film physical properties are stabilized, in the longitudinal direction of the film and, letting one end of a steady region to be a first end and the other end to be a second end, first measurement is carried out within 2 m on the inner side of the first end, and final measurement is carried out within 2 m on the inner side of the second end and, at the same time, measurement is carried out every about 10 m from the first measurement part.

As a measuring site of a film at each of the measurement parts, it is preferable to set the same position in the width direction of a film. For example, it is meant that, when color tone measurement is carried out at a central part in the film width direction at a first measurement part, color tone measurement is also carried out at the central part in the film width direction at a second or later measurement part. If the sites for the measurement of a color tone in the film width direction are not set as the same position, a variation in the color tone in the longitudinal direction cannot correctly be evaluated in some cases.

The L value is a measure indicating brightness, and means that when its numerical value is greater, blackening is smaller and brightness is higher. The a value is a measure indicating reddishness and, when its numerical value is greater, reddishness is strengthened and, when its numerical value becomes greater on the minus side, greenishness is strengthened. The b value is a measure indicating yellowishness and, when its numerical value is greater, yellowishness is strengthened and, when its numerical value becomes greater on the minus side, bluishness is strengthened.

The L value, the a value, and the b value are obtained at each of the measurement parts, and a color difference ΔE (MD) at each of the measurement parts is calculated by the above equation (3). In the thus obtained color differences ΔE (MD) at the respective measurement parts, the color difference indicating the maximum value must be 2.0 or smaller.

In a film having the maximum of a color difference ΔE (MD) greater than the above-described upper limit, a variation in the color tone in the longitudinal direction of a film is great, a color tone is difference between products (between filters) in many filters for plasma displays obtained from the film, and it becomes difficult to provide a filter for plasma displays having stable quality. The maximum of a color difference ΔE (MD) is more preferably 1.0 or smaller, further preferably 0.5 or smaller.

The color tone of a film is preferably such that, for example, the above a value is not smaller than -10.0 and not greater than +10.0, and the above b value is not smaller than -10.0 and not greater than +10.0. When the a value and the b value are within such ranges, a natural color is obtained even when the film is used in a filter for plasma displays. The adjustment of such a color tone can be attained by the kind of near-infrared ray absorbing dye, the concentration of the near-infrared ray absorbing dye per unit area of a near-infrared ray absorption layer when viewed as a plane, and, further, mixing with other dyes. The film of the present invention may be prepared, as described later, into a filter for plasma displays by providing other optical films or sticky layers on the front and/or back faces thereof in

some cases and, when such layers and the like are provided, it is desirable to adjust a color tone of a film containing them so as to give a natural color.

A higher L value is preferable. When the L value is higher, a bright plasma display can be provided when the film is prepared into a filter for plasma displays. The L value is preferably 80 or greater, more preferably 85 or greater.

In addition, in the film width direction (TD), the maximum of a color difference ΔE (TD) obtained by the above-described measuring method (B) is 1.0 or smaller, more preferably 0.5 or smaller. In this respect, the ends in the measuring method (B) are the ends in the width direction.

In the case of a film in which a variation in the color tone in the longitudinal direction is suppressed and, at the same time, a color difference ΔE (TD) in the width direction is the above-described upper limit or smaller, a lack of color tone uniformity between products (between filters) is suppressed in many filters for plasma displays obtained from the film and, in addition, a lack of color tone uniformity is highly suppressed in individual products, and it becomes possible to provide a filter for plasma displays having higher quality. That is, in a film having a color difference ΔE (TD) in the film width direction is greater than the above-described upper limit, this may become a cause for a lack of color uniformity on a display screen in some cases when the film is prepared into a filter for plasma displays.

Such the near-infrared ray absorption film in which a variation in color tone is suppressed (i.e., the maximums of a color difference ΔE (MD) in the longitudinal direction of the film and a color difference ΔE (TD) in the film width direction of the film are controlled at the above-described upper limit or smaller) can be obtained by employing the following preparing process.

[Process for preparing near-infrared ray absorption film and film roll]

The following will describe suitable processes for preparing the near-infrared ray absorption film of the present invention and for preparing the film roll of the present invention in which a long film is wound up.

For preparing a near-infrared ray absorption film, there can be employed, for example, a method of continuously forming a near-infrared ray absorption layer on a transparent substrate film (hereinafter referred to simply as the transparent substrate in some cases) by the step of applying a coating solution for a near-infrared ray absorption layer containing a near-infrared ray absorbing dye, a resin, a surfactant, and an organic solvent on the transparent substrate film, and the step of continuous drying it. The layers (first adhesion modifying layer and the like) which may be provided between the transparent substrate and the near-infrared ray absorption layer are formed before the formation of the near-infrared ray absorption layer, by the formation methods explained for each of the layers.

A film in which a variation in color tone is suppressed over the longitudinal direction of the film, that is, a film in which the maximum of a color difference ΔE (MD) obtained by the above measuring method (A) is controlled at the above-described upper limit or smaller can be obtained by measuring the color tone and/or light transmittance at a specific wavelength of the film on the on-line system, and adjusting the application condition and/or drying condition of a coating solution depending on the results of the measurement.

Examples of the application condition include the adjustment of the application amount of a coating solution. Since the application amount of a coating solution has an influence on the L value of a film, for example, the color tone of a film during preparation is monitored at any time on the on-line system and, when the L value is high, the application amount of a coating solution is changed to be increased and, on the other hand, when the L value is low, the application amount of a coating solution is changed to be decreased. If a variation in color tone (L value) after the change is stopped, the preparation of a film is continued at that application amount and, if not so, the application amount is changed again.

The application amount of a coating solution, for example, when application is carried out with a reverse gravure coating apparatus described later, can be adjusted by changing the rate ratio G/F of the rotation rate G of a gravure roll to the running rate F of a film, as well as the contact pressure and contact angle of a doctor blade relative to the gravure roll. That is, in order to increase the application amount, adjustment may be carried out towards the greater G/F, the smaller contact pressure of a doctor blade, and the smaller contact angle of a doctor blade. In addition, in order to decrease the application amount, adjustment may be carried out towards the smaller G/F, the greater contact pressure of a doctor blade, and the greater contact angle of a doctor blade. The adjustment of the application amount of a coating solution may be carried out by changing any one of the conditions, or by changing a plurality of the conditions.

Examples of the drying condition include the adjustment of a drying efficacy. Since a change in drying efficacy has an influence on the a value and b value of a film, for example, the color tone of a film during preparation is monitored at any time on the on-line system and, when the a value or b value is changed, the adjustment of a drying efficacy is carried out. As the method of adjusting a drying efficacy, the running rate (drying time) of a film, the temperature of drying air, or the air flow (air rate) may be controlled. That is, in order to progress drying more, control may be carried out towards the decrease in the running rate of a film, the elevation of the temperature of drying air, and the increase in air flow. On the other hand, in order to drop a degree of drying more, control may be carried out towards the increase in the running rate of a film, the lowering of the temperature of drying air, and the decrease in air flow. The adjustment of a drying efficacy may be carried out by changing any one of the conditions or changing of a plurality of the conditions.

For example, when the a value is high and/or b value are low, adjustment may be carried out so as to increase a drying efficacy and, on the other hand, when the a value is low and/or the b value is high, adjustment may be carried out so as to drop a drying efficacy.

For measuring a color tone at the preparation of a film, the same method as that of color tone measurement for calculating a color difference ΔE of a film can be employed.

In addition, when management at the preparation of a film is carried out by a light transmittance at a specific wavelength, the light transmittance at the specific wavelength is monitored at any time on the on-line system and, when a variation in transmittance is seen, the application condition and/or drying condition may be controlled so as to stabilize this variation. For example, in the case of a variation towards a greater light transmittance, the application amount of a coating solution is changed towards its increase and, in the case of a variation towards a smaller light transmittance, the application amount of a coating solution may be changed towards its decrease. As the method of adjusting the application amount of a coating solution or the drying efficacy, the method explained in the case of monitoring a color tone on the on-line system can be employed.

The light transmittance at a specific wavelength can be measured, for example, by irradiating light at a specific wavelength from the near-infrared ray absorption layer side, and measuring the transmittance using a spectrophotometer (MCPD-3000, available from Otsuka Electronics Co., Ltd.) and employing the transmittance of air in the room as the reference value (blank).

As the method of applying a coating solution on a transparent substrate, for example, various methods exemplified above can be employed, the application method by the gravure coating system is preferable and, particularly, the application method by the "reverse gravure coating system" by which a coating solution is scraped up from a liquid supplying pan with a reversely rotating gravure roll, and an excess coating solution is scraped down with a doctor blade is suitable. By employing such a gravure coating system, particularly, a reverse gravure coating system, it becomes possible more uniform application. In addition, in order to uniformly apply in the width direction as described later, the kiss coating system is suitable. Fig. 1 shows an apparatus employing the reverse gravure coating system (reverse gravure kiss coating apparatus). The near-infrared ray absorption layer is essentially a continuous layer. Therefore, the near-infrared ray absorption layer is also a continuous layer by the gravure coating system.

In the above-described reverse gravure coating apparatus, it is preferable to use a gravure roll having a diameter of 80 mm or smaller. When the diameter is great, ridge streaks can easily be generated in the running direction of a film. As the doctor blade used in the reverse gravure coating apparatus, any of the well-known ones can be used, and a doctor blade having a surface at least at a part coming in contact with a gravure roll [a blade tip part coming in contact with a coating solution on the gravure roll] made of a ceramic is recommended since it is abraded with difficulty, and easily stabilizes the application amount of a coating solution. Of course, a doctor blade entirely of a ceramic is preferable. Besides, a doctor blade obtained by plating the surface of a Swedish steel with a nickel (corresponding to a doctor blade having a part coming in contact with the gravure roll, which part is made of nickel) is also suitable since it is abraded with difficulty, although it is inferior as compared with a doctor blade made of a ceramic.

In the reverse gravure coating apparatus, examples of an element for controlling the application amount include the rotation number of a gravure roll relative to the running rate of a film, the angle at which a doctor blade is brought into contact with the film, and the pressing pressure of a doctor blade, as described above. In order to increase the application amount, it is preferable to increase the rotation number of a gravure roll. It is preferable to control the rate ratio G/F of the rotation rate G (m/min) of a gravure roll to the running rate F (m/min) of a film at not smaller than 0.8 and not greater than 1.5, from the viewpoint of the stabilities with time of the transfer of a gravure mesh, the coating defects, and the application amount. The lower limit of the rate ratio G/F is more preferably 0.9. The upper limit of the rate ratio G/F is preferably 1.2, more preferably 1.1. When the rate ratio G/F is too small, the transfer amount is decreased, and the gravure mesh is not leveled, and can easily remains. On the other hand, when the rate ratio G/F is too great, the coating defects such as traverse step spots and bubble streaks can easily be generated, and in addition, the doctor blade can easily be abraded, and the stability with time of the application amount is deteriorated more frequently. The rotation rate F (m/min) of a gravure roll can be calculated by multiplying the rotation number of a gravure roll (rotation number/min: rpm) with a circle circumference of the gravure roll [ratio of circle circumference to its diameter × roll diameter (mm)], and converting the obtained value into a unit of m/min.

The angle at which a doctor blade is brought into contact with a coating solution on the gravure roll is preferably 20° to 70° in terms of an inner angle. When the angle is too small (situation where a gravure roll is held by the thickest part of a doctor blade), the force of scraping a coating solution on the gravure roll surface is decreased, the application amount is increased, and in addition, although the abrasion of a doctor blade is generated with difficulty, vibration can easily be generated in the doctor blade, and the appearance of a near-infrared ray absorption layer can easily be deteriorated. On the other hand, when the angle is too great (situation where a doctor blade is pierced into a gravure roll), the force of scraping a coating solution on the gravure surface is improved, the application amount is decreased, and the vibration of a doctor blade is generated with difficulty, but a problem arises that a doctor blade can easily be abraded.

It is preferable to adjust the contact pressure of a doctor blade to such an extent that the blade is slightly bended in that the application amount in the film width direction can be made uniform.

In addition, in order to suppress a variation in the color tone in the film width direction to control a color difference ΔE (TD) in the width direction at the above-described upper limit or smaller, it is preferable to carry out the application of a coating solution for forming a near-infrared ray absorption layer by the kiss coating system, while a tension in the longitudinal direction at the applied part on a transparent substrate is controlled at not smaller than 0. 5 $N/mm^2$ and not greater than 1.2 $N/mm^2$ (more preferably not greater than 1.0 $N/mm^2$).

In the kiss coating system, at the time of application, only one side (application side) of a transparent substrate is brought into contact with a coating roll for applying a coating solution, and the other side is in the free state (the state where it is brought into contact with nothing). In the application of a coating solution, due to the contacts of the application side and opposite side of a transparent substrate with rolls, in the case where foreign matters are attached to the surface of the rolls, or in the case where fine projections are formed on the surface of the rolls, these may also have an influence on the appearance of a near-infrared ray absorption layer in some cases. However, since such an influence can be avoided by employing the kiss coating system, the appearance of a near-infrared ray absorption layer can be made more uniform.

In order to stably apply a coating solution on a transparent substrate by employing the kiss coating system, rolls are disposed before and after the application part of a transparent substrate, a tension is applied in the longitudinal direction of the transparent substrate to maintain the planarity of the application part and, by controlling a tension at that time in the above-described range, since a coating solution can be applied uniformly in the width direction of the transparent substrate, a variation in the color tone in the film width direction can highly be suppressed. When the above tension is too low, the running property of a transparent substrate is deteriorated, meandering can easily be generated, the uniformity of the application of a coating solution is deteriorated over the film width direction, and a variation in color tone can easily be generated in the film width direction. On the other hand, when the above tension is too high, since a transparent substrate is shifted to the central parts of rolls (rolls before and after the application part), a corrugated iron sheet-like corrugation is generated parallel with the running direction (longitudinal direction), and the uniformity of contact between the kiss roll (coating roll) and the transparent substrate is deteriorated in the width direction of the transparent substrate, a variation in the color tone in the film width direction may conversely be increased in some cases.

The tension in the longitudinal direction at the application part of a transparent substrate can be controlled by adjusting a balance between the rotation numbers of rolls disposed before and after the application part. In addition, the above tension at film running can be measured, for example, by the general method of measuring a load on a roll with a load cell.

As described above, in the preparation of the film of the present invention, as the method of applying a coating solution on a transparent substrate film, the reverse gravure coating system is preferable and, at the same time, from the viewpoint of the suppression of a color tone variation in the film width direction, the kiss coating system is preferable. Therefore, as the application system, the reverse gravure kiss coating system using a reverse gravure kiss coating apparatus shown in Fig. 1 is most preferable.

The application amount of a coating solution is not particularly limited, but the amount after drying of not smaller than 1 $g/m^2$, more preferably not smaller than 3 $g/m^2$, and not greater than 50 $g/m^2$, more preferably not greater than 30 $g/m^2$, is recommended. When the application amount is too small, the ability of absorbing a near-infrared ray may be deficient in some cases. For this reason, it becomes necessary to increase the concentration per unit area of a near-infrared ray absorption layer when viewed as a plane to adjust the near-infrared ray absorbing ability at an objective level; in this case, since a distance between dyes becomes short, interaction between dyes is strengthened and, as a result, there is a tendency that the dyes can easily be deteriorated, and stability is decreased with time.

On the other hand, when the application amount is too great, the near-infrared ray absorbing ability becomes sufficient, but since there is a tendency that the transmittance in the visible region is reduced, and the transparency is reduced; therefore, the luminance may be decreased in some cases in plasma display in which such a near-infrared ray absorption film is applied. In order to avoid this problem, it is thought that the transmittance in the visible light region is enhanced by decreasing the dye concentration of a near-infrared ray absorption layer when viewed as a plane to increase a distance between dyes; however, the thickness of a near-infrared ray absorption layer must be increased for this purpose, and drying after the application of a coating solution can easily become insufficient. As a result, the amount of solvent remaining in a near-infrared ray absorption layer is increased, the stability of a dye with time is deteriorated and, particularly, when stored for a long term at a high temperature under a high humidity (e.g., 60°C, relative humidity 95%, 500 hours), there is a tendency that changes in the transmittance and color tone of film become increased. On the other hand, when drying condition is made to be strict by elevating a temperature in drying or lengthening a time in drying, for example, not only dyes weak to heat (diimmonium salt compounds and the like) can easily be denatured, and deterioration in the planarity of a transparent substrate due to heat can easily be generated.

For drying after the application of a coating solution, any of the well-known drying methods, such as hot air drying, and drying with an infrared heater, can be employed, and hot air drying having a high drying rate is preferable.

In order to decrease the amount of remaining solvent, while denaturation of a near-infrared ray absorbing dye is suppressed, it is recommended to carry out the multi-stage hot air drying step containing two or more stages.

In a first stage drying step (constant rate drying step), the hot air temperature, the drying time, and the air flow are important. Specifically, it is preferable that the drying temperature is set at 20 °C to 80°C. When the drying temperature is lower than 20°C, drying can easily become insufficient. Therefore, the lower limit of the drying temperature in the first stage drying step is preferably 30°C, particularly preferably 35°C. On the other hand, the drying temperature is higher than 80°C, since a solvent in the coated film is unevenly evaporated, a lack of application uniformity can easily be generated. Therefore, the upper limit of the drying temperature in the first stage drying step is more preferably 75°C, particularly preferably 70°C.

In addition, it is preferable that the drying time in the first stage drying step is not shorter than 10 seconds and not longer 120 seconds. When the drying time is shorter than 10 seconds, since the amount of solvent evaporated at a later stage drying step is increased, and a solvent in the coated film is unevenly evaporated, a lack of application uniformity can easily be generated. On the other hand, when the drying time is longer than 120 seconds, the evaporation of a solvent is suppressed, and a coated film during formation is retained in the sticky state. For this reason, foreign matters are attached to the coated film, and the appearance thereof can easily be deteriorated.

Further, it is preferable that the air flow in the first stage drying step is not lower than 0.5 m/second and not higher than 30 m/second. When the air flow is lower than 0. 5 m/second, since the drying rate is slowed, and drying takes a long time, productivity is deteriorated. A more preferable air flow is 2 m/second or higher. On the other hand, when the air flow is higher than 30 m/second, since a solvent in the coated film is unevenly evaporated, a lack of application uniformity can easily be generated.

In the drying steps at the second or later stage, a drying step having the highest drying temperature (falling rate drying step) is a particularly important step for decreasing the amount of solvent remaining in a near-infrared ray absorption layer to 5.0% by mass or smaller, preferably 3. 0% by mass or smaller, and the amount of remaining solvent can be controlled by the hot air temperature, the drying time, and the air flow, and it is preferable that the following equations (5) to (7) are met simultaneously. In the following equations (5) to (7), the unit of air flow is m/sec., the unit of hot air temperature is °C, the unit of drying time is min., and the unit of coating thickness is $\mu$m.

$$\text{Air flow} \times (\text{hot air temperature} - 20) \times \text{drying temperature}/\text{coating thickness} > 48 \quad \ldots(5)$$

$$\text{Hot air temperature: } 80 \text{ to } 180 \quad \ldots(6)$$

$$\text{Drying time: } 0.083 \text{ to } 60 \quad \ldots(7)$$

It is preferable that the hot air temperature in the drying step having the highest drying temperature is higher than the hot air temperature in the first stage drying step, and is in the range of not lower than 80 °C and not higher than 180°C. The lower limit is further preferably 100°C, more preferably 120°C. The upper limit is further preferably 170°C. It is particularly preferable that the above-described hot air temperature is not lower than the glass transition temperature of a resin forming a near-infrared ray absorption layer. When the temperature of air is too low, it becomes difficult to decrease the amount of solvent remaining in a near-infrared ray absorption layer. When the drying temperature is higher than 180°C, a problem may easily arise that deterioration of a dye becomes remarkable, the deformation of a substrate film becomes great, thermal wrinkles are generated on a substrate, and planarity can easily be deteriorated. It is preferable that the drying time in this step is not shorter than 5 seconds and not longer than 60 minutes. The lower limit is further preferably 10 seconds, particularly preferably 20 seconds. On the other hand, the upper limit is further preferably 30 minutes, particularly preferably 15 minutes.

In addition, the hot air rate in the drying step having the highest drying temperature is preferably 0.5 to 40 m/sec. The lower limit is further preferably 1.0 m/sec., particularly preferably 2.0 m/sec. On the other hand, the upper

limit is further preferably 30 m/sec., particularly preferably 20 m/sec.

By employing such a multiple-stage drying step, the amount of remaining solvent can be decreased, while the denaturation of a near-infrared ray absorbing dye is suppressed. That is, in the constant rate drying step at the first stage, since drying is carried out under relatively mild conditions, a solvent is uniformly evaporated from a coated film for forming a near-infrared ray absorption layer and, at the same time, and a surfactant is localized on the coated film surface, a near-infrared ray absorption layer having a uniform surface can be formed. As a result, it becomes possible to obtain a film having a small lack of application uniformity.

When this first stage drying is carried out under the severe conditions (the air temperature is higher, and the air flow is greater), the localization of a surfactant on the coated film surface becomes to hardly occur. As a result, not only the effect of improving durability or imparting slidability is exhibited with difficulty, but also fine defects such as fine lacks of application derived from bubbles contained in a coating solution, fine repulsion, and cracks can easily be generated in a near-infrared ray absorption layer.

In contrast, when the initial drying is carried out under too mild conditions (the hot air temperature is lower, and the air flow of hot air is smaller), the appearance of a coated film becomes better, the drying time is long, and the cost is problematic, and problems such as brushing may easily arise.

In the near-infrared ray absorption film, a lack of application uniformity of a near-infrared ray absorption layer is particularly striking when a difference between the thick parts and the thin parts is great in a narrow area, a film having a small lack of application uniformity is desirable. A lack of application uniformity was evaluated by cutting out a 15 cm square film sample from a long near-infrared ray absorption film, measuring L* of the L*a*b* color coordinate system regarding nine samples in total cut out into 5 cm squares, and carrying out the evaluation by a difference between the maximum and minimum of the measured values of nine L*s. A smaller difference in L*s means that there is a little lack of application uniformity. In the present invention, when a difference of L*s is smaller than 2.0, the film can be used from a practical point of view, and the difference is further preferably 1.5 or smaller, particularly preferably 1.0 or smaller. In the falling rate drying step having the highest drying temperature, it becomes possible to further improve the moist heat resistance of a near-infrared ray absorbing dye in a resin by reducing the amount of remaining solvent.

Thereafter, it is preferable to carry out a cooling step. The cooling step is the final step of a drying step. In this step, it is preferable that a film is cooled with air at a temperature of Tg of a resin (resin in a near-infrared ray absorption layer) or lower, so that the temperature of a transparent substrate is Tg of a resin or lower in the state where a film is flat. The more preferable temperature of wind is Tg - 5°C or lower, and the further preferable temperature is Tg - 10°C or lower. In the case where a film at a high temperature is put out from a drying furnace, slidability is deteriorated when the surface of a near-infrared ray absorption layer is brought into contact with a film running roll until winding up, flaws can easily be generated on the surface of the layer, and curls may be generated on a film in some cases. In the cooling step, it is preferable that the air flow is, for example, 2 to 50 m/sec., and it is desirable that the cooling time is, for example, 5 to 120 seconds.

In the drying step, it is preferable to carry out control so that the drying state is stabilized over a film full length. When the drying state varies, for example, since a dye can easily be deteriorated at a place where the amount of solvent remaining in a near-infrared ray absorption layer, a color tone may vary in the longitudinal direction of a film in some cases. In particular, at the initial stage of application, since the amount of solvent evaporated in a drying furnace is increased, and the amount is gradually stabilized, a drying efficacy can easily be changed until about 500 m from the initiation of application. In order to stabilize a drying efficacy, this can be controlled by adjusting the drying temperature, the air flow (air rate) of air (hot air), and the drying time.

It is preferable that the drying temperature is controlled within a range of, for example, ±2°C relative to the preset temperature, and it is preferable that temperature control is carried out precisely and, at the same time, after the actual temperature in a drying furnace reaches the preset temperature, this is allowed to stand, for example, for 30 minutes or longer and, after the drying temperature is stabilized, a film is prepared. In order to precisely control the temperature and the air flow of air, and a heater or a blower with a high precision may be used and, regarding the drying time, a driving device with a high precision may be used.

The near-infrared ray absorption film obtained by the above-described preparing process is wound up on a winding core (a core of a paper tube or a metal tube) into a roll, which is the near-infrared ray absorption film roll of the present invention. Of course, when the near-infrared ray absorption film has layers other than a near-infrared ray absorption layer, these layers may conveniently be formed on the film by any of the methods suitable for the formation of each of the layers.

[Laminated structure of near-infrared ray absorption film]

Examples of the laminated structure of the near-infrared ray absorption film of the present invention are shown in Figs. 2 to 4. In Figs. 2 to 4, 10 denotes a substrate film, 20 denotes a first adhesion modifying layer, and 30 denotes a near-infrared ray absorption layer. As shown in Fig. 2 or 3, it is enough that at least one near-infrared ray absorption

layer 30 is present, and it is not necessarily necessary to provide the layers on both sides of the film. For example, as shown in Fig. 3, a first adhesion modifying layer 20 is provided on both sides of a substrate film 10, a near-infrared ray absorption layer 30 is formed on one surface of a first adhesion modifying layer 20, and a functionality imparting layer (e.g., ultraviolet absorption layer, electromagnetic shutting off layer, anti-reflective layer, or the like) other than the near-infrared ray absorption layer may be provided (these functionality imparting layers are not shown) on the other first adhesion modifying layer 20 with a sticky layer (not shown) separately provided, if necessary, being interposed. In addition, in place of the first adhesion modifying layer 20 on the underside of a substrate film 10, an intermediate refractive index layer or a second adhesion modifying layer may be provided, and an anti-reflective layer may be provided on the lower side thereof.

Other function imparting layers which can further be formed on the near-infrared ray absorption film of the present invention will be explained by way of typical examples. For example, when the film of the present invention is applied to display use, an electrically conductive layer may be provided as an electromagnetic shutting off layer for the purpose of removing a harmful electromagnetic wave released from a display. Examples of the electrically conductive layer include a metal mesh and a transparent electrically conductive thin film.

In the case of a metal mesh, it is desirable to use a metal mesh having an opening rate of 50% or higher. When the opening rate of a metal mesh is low, electromagnetic shutting property becomes better, but a visible light transmittance may become insufficient in some cases. Examples of the metal mesh include meshes obtained by the etching treatment of a metal foil having high electric conductivity, and woven fabric-like meshes using a fiber obtained by attaching a metal on the surface of a metal fiber or a polymer fiber by the plating method. The metal which can be used in metal meshes is not particularly limited, so far as it has high electric conductivity and better stability, and any metal can be used, but copper, nickel and tungsten are recommended from the viewpoints of processability and cost.

In the case of a transparent electrically conductive thin film, the film is not particularly limited, so far as it can maintain such transparency that sufficient visible light transmittance can be maintained, and electric conductivity, but for example, it is recommended to use a thin film formed from a metal oxide such as tin oxide, indium oxide, zinc oxide, titanium oxide, bismuth oxide, ITO (In-Sn composite oxide), or FTO (tin oxide doped with fluorine).

It is desirable that the thickness of a transparent electrically conductive thin film is not smaller than 100 Å, and not greater than 1,000 Å, more preferably not greater than 500 Å. When the thickness of a transparent electrically conductive thin film is smaller than the above range, the effect of using a layer made of the thin film cannot sufficiently be maintained in some cases. On the other hand, when the thickness of a transparent electrically conductive thin film is higher the above range, there is a tendency that the color tone of a film is changed due to coloring of the thin film.

In addition, when the conductivity of the above-described transparent electrically conductive thin film is enhanced and this thin film is applied to the film of the present invention, laminated structures of three layers or more, such as metal oxide/metal/metal oxide, are preferable. The inclusion of a metal as a constituent element makes it possible to secure excellent conductivity, while high visible light transmittance is maintained. The metal to be laminated is preferably gold, silver, and a compound containing them are preferable, from the viewpoint of an improvement in conductivity. It is preferable that the total thickness of a transparent electrically conductive thin film in this case is in the above-described range of the preferable thickness of a transparent electrically conductive thin film. In addition, it is desirable that the thickness of a laminated metal is not smaller than 50 Å, and not greater than 200 Å, more preferably not greater than 100 Å. When the thickness of a metal is smaller than the above range, the effect of forming this as a layer is not sufficiently secured and, on the other hand, when the thickness is greater than the above range, the visible light transmittance of a film is reduced.

When a transparent electrically conductive thin film is made to be a laminated structure as described above and, for example, is of five layers, such as metal oxide/metal/metal oxide/metal/metal oxide, it is preferable that the thickness of the central metal oxide is greater than the thicknesses of other metal oxides. Such a laminated structure can improve the visible light transmittance of an entire transparent electrically conductive thin film.

[Use of near-infrared ray absorption film]

The near-infrared ray absorption film of the present invention, for example, when disposed on the front of a plasma display as a near-infrared ray absorption filter, can absorb an unnecessary near-infrared ray emitted from the display. Therefore, when a remote control for operating a plasma display is of the near-infrared system, the erroneous motion of the remote control due to a near-infrared ray emitted from the display can be prevented.

[Near-infrared ray absorption filter]

The near-infrared ray absorption film of the present invention explained above is used as a near-infrared ray absorption filter. In this near-infrared ray absorption filter of the present invention, it is preferable that the above-described electrically conductive layer is provided. This electrically conductive layer is provided so as to be positioned between

the near-infrared ray absorption layer of the film and the plasma display panel. For example, it is a preferable embodiment that the layer is formed on the near-infrared ray absorption layer side with a sticky layer being interposed. The sticky layer for attaching a filter to a plasma display panel may be provided on the uppermost surface of the filter.

Experiment 1

Experiment 1-1

1. Manufacturing of substrate film

A polyethylene terephthalate resin having an intrinsic viscosity of 0.62dl/g was fed to a biaxial screw extruder, melt extruded through a T-die at 290°C, and adhesion-solidified while static electricity application was imparted on a cooling rotation metal roll to obtain an unstretched sheet.

Then, the unstretched sheet was heated to 90°C with a roll stretching machine, and longitudinally stretched at 3.5-fold, and obtained a longitudinally stretched film, a coating solution A for an intermediate layer having a composition shown in the following Table 1 was coated on both sides of the longitudinally stretched film so that a coating amount after drying became 0.5g/m$^2$, and this was passed for 20 seconds under the hot air at 120°C at an air flow of 10m/second, to form an intermediate layer. Further, this film was heated to 140°C with a tenter, and transversely stretched at 3.7-fold, and heat-treated at 235°C while 5% relaxing in a width (transverse direction) to obtain a film. The resulting biaxially stretched polyethylene terephthalate film having an intermediate layer had a thickness of 100μm, a total light transmittance of 90.2%, and a haze of 0.5%.

Table 1

| | Component | Content (% by mass) |
|---|---|---|
| Solvent | Ion-exchanged water | 50.0 |
| | Isopropanol | 28.9 |
| Resin | Acryl-melamine resin (A-08 available from Nippon Carbide Industries, Co., Inc.; solid content concentration: 46% by mass) | 10.0 |
| | Copolymerized polyester resin (MD-1250, available from Toyobo., Ltd.; solid content concentration :30% by mass) | 10.0 |
| Particle | Poly (methyl methacrylate) type crosslinked particles (Epostar MA1001, available from NipponShokubai Co., Ltd.) | 1.0 |
| Surfactant | Silicone surfactant (Paintad 32, available from Dow Corning Corporation) | 0.1 |

2. Laminating of near-infrared ray absorption layer

A coating solution N1-1 for forming a near-infrared ray absorption layer shown in the following Table 2 was coated on the intermediate layer by a reverse format using an oblique line gravure having a diameter of 60cm so that a coating amount after drying became 8.5g/m$^2$, this was passed and dried at 40°C for 20 seconds with 5m/second hot air, at 150°C for 20 seconds with 20m/second hot air, and at 90°C for 10 seconds with 20m/second hot air, to make a near-infrared ray absorption film. The resulting near-infrared ray absorption film had strong absorption in a near-infrared region, a high transmittance in a visible region, and better stability with time and coated film appearance as shown in Table 4.

(Coating solution N1-1 for forming near-infrared ray absorption layer)

Respective components were mixed in a composition shown in the following Table 2, a dye and a resin were dissolved under warming (40°C), and undissolved matters were removed with a filter having a nominal filtration precision of 1 μm to make a coating solution. A solid content concentration of the coating solution N1-1 was 17% by mass, and a viscosity (viscosity measured by the aforementioned measuring method) was 40 cps.

Table 2

| | Component | Content (% by mass) |
|---|---|---|
| Organic solvent | Cyclopentanone | 41.50 |
| | Toluene | 41.50 |
| Resin | Copolymerized polyester type resin having fluorene ring (O-PET OPN-IR, available from Kanebo, Ltd.) | 16.22 |
| Near-infrared ray absorbing dye | Diimmonium salt compound (IRG-022, available from Nippon Kayaku Co., Ltd.) | 0.5353 |
| | Nickel metal complex (MIR101, available from Midori Kagaku Co., Ltd.) | 0.1178 |
| | Cyanine type compound (IR301, available from Yamada Chemical Co., Ltd.) | 0.0170 |
| | Phthalocyanine type compound (IR-14, available from Nippon Shokubai Co., Ltd.) | 0.0816 |
| Surfactant | Silicone surfactant (Paintad57, available from Dow Corning Corporation; HLB=6.7) | 0.0324 |

Experiment 1-2

According to the same manner as that of Experiment 1-1 except that the surfactant in a coating solution for forming a near-infrared ray absorption layer was changed to a silicone surfactant (FZ-2105, available from Nippon Unicar Company Limited) having HLB of 11, a near-infrared ray absorption film was obtained. Because of high hydrophilicity of the surfactant, stability with time under a high temperature and a high humidity of the film was slightly inferior. In addition, since the effect of imparting slidability due to localization on the surface was deficient, winding slippage occurred slightly. In all cases, the film was at a practical level.

Experiment 1-3

According to the same manner as that of Experiment 1-1 except that the surfactant in a coating solution for forming a near-infrared ray absorption layer was changed to a silicone surfactant (FZ-2136, available from Nippon Unicar Company Limited) having HLB of 3, a near-infrared ray absorption film was obtained. Because of the high hydrophobicity of the surfactant, leveling property of the film was slightly inferior, and a small amount of a fine defect was generated.

Experiment 1-4

According to the same manner as that of Experiment 1-1 except that a surfactant was contained in a coating solution for forming a near-infrared ray absorption layer at 0.02% by mass relative to a resin, a near-infrared ray absorption film was obtained. Since the amount of the surfactant was reduced, leveling property was slightly inferior, and a small amount of a fine defect was generated.

Experiment 1-5

According to the same manner as that of Experiment 1-1 except that a surfactant was contained in a coating solution for forming a near-infrared ray absorption layer at 1.5% by mass relative to a resin, a near-infrared ray absorption film was obtained. Since the amount of the surfactant was increased, stability with time was slightly worse.

Experiment 1-6

According to the same manner as that of Experiment 1-1 except that drying condition after coating of a coating solution for forming a near-infrared ray absorption layer was at 100°C for 20 seconds with 5m/second hot air, at 150°C for 20 seconds with 20m/second hot air, and at 90°C for 10 seconds with 20m/second hot air, a near-infrared ray absorption film was prepared. Since initial drying condition was severe, a fine defect was slightly increased.

Experiment 1-7

According to the same manner as that of Experiment 1-1 except that drying condition after coating of a coating solution for forming a near-infrared ray absorption layer was at 40°C for 20 seconds with 5m/second hot air, at 130°C for 20 seconds with 20m/second hot air, and at 90°C for 10 seconds with 20m/second hot air, a near-infrared ray absorption film was prepared. Since an actual temperature of the film in a drying furnace was lowered, an amount of a remaining solvent in the film was increased, and stability with time was slightly deteriorated.

Experiment 1-8

According to the same manner as that of Experiment 1-1 except that coating was conducted with a wire bar, a near-infrared ray absorption film was made. A thin longitudinal streak due to the wire bar was generated on the surface of the film.

Experiment 1-9

According to the same manner as that of Experiment 1-1 except that coating was conducted by a reverse format using an oblique line gravure having a diameter of 300mm, a near-infrared ray absorption film was prepared. A ridge-like streak was generated in a longitudinal direction of the film surface.

Experiment 1-10

According to the same manner as that of Experiment 1-1 except that a near-infrared ray absorption layer was provided by the following method, a near-infrared ray absorption film was prepared.

(Laminating of near-infrared ray absorption layer)

A coating solution N1-2 for forming a near-infrared ray absorption layer shown in the following Table 3 was coated on the aforementioned intermediate layer by a reverse format using an oblique line gravure having a diameter of 60 cm so that a coating amount after drying became 9.3 g/m$^2$, and this was passed and dried at 40°C for 20 seconds with 5m/second hot air, at 150°C for 20 seconds with 20m/second hot air, and at 90°C for 10 seconds with 20m/second hot air, to prepare a near-infrared ray absorption film.

(Coating solution N1-2 for making near-infrared ray absorption layer)

Respective components were mixed in a composition shown in the following Table 3, a dye and a resin were dissolved under warming (40°C), and undissolved matters were removed with a filter having a nominal filtration precision of 1μm to prepare a coating solution. A coating solution N1-2 had a solid content concentration of 21% by mass, and a viscosity of 30 cps.

Table 3

| | Component | Content (part by mass) |
|---|---|---|
| Organic solvent | Methyl ethyl ketone | 39.07 |
| | Toluene | 39.07 |
| Resin | Acryl type resin (BR-80, available from Mitsubishi Rayon Co., Ltd.) | 6.23 |
| | Acryl type resin (BR-83 , available from Mitsubishi Rayon Co., Ltd.) | 14.54 |
| Near-infrared ray absorbing dye | Diimmonium salt compound (CIR-1085, available from Japan Carlit-Co, Ltd.) | 0.6588 |
| | Phthalocyanine type compound (IR-10A, available from Nippon Shokubai Co., Ltd.) | 0.3668 |
| Surfactant | Silicone surfactant (FZ-2130, available from Nippon Unicar Company Limited; HLB=7.0) | 0.0654 |

Experiment 1-11

According to the same manner as that of Experiment 1-1 except that a surfactant was not added to a coating solution for forming a near-infrared ray absorption layer, a near-infrared ray absorption film was obtained. Since a surfactant was not added, many fine defects were generated. In addition, sliding was deteriorated, and winding into a roll-like was difficult.

Experiment 1-12

According to the same manner as that of Experiment 1-1 except that the surfactant in a coating solution for forming a near-infrared ray absorption layer was 3% by mass relative to a resin, a near-infrared ray absorption film was obtained. Since the amount of a surfactant was large, stability with time was deteriorated.

Experiment 1-13

According to the same manner as that of Experiment 1-1 except that the surfactant in a coating solution for forming a near-infrared ray absorption layer was changed to a silicone surfactant (FZ-2110, available from Nippon Unicar Company Limited) having HLB of 1, a near-infrared ray absorption film was obtained. Since the surfactant other than an essential feature of the present invention was used, leveling property of the film was deficient, and many fine defects were generated on the film surface. In addition, since sliding property of the surface was too strong, winding slippage was generated.

Experiment 1-14

According to the same manner as that of Experiment 1-1 except that the surfactant in a coating solution for forming a near-infrared ray absorption layer was changed to a silicone- surfactant (TSF4440, available from Toshiba Silicones) having HLB of 14, a near-infrared ray absorption film was obtained. Since the surfactant other than an essential feature of the present invention was used, leveling property of the film was deficient, and a fine defect was generated on the film surface. In addition, sliding property of the surface was slightly deficient, and winding slippage was generated.

Table 4

| Experiment 1 | Surfactant | | Transmittance (%) | | Color tone | | Stability with time | | Coated film appearance | | Winding slippage |
|---|---|---|---|---|---|---|---|---|---|---|---|
| | HLB | Content (wt%) | Near-infrared region | Visible light region | a | b | Transmittance | Color tone | Fine defect | lack of application uniformity | |
| 1-1 | 6.7 | 0.2 | 4.5 | 72.6 | -1.2 | 5.8 | ◎ | ◎ | ◎ | ◎ | ◎ |
| 1-2 | 11 | 0.2 | 4.6 | 71.6 | -1.3 | 6.1 | ○ | ○ | ◎ | ◎ | ○ |
| 1-3 | 3 | 0.2 | 4.4 | 72.9 | -1.3 | 5.8 | ◎ | ◎ | ○ | ◎ | ○ |
| 1-4 | 6.7 | 0.03 | 4.3 | 72.1 | -1.5 | 5.9 | ◎ | ◎ | ○ | ◎ | ○ |
| 1-5 | 6.7 | 1.5 | 4.9 | 73.7 | -1.0 | 5.4 | ○ | ○ | ◎ | ◎ | ◎ |
| 1-6 | 6.7 | 0.2 | 4.5 | 72.5 | -1.2 | 5.8 | ◎ | ◎ | ○ | ○ | ○ |
| 1-7 | 6.7 | 0.2 | 4.5 | 72.6 | -0.9 | 4.9 | ○ | ○ | ◎ | ◎ | ◎ |
| 1-8 | 6.7 | 0.2 | 4.5 | 72.9 | -1.1 | 5.7 | ◎ | ◎ | ◎ | ○ | ◎ |
| 1-9 | 6.7 | 0.2 | 4.6 | 72.5 | -1.2 | 5.8 | ◎ | ◎ | ◎ | ○ | ◎ |
| 1-10 | 7 | 0.3 | 4.4 | 72.5 | -1.2 | 3.6 | ◎ | ◎ | ◎ | ◎ | ◎ |
| 1-11 | - | - | 4.4 | 72.3 | -1.4 | 6.0 | ◎ | ◎ | × | ○ | × |
| 1-12 | 6.7 | 3 | 5 | 74.6 | -0.9 | 5.6 | △ | × | ◎ | ◎ | ○ |
| 1-13 | 1 | 0.2 | 4.4 | 72.5 | -1.1 | 5.7 | ◎ | ◎ | △ | ○ | × |
| 1-14 | 14 | 0.2 | 4.5 | 72.3 | -1.6 | 6.1 | × | × | × | △ | △ |

Experiment 2

Experiment 2-1

According to the same manner as that of Experiment 1-1 except that a substrate film having the same intermediate layer as that of Experiment 1-1 was used, and a coating solution N2-1 for a near-infrared ray absorption layer having a composition shown in the following Table 5 was used, a near-infrared ray absorption film was prepared. The resulting near-infrared ray absorption film had strong absorption in a near-infrared region, a high transmittance in a visible light region, and better stability with time and coated film appearance as shown in Table 7.

(Coating solution N2-1 for forming near-infrared ray absorption layer)

Respective components were mixed in a composition shown in the following Table 5, a dye and a resin were dissolved under warming (40°C), and undissolved matters were removed with a filter having a nominal filtration precision of 1μm to prepare a coating solution. The coating solution had a solid content concentration of 17% by mass, and a viscosity (viscosity obtained by the aforementioned measuring method) of 40 cps.

Table 5

| | Component | Content (part by mass) |
|---|---|---|
| Organic solvent | Cyclopentanone | 41.50 |
| | Toluene | 41.50 |
| Resin | Copolymerized polyester type resin having fluorene ring (O-PET OPN-IR, available from Kanebo, Ltd.) | 16.15 |
| Near-infrared ray absorbing dye | Diimmonium salt compound (IRG-022, available from Nippon Kayaku Co., Ltd.) | 0.5653 |
| | Nickel metal complex (SIR-128, available from Mitsui Chemicals, Inc.) | 0.1547 |
| | Cyanine type compound (IR301, available from Yamada Chemical Co., Ltd.) | 0.0461 |
| | Cyanine type compound (CY-10, available from Nippon Kayaku Co., Ltd.) | 0.00939 |
| | Squarylium salt type compound (SD184, available from Kyowa Hakko Kogyo Co., Ltd.) | 0.0471 |
| Surfactant | Silicone surfactant (Paintad57 ,available from Dow Corning Corporation; HLB=6.7) | 0.0340 |

Experiment 2-2

According to the same manner as that of Experiment 2-1 except that the surfactant in a coating solution for forming a near-infrared ray absorption layer was changed to a silicone surfactant (FZ-2105, available from Nippon Unicar Company Limited) having HLB of 11, a near-infrared ray absorption film was obtained. Evaluation results of the resulting near-infrared ray absorption film are shown in Table 7. Since the surfactant was changed to a surfactant having a high hydrophilicity, stability with time under a high temperature and a high humidity was slightly inferior. In addition, since the effect of imparting slidability due to localization on the surface was deficient, winding slippage was generated slightly. However, all properties were at a practical level.

Experiment 2-3

According to the same manner as that of Experiment 2-1 except that the surfactant in a coating solution for forming a near-infrared ray absorption layer was changed to a silicone surfactant (FZ-2136, manufacture by Nippon Unicar Company Limited) having HLB of 3, a near-infrared ray absorption film was obtained. Evaluation results of the resulting near-infrared ray absorption film are shown in Table 7. Since the surfactant was changed to a surfactant having high hydrophobicity, leveling property was slightly inferior, and a small amount of a fine defect was generated on the

film surface.

Experiment 2-4

According to the same manner as that of Experiment 2-1 except that the surfactant was contained in a coating solution for forming a near-infrared ray absorption layer at 0.02% by mass relative to a resin, a near-infrared ray absorption film was obtained. Evaluation results of the resulting near-infrared ray absorption film are shown in Table 7. Since the amount of the surfactant was decreased, leveling property was slightly inferior, and a small amount of a fine defect as generated on the film surface.

Experiment 2-5

According to the same manner as that of Experiment 2-1 except that the surfactant was contained in a coating solution for forming a near-infrared ray absorption layer at 1.5% by mass relative to a resin, a near-infrared ray absorption film was obtained. Evaluation results of the resulting near-infrared ray absorption film are shown in Table 7. Since the amount of the surfactant increased, stability with time was slightly deteriorated.

Experiment 2-6

According to the same manner as that of Experiment 2-1 except that the surfactant in a coating solution in a near-infrared ray absorption layer was 2.5% by mass relative to a solid content, a near-infrared ray absorption film was obtained. Evaluation results of the resulting near-infrared ray absorption film are shown in Table 7. Since the amount of the surfactant in the near-infrared ray absorption layer was large, stability with time was deteriorated.

Experiment 2-7

According to the same manner as that of Experiment 2-1 except that a near-infrared ray absorption layer was provided by the following method, a near-infrared ray absorption film was prepared.

(Laminating of near-infrared ray absorption layer)

The following coating solution N2-2 was coated on the aforementioned intermediate layer by a reverse format using an oblique line gravure having a diameter of 60 cm so that a coating amount after drying became 9.3 g/$m^2$, and this was passed and dried at 40°C for 20 seconds with 5m/second hot air, at 150°C for 20 seconds with 20m/second hot air, and at 90°C for 10 seconds with 20 m/second hot air, to make a near-infrared ray absorption film. Evaluation results of the resulting near-infrared ray absorption film are shown in Table 7.

(Coating solution N2-2 for forming near-infrared ray absorption layer)

Respective components were mixed in a composition showing in the following Table 6, a dye and a resin were dissolved under warming (40°C), and undissolved matters were removed with a filter having a nominal filtration precision of 1 μm to make a coating solution. The coating solution had a solid content concentration of 21% by mass, and a viscosity of 30 cps.

Table 6

| | Component | Content (part by mass) |
|---|---|---|
| Organic solvent | Methyl ethyl ketone | 39.07 |
| | Toluene | 39.07 |
| Resin | Acryl type resin (BR-80, available from Mitsubishi Rayon Co., Ltd.) | 6.23 |
| | Acryltype resin (BR-83, available from Mitsubishi Rayon Co., Ltd.) | 14.54 |
| Near-infrared ray absorbing dye | Diimmonium salt compound (IRG-022, available from Nippon Kayaku Co., Ltd.) | 0.6588 |

Table continued

| | Component | Content (part by mass) |
|---|---|---|
| | Phthalocyanine type compound (IR-10A, available from Nippon Shokubai Co., Ltd.) | 0.3668 |
| Color correcting dye | Azaporphyrin type compound (TAP-2, available from Yamada Chemistry Co., Ltd.) | 0.1137 |
| Surfactant | Silicone surfactant (FZ-2130, available from Nippon Unicar Company Limited; HLB=7.0) | 0.0654 |

Table 7

| Experiment | Surfactant | | Transmittance | | | Color tone | | Stability with time | | Coated film appearance | | Winding slippage |
|---|---|---|---|---|---|---|---|---|---|---|---|---|
| | HLB | Content (wt%) | Near-infrared region | Neon light region | Visible light region | a | b | Transmittance | Color tone | Fine defect | lack of application unity | |
| 2-1 | 6.7 | 0.2 | 5.0 | 34.2 | 62.5 | -4.2 | -7.3 | ◎ | ◎ | ◎ | ◎ | ◎ |
| 2-2 | 11 | 0.2 | 4.9 | 34.0 | 61.4 | -4.2 | -6.9 | ○ | ○ | ◎ | ◎ | ○ |
| 2-3 | 3 | 0.2 | 4.9 | 34.5 | 62.9 | -4.1 | -7.5 | ◎ | ◎ | ○ | ◎ | ○ |
| 2-4 | 6.7 | 0.03 | 4.8 | 33.9 | 61.9 | -4.1 | -7.7 | ◎ | ◎ | ○ | ◎ | ○ |
| 2-5 | 6.7 | 1.5 | 5.3 | 35.1 | 63.6 | -4.4 | -6.7 | ○ | ○ | ◎ | ◎ | ◎ |
| 2-6 | 6.7 | 2.5 | 5.5 | 34.8 | 63.2 | -4.7 | -6.1 | △ | △ | ◎ | ◎ | ○ |
| 2-7 | 7 | 0.3 | 4.4 | 32.1 | 63.5 | -2.6 | -7.2 | ◎ | ◎ | ◎ | ◎ | ◎ |

Experiment 3

Experiment 3-1

Experiment 3-1-1

1. Manufacturing of substrate film

(1) Preparation of ultraviolet absorbing agent-containing master batch pellet

Ten parts by mass of a dry cyclic iminoester type ultraviolet absorbing agent (CYASORB UV3638, available from Cytec;2,2'-(1,4-phenylene)bis(4H-3,1-benzoxazine-4-one)) and 90 parts by mass of a polyethylene terephthalate (PET resin (ME553, available from Toyobo., Ltd.) containing no particles were mixed, and a master batch pellet was prepared using a kneading extruder. An extruding temperature thereupon was 285°C, and an extruding time were 7 minutes.

(2) Preparation of coating solution for forming second adhesion modifying layer (easy adhesive layer)

Nineteen five parts by mass of dimethyl terephthalate, 95 parts by mass of dimethyl isophthalate, 35 parts by mass of ethylene glycol, 145 parts by mass of neopentyl glycol, 0.1 part by mass of zinc acetate, and 0.1 part by mass of antimony trioxide were charged into a reaction vessel, and a transesterification reaction was carried out at 180°C over 3 hours. Then, 6.0 parts by mass of sodium 5-sulfoisophthalate was added, an esterification reaction was carried out at 240°C for 1 hour, and a polycondensation reaction was carried out to obtain a polyester resin.

Six point seven parts by mass of a 30% by mass aqueous dispersion of the resulting polyester resin, 40 parts by mass of a 20% by mass aqueous solution of a self-crosslinking polyurethane resin containing an isocyanate group blocked with sodium bisulfite (Elastron H-3, available from Dai-Ichi Kogyo Seiyaku Co. , Ltd.), 0.5 part by mass of a catalyst for Elastron (Cat 64), 47.8 parts by mass of water and 5 parts by mass of isopropanol were mixed. Further, to this coating solution were added 1% by mass of an anionic surfactant, and 5% by mass of a spherical colloidal silica particle (Snowtex OL, available from Nissan Chemical Industries, Ltd.), to prepare a coating solution.

(3) Formation of substrate film

Nineteen parts by mass of a PET pellet (ME553, available from Toyobo., Ltd.) having an intrinsic viscosity of 0.62 dl/g and not containing particles, and 10 parts by mass of the master batch pellet prepared in (1) were dried at 135°C for 6 hours under reduced pressure (1 Torr), and these pellets were fed to an extruder. A resin temperature until an extruder melting part, a kneading part, a polymer tube, a gear pump, and a filter was set to be 280°C, and a resin temperature at a subsequent polymer tube was set to be 275°C, and the resin was extruded into a sheet through a nozzle. These PETs were filtrated using a filtering material (nominal filtering precision: particles of 10 μm or larger are 95% cut) of a sintered stainless steel at a melting stage, respectively. And, a flat die was such that a resin temperature was 275°C.

The resin which had been melt extruded into a sheet was cooled to solidify while adhering to a casting drum (roll diameter: 400 mmϕ, Ra: 0.1 μm or smaller) at a surface temperature of 30°C using an electrostatic application casting method, to obtain an unstretched film. A discharge rate thereupon was 48 kg/hr, and the resulting unstretched film had a width of 300 mm, and a thickness of 1400 μm.

Then, the unstretched film was heated to 100°C using a heated roll group and an infrared-ray heater and, thereafter, the unstretched film was stretched at 3.5-fold in a longitudinal direction (running direction) with a roll group having a circumferential rate difference (longitudinal stretching step) to obtain a monoaxially oriented film. Regarding all rolls used at film manufacturing, a surface roughness of a roll was managed at 0.1 μm or smaller in terms of Ra, and a roll cleaner was disposed on a roll installed at a pre-heating inlet at a stretching step, and a cooling roll. A roll diameter at a longitudinal stretching step was 150 mm, and a procedure of adhering a film onto a roll with a suction roll, electrostatic adhesion, and a part nip adhering apparatus was adopted.

The coating solution for forming a second adhesion modifying layer which had been precision-filtered with a felt-type polypropylene filtering material having a filtration particle size (initial filtering efficacy 95 %) of 25 μm was coated on both sides of the monoaxially oriented film by a reverse roll method. Thereafter, subsequently, by grasping an end of the film with clips, the film was introduced into a hot air zone heated at 130°C, dried, stretched at 4.0-fold in a film width direction, heat-treated at 230°C for 5 seconds, and relaxation-treated 3% in a width direction during this heat treating step to obtain a substrate film in which a second adhesion modifying layer was laminated on both sides. A thickness of the resulting film was 100 μm, and a second adhesion modifying layer had a coating amount after drying of 0.01 g/$m^2$ per one side.

2. Formation of anti-reflective layer

A ultraviolet curing-type hard coating solution (Seika Beam EXF-01B, available from Dainichiseika Color & Chemicals Mfg.Co., Ltd.) was coated on the surface of the second adhesion modifying layer of the substrate film by a reverse coating method so that a film thickness after drying became 5 μm. Then, a solvent was dried, 800 mJ/cm$^2$ of an ultraviolet-ray was irradiated with a high-pressure mercury lamp to cure a resin in a paint, to form a hard coated layer.

Then, a coating solution consisting of 5 parts by mass of a partial hydrolysis condensate of γ-aminopropyltrimethoxysilane, 30 parts by mass of ethanol, and 35 parts by mass of isopropanol was prepared, and the coating solution was coated on the surface of the hard coated layer so that a film thickness after drying became 0.02 μm, and dried at 140°C for 20 seconds to form a high refractive index layer.

Then, 50 parts by mass of ethanol, 20 parts by mass of water, and 4 parts by mass of hydrochloric acid were added to 24 parts by mass of tetraethoxysilane to hydrolyze tetraethoxysilane to prepare a coating solution. This coating solution was coated on the surface of the high refractive index layer so that a film thickness after drying became 0.09 μm, and this film was dried at 140°C for 1 minute to form a low refractive index layer.

Further, a coating solution obtained by diluting a perfluoropolyether group-containing silane coupling agent consisting of $C_3F_7$-$(OC_3F_6)_{34}$-O-$(CF_2)_2$ -$C_2H_4$-O-$CH_2Si(OCH_3)_3$ with perfluorohexane to 0.5% by mass was coated on the surface of the low refractive index layer, and this film was dried at 120°C for 1 minute to form an anti-stain layer having a film thickness of 8 nm.

Thereby, an anti-reflective layer was formed in which a hard coated layer/a high refractive index layer/a low refractive index layer/ an anti-stain layer were laminated in this order on a surface of the second adhesion modifying layer of the substrate film.

3. Formation of near-infrared ray absorption layer

The coating solution N2-1 (Table 5) for forming a near-infrared ray absorption layer used in the Experiment 2-1 was coated on the surface of the second adhesion modifying layer opposite to the anti-reflective layer of the substrate film on which the anti-reflective layer was formed so that a coating amount after drying became 8.5g/m$^2$. Coating was carried out by reversely rotating an oblique line gravure roll having a diameter of 60 cm. Thereafter, the film was passed and dried at 40°C for 20 seconds with 5 m/second air (first drying step), at 150°C for 20 seconds with 20 m/second air (second drying step), and at 90°C for 10 seconds with 20 m/second air (cooling step), to manufacture a near-infrared ray absorption filter.

4. Formation of sticky layer

A transparent sticking agent which is an acrylic acid ester copolymer consisting of n-butyl acrylate (78.4% by mass), 2-ethylhexyl acrylate (19.6% by mass), and acrylic acid (2% by mass) was laminated on the surface of the near-infrared ray absorption layer of the near-infrared ray absorption filter by a comma coater method so that a film thickness after drying became 0.025 mm. Further, a silicone-treated separator film made of PET having a thickness of 0.038 mm was laminated on the surface thereof, to obtain a composite of a near-infrared ray absorption filter having a sticky layer and a separator film.

Regarding the near-infrared ray absorption filter, the aforementioned respective evaluations were performed, and results are shown in Table 8. Evaluation other than a light resistance experiment was performed regarding the near-infrared ray absorption filter with no sticky layer provided thereon, and the light resistance experiment was performed regarding the near-infrared ray absorption filter with a sticky layer provided thereon.

As seen from Table 8, the resulting near-infrared ray absorption filter has great adsorption in a near-infrared region and a neon light region, and a great transmittance in a visible light region. In addition, coated film appearance of a near-infrared ray absorption layer, and winding property of the filter were better. Further, by using the ultraviolet absorbing agent, absorption in an ultraviolet region is extremely great, and stability with time (transmittance property, color tone) and light resistance are excellent.

In a column of evaluation of adherability in Table 8, an (A) layer means the anti-reflective layer, a (B) layer means the substrate film, and a (C) layer means the near-infrared ray absorption layer.

Further, also regarding the anti-reflective layer of the near-infrared ray absorption filter, anti-stain evaluation was also performed. Anti-stain was evaluated by wiping property of an oily pen and wiping property of a fingerprint. Wiping property of an oily pen was performed by drawing a line on the surface of the anti-reflective layer with an oily pen, wiping the line with a non-woven fabric made of cellulose (Ben Cotton M-3, available from Asahi Kasei Corporation), and determining removal easiness by visual observation, and wiping property of a fingerprint was evaluated by wiping a fingerprint attached to the surface of the anti-reflective layer with a non-woven fabric made of cellulose (Ben Cotton M-3, available from Asahi Kasei Corporation), and determining removal easiness by visual observation. Both could be

completely wiped off.

In addition, since a total thickness of the near-infrared ray absorption filter (anti-reflective layer/substrate film/ near-infrared ray absorption layer/ sticky layer) obtained in the present Experiment 3-1-1 was 0.14 mm, being very thin, and the aforementioned excellent property is also possessed, the separator film of the composite is peeled and, thereafter, by utilizing sticking property of the sticky layer, this can be easily adhered to a subject to be adhered such as a plasma display. As described above, since the near-infrared ray absorption filter had a smaller thickness than that of the previously known filter, the filter was excellent in workability of adhesion thereof.

Experiment 3-1-2

According to the same manner as that of Experiment 3-1-1 except that the ultraviolet absorbing agent was changed to a polymer type ultraviolet absorbing agent (Novapex U-110, available from Mitsubishi Chemical Co., Ltd.), and a blending amount thereof was 20 parts by mass, a near-infrared ray absorption filter having an anti-reflective layer, a substrate film and a near-infrared ray absorption layer was manufactured. Further, according to the same manner as that of Experiment 3-1-1 and using this near-infrared ray absorption filter, a near-infrared ray absorption filter having a sticky layer was also manufactured. Evaluation results of the near-infrared ray absorption filter is shown in Table 8. As shown in Table 8, the equivalent properties to those of the near-infrared ray absorption filter obtained in Experiment 3-1-1 are possessed. In addition, the same anti-stain evaluation as that of Experiment 3-1-1 was performed, and both of wiping property of an oily pen, and wiping property of a fingerprint were better.

Experiment 3-1-3

According to the same manner as that of Experiment 3-1-1 except that the surfactant used in a coating solution for forming a near-infrared ray absorption layer was changed to a silicone surfactant (FZ-2105, available from Nippon Unicar Company Limited) having HLB of 11, a near-infrared ray absorption filter having an anti-reflective layer, a substrate film and a near-infrared ray absorption layer was manufactured. Further, according to the same manner as that of Experiment 3-1-1 and using this near-infrared ray absorption filter, a near-infrared ray absorption filter having a sticky layer was also manufactured. Evaluation results of the near-infrared ray absorption filter is shown in Table 8. Since the surfactant having greater HLB (having higher hydrophilicity) than that of the near-infrared ray absorption filter obtained in Experiment 3-1-1 was used, stability with time under a high temperature and a high humidity was slightly inferior, and slidability of the surface of the near-infrared ray absorption layer was slightly inferior, thereby, slight winding slippage was occurred. In addition, the same anti-stain evaluation as that of Experiment 3-1-1 was performed, and both of wiping property of an oily pen, and wiping property of a fingerprint were better.

Experiment 3-1-4

According to the same manner as that of Experiment 3-1-1 except that the surfactant used in a coating solution for forming a near-infrared ray absorption layer was changed to a silicone surfactant (FZ-2136, available from Nippon Unicar Company Limited) having HLB of 3, a near-infrared ray absorption filter an anti-reflective layer, a substrate film and a near-infrared ray absorption layer was manufactured. Further, according to the same manner as that of Experiment 3-1-1 and using this near-infrared ray absorption filter, a near-infrared ray absorption filter having a sticky layer was also manufactured. Evaluation results of the near-infrared ray absorption filter is shown in Table 8. Since the surfactant having smaller HLB (having higher hydrophobicity) than that of the near-infrared ray absorption filter obtained in Experiment 3-1-1 was used, leveling property at formation of the near-infrared ray absorption layer was slightly inferior, and a fine defect on the surface of the filter was slightly increased. In addition, the same anti-stain evaluation as that of Experiment 3-1-1 was also performed, and both of wiping property of an oily pen, and wiping property of a fingerprint were better.

Experiment 3-1-5

According to the same manner as that of Experiment 3-1-1 except that change was performed as shown in the following (1) to (3) in Experiment 3-1-1, a near-infrared ray absorption filter of the present Experiment 3-1-5 was obtained. Properties of the near-infrared ray absorption filter obtained in the present Experiment 3-1-5 are shown in Table 8.

(1) An ultraviolet absorbing agent is not blended to a substrate film.
(2) A second adhesion modified layer is not laminated to both sides of a substrate film.
(3) A surfactant is not blended into a coating solution for forming a near-infrared ray absorption layer.

Since the near-infrared ray absorption filter obtained in the present Experiment 3-1-5 has a high ultraviolet

transmittance, deterioration of the near-infrared ray absorbing dye due to light is great, and light resistance is inferior. In addition, since the second adhesion modifying layer is not formed, adherability of the anti-reflective layer and the near-infrared ray absorption layer relative to the substrate film is inferior. Further, since the surfactant was not blended into hte coating solution for forming the near-infrared ray absorption layer, dispersity of the near-infrared ray absorbing dye or the dye for adjusting a color tone for neon light cutting in the resin was inferior and, therefore, coated film appearance of the near-infrared ray absorption layer was inferior.

Experiment 3-1-6

According to the same manner as that of Experiment 3-1-1 except that change was performed as in the following (4) to (6) in a method of Experiment 3-1-1, the near-infrared ray absorption filter of the present Experiment 3-1-6 was obtained.

(4) An anti-reflective layer is not laminated on a substrate film.
(5) A second adhesion modifying layer is not laminated to both sides of a substrate film.
(6) A surfactant is not blended into a coating solution for forming a near-infrared ray absorption layer.

Properties of the near-infrared ray absorption filter obtained in the present Experiment 3-1-6 are shown in Table 8. Since the near-infrared ray absorption filter obtained in the present Experiment 3-1-6 was not laminated an anti-reflective layer, a surface reflectivity and a surface hardness were evaluated in terms of properties of the surface of the substrate film.

Since the near-infrared ray absorption filter obtained in the present Experiment 3-1-6 is not combined an anti-reflective layer, a surface reflectivity and the surface of hardness are inferior. In addition, anti-stain of the surface is inferior and, in the aforementioned evaluation, a trace of wiping of a line drawn with an oily pen or a fingerprint remained. In addition, since the second adhesion modifying layer is not formed, adherability of the near-infrared ray absorption layer relative to the substrate film is inferior. Further, since the surfactant was not blended into the coating solution for forming the near-infrared ray absorption layer, dispersity of the near-infrared ray absorbing dye or the dye for adjusting a color tone for neon light cutting in the resin, therefore, coated film appearance of the near-infrared ray absorption layer was inferior.

Experiment 3-1-7

According to the same manner as that of Experiment 3-1-1 except that a near-infrared ray absorption layer was not laminated in a method of Experiment 3-1-1, a filter of the present Experiment 3-1-7 was obtained. In the present Experiment 3-1-7, since a near-infrared ray absorption layer was not laminated, a sticky layer was formed on the surface of a substrate film. Properties of the filter obtained in the present Experiment 3-17 are shown in Table 8. Since the filter obtained in the present Experiment 3-1-7 is not laminated with a near-infrared ray absorption layer, the filter has a high transmittance in a near-infrared region, and has no fundamental function as a near-infrared ray absorption filter. In addition, the color tone correcting function is not imparted.

Experiment 3-1-8

According to the same manner as that of Experiment 3-1-1 except that change was performed as in the following (7) to (10) in the method of Experiment 3-1-1, a near-infrared ray absorption filter was obtained.

(7) An ultraviolet-absorbing agent is not blended to a substrate film.
(8) A second adhesion modifying layer is not laminated on both sides of a substrate film.
(9) A surfactant is not blended in a coating solution for forming a near-infrared ray absorption layer.
(10) Three% by mass of a benzotriazole type ultraviolet absorbing agent (TINUVIN386, available from Ciba Specialty Chemicals), and 1% by mass of a hindered phenol type antioxidant (IRGANOX1010, available from Ciba Specialty Chemicals) are blended in a sticky layer.

Properties of the near-infrared ray absorption filter obtained in the present Experiment 3-1-8 are shown in Table 8. Since the near-infrared ray absorption filter obtained in the present Experiment 3-1-8 is such that the ultraviolet absorbing agent exist on a side of a subject to be adhered than the near-infrared ray absorption layer with the near-infrared ray absorbing dye, the light resistance improving effect is not manifested, and is at a low level. In addition, since the second adhesion modifying layer is not formed, adherability of the near-infrared ray absorption layer relative to the substrate film is inferior. Further, since the surfactant was not blended into the coating solution for forming the near-infrared ray absorption layer, dispersity of the near-infrared ray absorbing dye and the dye for adjusting a color tone for neon light cutting in the resin is inferior, coated film appearance of the near-infrared ray absorption layer was inferior.

Table 8

| | | Experiment 3-1 | | | | | | | |
|---|---|---|---|---|---|---|---|---|---|
| | | 1 | 2 | 3 | 4 | 5 | 6 | 7 | 8 |
| Light transmittance(%) | Ultraviolet region | 0 | 0 | 0 | 0 | 95 | 0 | 0 | 95* |
| | Visible light region | 61.5 | 61.0 | 61.4 | 62.9 | 62.5 | 62.5 | 88.5 | 62.5 |
| | Neon light Neon light region | 34.0 | 35.0 | 34.0 | 34.6 | 34.2 | 34.2 | 88.7 | 34.2 |
| | Near-infrared region | 5.0 | 5.2 | 4.9 | 4.9 | 5.0 | 5.0 | 88.9 | 5.0 |
| Color tone | a value | -4.0 | -4.0 | -4.2 | -4.1 | -4.2 | -4.2 | -0.1 | -4.2 |
| | b value | -6.9 | -7.3 | -6.9 | -7.5 | -7.3 | -7.3 | 0.6 | -7.3 |
| Stability with time | Transmittance | ◎ | ◎ | ○ | ◎ | ◎ | ◎ | - | ◎ |
| | Color tone | ◎ | ◎ | ○ | ◎ | ◎ | ◎ | - | ◎ |
| Light resistance | R(%) | 95 | 90 | 93 | 92 | 71 | 71 | - | 71 |
| Surface reflectivity | (%) | 0.8 | 0.8 | 0.8 | 0.8 | 0.7 | 3.0 | 0.7 | 0.7 |
| Surface hardness (pencil hardness) | | 3H | 3H | 3H | 3H | 3H | F | 3H | 3H |
| Appearance of near-infrared ray absorption layer | Fine defect | ◎ | ◎ | ◎ | ○ | × | × | - | × |
| | Coating deterioration | ◎ | ◎ | ◎ | ◎ | Δ | Δ | - | Δ |
| Adherability | (A) layer/ (B) layer | 100 | 100 | 100 | 100 | 90 | - | 100 | 90 |
| | (B) layer/ (C) layer | 92 | 92 | 92 | 92 | 80 | 80 | - | 80 |
| Winding property | | ◎ | ◎ | ○ | ○ | - | - | - | - |
| * A transmittance of a substrate film and a laminate | | | | | | | | | |

in an ultraviolet region in Experiment 3-1-5 is 0%. Experiment 3-2 (manufacturing of plasma display panel)

A front panel of a plasma display panel (PDS4211J-H, manufactured by Fujitsu) was removed, each of near-infrared ray absorption filters [with a pressure-sensitive adhesive layer provided thereon] manufactured in Experiment 3-1-1 to Experiment 3-1-8 was adhered by the sticky layer, and various function evaluations were performed. In plasma display panels using near-infrared ray absorption filters obtained in Experiment 3-1-1, Experiment 3-1-2, Experiment 3-1-3, and Experiment 3-1-4, the following effects could be confirmed.

(1) Since the anti-reflecting property is imparted to the surface of the filter, natural light reflection was suppressed, and a reflection of a fluorescent lamp used in interior illumination was decreased.
(2) Since a surface hardness of the filter is high, it is difficult to generate a flaw.
(3) Since anti-stain is imparted to the filter, even when touched with a hand, and a fingerprint is attached, it could be easily wiped off.
(4) Since the filter possessed neon cutting property, and a color tone is improved, color reproduction was improved. Specifically, red containing orange turned into pure red, greenish blue turned into clear blue, and yellowish white turned into pure white.
(5) Since the near-infrared ray absorbing effect is imparted to the filter, an erroneous motion of an infrared remote control devices disposed at a periphery could be prevented.
(6) Since light resistance and stability with time of the filter are excellent, even when used for a long term, the function of the (5) was stable.

On the other hand, since the near-infrared ray absorption filter obtained in Experiment 3-1-5 was inferior in coated film appearance of the near-infrared ray absorption layer, quality of an image was deteriorated due to the defect.

In addition, since light resistance was inferior, interruption to an infrared remote control devices disposed at the periphery was increased due to long term use.

Since the near-infrared ray absorption filter obtained in Experiment 3-1-6 had a high surface reflectivity, natural light reflection was high, a reflection of a fluorescent lamp using interior illumination was present, and visibility of a screen was low. In addition, since a surface hardness was low, and anti-stain was not imparted to the filter, a flaw was easily generated, and wiping property of a fingerprint attached when a hand was touched was inferior. Further, since coated film appearance of the near-infrared ray absorption layer was inferior, quality of an image was deteriorated due to the defect.

Since the near-infrared ray absorption filter obtained in Experiment 3-1-7 has no near-infrared ray absorbing ability, interruption to an infrared remote control devices disposed at a periphery occurred. In addition, since neon cutting property is not imparted to the filter, color reproduction of an image was inferior.

The near-infrared ray absorption filter obtained in Experiment 3-1-8 is such that the ultraviolet absorbing agent exist on the plasma display panel side than the near-infrared ray absorption layer with the near-infrared ray absorbing dye blended therein. For this reason, since the light resistance improving effect to natural light is not manifested, interruption to an infrared remote control devices disposed at a periphery was increased by long term use, like the near-infrared ray absorption filter obtained in Experiment 3-1-5. In addition, since coated film appearance of the near-infrared ray absorption layer was inferior, quality of an image was deteriorated due to the defect.

In addition, near-infrared ray absorption filters obtained in Experiments 3-1-5, 3-1-6 and 3-1-8 were inferior in adherability of an interface between the substrate film and a functional layer. For this reason, partial peeling of an interface was generated by long term use, and quality of an image was deteriorated.

Near-infrared ray absorption filters obtained in Experiment 3-1-1, Experiment 3-1-2, Experiment 3-1-3, and Experiment 3-1-4 have a small thickness, and are laminated with the sticky layer. For this reason, when the filter was adhered in the state where a surface of a plasma display panel was wetted with isopropanol, the filter could be successfully adhered while mixing of a bubble was suppressed, and the filter had extremely better workability.

Experiment 3-3

Near-infrared ray absorption filters [with no sticky layer provided thereon] obtained in Experiment 3-1-1 to Experiment 3-1-8 were adhered to a front panel of a plasma display panel (PDS4211J-H, manufactured by Fujitsu) using an optical adhesive agent with the surface of the near-infrared ray absorption layer being on the plasma display panel side, and various functions were evaluated. Results similar to those of Experiment 3-2 were obtained.

Experiment 3-4 (Manufacturing of near-infrared ray absorption filter having electromagnetic wave shutting off function)

An electrically conductive mesh [electromagnetic wave shutting off layer] was adhered to near-infrared ray absorption filters [with a sticky layer provided thereon] obtained in Experiment 3-1-1 to Experiment 3-1-8 by the sticky layer. The electrically conductive mesh is such that a mesh obtained by knitting a fiber having a diameter of 0.03 mm longitudinally and traversely at a density of 135 per 2.54 cm is plated with nickel and copper by an electroless plating method.

A front panel of the plasma display panel (PDS4211J-H, manufactured Fujitsu) was removed, each near-infrared ray absorption filter having an electrically conducted mesh was adhered thereto using an adhesive agent, and various functions were evaluated. It was confirmed that, in addition to the effect confirmed in the Experiment 3-2, the electromagnetic wave shutting off effect can be exhibited.

Experiment 4

In the present Experiment Example, in addition to the aforementioned measuring and evaluating methods, following measuring and evaluating methods were adopted.

[Evaluation of surface flaw of the substrate film]

Sixteen 250 mmx250 mm film pieces were evaluated. Pieces 24 hours from film making initiation were evaluated. As a floodlamp, 20wx2 lamps of fluorescent lamps are disposed 400 mm below a XY table, and a test piece to be measured is placed on a mask having a slit width of 10 mm provided on a XY table. Light is introduced so that an angle between a line connecting a floodlamp and a photodetector, and a perpendicular direction of a test piece surface becomes 12°and when a flaw is present on a test piece at an incident position, that part glitters. A light amount at that part was converted into an electric signal with a CCD image sensor camera disposed 500 mm above the XY table, the electric signal was amplified, differentiated, and compared with a threshold level by a comparator to output a signal detecting

an optical defect. In addition, using a CCD image sensor camera, an image of a flaw was inputted, a video signal of the inputted image was analyzed by a predetermined procedure, a size of an optical defect is measured, and positions of defects of 50 μm or larger were displayed. Detection of an optical defect by this method was conducted on both sides of a test piece.

A defect resulting from a flaw was selected from an optical defect part detected in the above method. A part determined to be a flaw by the above method was cut into a suitable size, and a test piece for a flaw shape observation was collected. Regarding this test piece, a surface of a test piece for which a defect had been detected was observed from a vertical direction using a three-dimensional shape measuring apparatus (TYPE550, manufactured by Micromap), and a size of a flaw was measured. In this respect, irregularities of a flaw in a vicinity within 50 μm when a test piece, that is, a surface of a film was observed from a vertical direction was determined to be the same flaw. A length and a width of an oblong having a minimum area covering an outermost part of these flaws were regarded as a length and a width of a flaw. A depth (a difference between a highest part and a lowest part of a flaw) and a length of these flaws were measured. From this result, the number of flaws (number/$m^2$) of a depth of 1 μm or greater and a length of 3mm or longer was obtained, and the number of flaw was determined by the following criteria.

◎:30/$m^2$ or less;
○:31 to 50/$m^2$;
Δ:51 to 100/$m^2$;
×:100/$m^2$ or more

[Evaluation of foreign matter on substrate film surface]

From optical defects detected by the method described in the above flaw evaluation, defects resulting from a foreign matter were selected, and a test piece of the part was sampled. Al was deposited on a side of the test piece for which a defect had been detected, and the Al deposition surface was observed from a vertical direction relative to a film plane using a non-contact three-dimensional roughness meter (TYPE550, manufactured by Micromap). The number of foreign matter having a greatest diameter of 20 μm or larger (number/$m^2$) was obtained, and the number of foreign matter was determined by the following criteria.

◎:2/$m^2$ or less;
○:3 to 5/$m^2$;
Δ:6 to 10/$m^2$;
×:11 /$m^2$ or more

[Evaluation of uneven distribution of ultraviolet absorbing agent in thickness direction of substrate film]

An extinction quotient X of characteristic absorption of an ultraviolet absorbing agent relative to characteristic absorption of polyester in a superficial layer of a substrate film, and an extinction quotient Y of characteristic absorption of an ultraviolet absorbing agent relative to characteristic absorption of polyester at a central part in a thickness direction of a substrate film were measured with FT-IR by the following method, and this was indicated by X/Y. A smaller value means a higher degree of uneven distribution of an ultraviolet absorbing agent.

The X is obtained by the following method. First, an IR spectrum (I) of a superficial layer of a blank sample (polyethylene terephthalate film containing no ultraviolet absorbing agent), and an IR spectrum (II) of a superficial layer of a substrate film were measured. Then, a differential spectrum between(I) and (II) was derived, an extinction quotient (1700 to 1800$cm^{-1}$/1505$cm^{-1}$) of an absorbance at 1700 to 1800$cm^{-1}$ (characteristic absorption of ultraviolet absorbing agent), and absorption at 1505$cm^{-1}$ (absorption of polyethylene terephthalate) obtained from an IR spectrum of (II) was obtained, and this was indicated by X.

In addition, in a thickness direction of the substrate film, 50% of a total thickness was cut off, an exposed surface (central part in film thickness direction) was measured as in the X to obtain an absorbance ratio, and this was indicated by Y.

An IR spectrum was measured by the following method.

FT-IR apparatus: FTS-7000e, manufactured by Digilab, LLC.

One time deflection ATR apparatus: "Thunderdome" manufactured by Thermo Spectra-Tech

IRE: Ge
Incident angle: 45°
Resolution: 8$cm^{-1}$
Integration times: 128

Experiment 4-1 (Manufacturing of near-infrared ray absorption filter)

Experiment 4-1-1

1. Manufacturing of substrate film

Using the ultraviolet absorbing agent-containing master batch pellet and the coating solution for forming a second adhesion modifying layer (easy adhesive layer) prepared in the Experiment 3-1, a substrate film was formed according to the following procedure.

(1)Formation of substrate film

A biaxially oriented laminated polyester film of a substrate film was made to be a tri-layered structure. For forming a substrate intermediate layer, 90 parts by mass of a pellet of PET (ME553, manufactured by Toyobo, Ltd.) containing no particles and having an intrinsic viscosity of 0.62 dl/g, and 10 parts by mass of the master batch pellet prepared in the (1) were dried at 135°C for 6 hours under reduced pressure (1Torr:$1.33\times10^2$ Pa), and these pellets were fed to a second extruder. For forming both superficial layers, a pellet of PET (ME553, available from Toyobo, Ltd) containing no particles was dried at 135°C for 6 hours under reduced pressure (1Torr:$1.33\times10^2$Pa), and fed to a first extruder. In the first extruder and the second extruder, a resin temperature until an extruder melting part, a kneading part, a polymer tube, a gear pomp, and a filter was set to be 280°C, and a resin temperature at a subsequent polymer tube was set to be 275°C, and both superficial layers and a substrate intermediate layer were laminated at a 3 layers joining block, and extruded into a sheet through a nozzle. These PETs were filtrated using a filtering material of a sintered stainless steel (nominal filtration precision: particles of 10 μm or larger are 95% cut) at a melting stage, respectively. In addition, a resin temperature in a flat die was set to be 275°C.

A resin which had been melt extruded into a sheet was cooled to solidify by winding on a casting drum (roll diameter:400 mmφ, Ra;0.1 μm or smaller) at a surface temperature of 30°C using an electrostatic application casting method while adhering, to obtain an unstretched film. A discharge rate at that time was 48kg/hr, and the resulting unstretched film had a width of 300 mm and a thickness of 1400 μm. A discharge rate of each extruder was adjusted so that a ratio of a thickness of both superficial layers became 10% relative to a total thickness, respectively.

Then, the unstretched film was heated to 100°C using a heated roll group and an infrared heater and, thereafter, stretched at 3.5-fold in a longitudinal direction (running direction) with a roll group having a circumferential rate difference (longitudinal stretching step) to obtain a monoaxially oriented film. Regarding all rolls used at film manufacturing, a surface roughness of a roll was managed at 0.1 μm or lower in terms of Ra, and a roll cleaner was disposed on a roll installed at a pre-heating inlet in a stretching step, and a cooling roll. A roll diameter in a longitudinal stretching step is 150 mm, and a procedure of adhering a film to a roll with a suction roll, electrostatic adhesion, and a part nip adhering apparatus was adopted.

A coating solution for forming a second adhesion modifying layer which had been precision-filtered with a felt-type polypropylene filtering material having a filtering particle size (initial filtration efficiency 95%) of 25 μm was coated on both sides of the monoaxially oriented film by a reverse roll method. Thereafter, subsequently, grasping an end of the film with clips, the film was introduced into a hot air zone heated at 130°C, dried, stretched at 4.0-fold in a film width direction, heat-treated at 230°C for 5 seconds, and relaxation-treated 3% in a width direction during this heat-treating step to obtain a substrate film in which a second adhesion modifying layer was laminated on both sides.

A thickness of the resulting substrate film was 100 μm, and a second adhesion modifying layer had a coating amount after drying of 0.01 g/m$^2$ per one side. The results of evaluation of the surface appearance are shown in Table 9, occurrence of a surface defect such as a surface flaw and a surface foreign matter was suppressed even when the film was produced for a long term, and a laminated film of high quality could be stably produced.

2. Formation of anti-reflective layer

An ultraviolet curing-type hard coating paint (Seika Beam EXF-01B, available from Dainichiseika Color & Chemicals Mfg. Co., Ltd.) was coated on a surface of the second adhesion modifying layer of the substrate film to a film thickness after drying of 5 μm by a reverse coating method. Then, a solvent was dried, and 800mJ/cm$^2$ of ultraviolet-ray was irradiated with a high pressure mercury lamp to cure a resin in the paint, to form a hard coated layer.

Then, a coating solution consisting of 5 parts by mass of partial hydrolysis condensate of γ-aminopropyltrimethoxysilane, 30 parts by mass of methanol, 30 parts by mass of ethanol, and 35 parts by mass of isopropanol was prepared, coated on a surface of hard coated layer to a film thickness after drying of 0.02 μm, and dried at 140°C for 20 seconds to form a high reflective index layer.

Then, 50 parts by mass of ethanol, 20 parts by mass of water, and 4 parts by mass of hydrochloric acid were

added to 24 parts by mass of tetraethoxysilane to hydrolyze tetraethoxysilane to prepare a coating solution. This coating solution was coated on a surface of a high refractive index layer to a film thickness after drying of 0.09 μm, and dried at 140°C for 1 minute to form a low refractive index layer.

Further, a coating solution obtained by diluting a perfluoropolyether group-containing silane coupling agent containing of $C_3F_7$-$(OC_3F_6)_{34}$-O-$(CF_2)_2$-$C_2H_4$-O-$CH_2Si(OCH_3)_3$ with perfluorohexane to 0.5% by mass was coated on a surface of the low refractive index layer, and dried at 120°C for 1 minute to form an anti-stain layer having a film thickness of 8 nm.

Thereby, an anti-reflective layer in which a hard coated layer/a high refractive index layer/a low refractive index layer/an anti-stain layer were laminated in this order was formed on a surface of the second adhesion modifying layer of the substrate ray film.

3. Formation of near-infrared ray absorption layer

A coating solution N2-1 (Table 5, solid content concentration: 17% by mass, viscosity: 40 cps) for a near-infrared ray absorption layer having the same formulating composition as that of the Experiment 2-1 was coated on the surface of a second adhesion modifying layer opposite to an anti-reflective layer of the substrate film with the anti-reflective layer formed thereon, to a coating amount after drying of 8.5 g/$m^2$ Coating was carried out by reversely rotating an oblique gravure roll having a diameter of 60 cm. Thereafter, the film was passed and dried at 40°C for 20 seconds with 5 m/second air (first drying step), at 150°C for 20 seconds with 20 m/second air (second drying step), and at 90°C for 10 seconds with 20 m/seconds air (cooling step), to manufacture a near-infrared ray absorption filter.

4. Formation of sticky layer

A transparent sticking agent which is an acrylic acid ester copolymer consisting of n-butyl acrylate (78.4% by mass), 2-ethylhexyl acrylate (19.6% by mass), and acrylic acid (2% by mass) was laminated on a surface of the near-infrared ray absorption layer of the near-infrared ray absorption filter to a film thickness after drying of 0.025 mm by a comma coater method. Further, a silicone-treated PET separator film having a thickness of 0.038 mm was laminated on a surface thereof, to obtain a composite of a near-infrared ray absorption filter having a sticky layer and a separator film.

Regarding the near-infrared ray absorption filter, the aforementioned respective evaluations were performed, and the results are shown in Table 9. Evaluations other than a light resistance test were performed regarding a near-infrared ray absorption filter with no sticky layer provided thereon, and a light resistance experiment was performed regarding a near-infrared ray absorption filter with a sticky layer. As seen from Table 9, the resulting near-infrared ray absorption filter has great absorption in a near-infrared region and a neon light region, and has a great transmittance in a visible light region. In addition, absorption in an ultraviolet region is extremely great, and stability with time (transmittance property, color tone) and light resistance are excellent. Further, appearance of a near-infrared ray absorption layer, and winding property of a filter were better.

Further, regarding an anti-reflective layer of the near-infrared ray absorption filter, anti-stain was also evaluated. Anti-stain was evaluated by wiping property of an oily pen and wiping property of a fingerprint. Wiping property of an oily pen was evaluated by drawing a line on a surface of an anti-reflective layer with an oily pen, wiping the line with a cellulose non-woven fabric (Ben Cotton M-3, available from Asahi Kasei Corporation), and determining removal easiness by visual observation, and wiping property of a fingerprint was evaluated by wiping a fingerprint attached to a surface of an anti-reflective layer with a cellulose non-woven fabric (Ben Cotton M-3, available from Asahi Kasei Corporation), and determining removal easiness by visual observation. Both could be completely wiped off.

In addition, a total thickness (from an anti-reflective layer on a superficialmost surface to a sticky layer on a surface on a display side) of the near-infrared ray absorption filter obtained in the present Example was 0.14 mm, the filter is very thin, and retains the aforementioned excellent property and, when a separate film of the composite is peeled, this can be easily adhered to a subject to be adhered such as a plasma display, utilizing sticking property of a sticky layer. Since this near-infrared ray absorption filter has a smaller thickness than that of the previously known filter as described above, the filter is excellent in workability of its adhesion.

Experiment 4-1-2

According to the same manner as that of Experiment 4-1-1 except that thicknesses of both superficial layers were 5% relative to a total thickness, respectively, in a biaxially oriented laminated polyester film constituting a substrate film, a near-infrared ray absorption filter having an anti-reflective layer, a substrate film and a near-infrared ray absorption layer was manufactured. Further, according to the same manner as that of Experiment 4-1-1 and using this near-infrared ray absorption filter, a near-infrared ray absorption filter having a sticky layer was also manufactured. Evaluation results of these near-infrared ray absorption filters are shown in Table 9. As shown in Table 9, the equivalent property to that

of the near-infrared ray absorption filter obtained in Experiment 4-1-1 is possessed. In addition, the same anti-stain evaluation as that of Experiment 4-1-1 was also carried out, and both of wiping property of an oily pen and wiping property of a fingerprint were better.

Experiment 4-1-3

According to the same manner as that of Experiment 4-1-1 except that regarding the condition for an extruder at a stage of manufacturing an unstretched film upon manufacturing of a substrate film, a temperature of a polymer tube and that of flat die after a filter were changed so that a resin temperature became 285°C, a near-infrared ray absorption filter having an anti-reflective layer, a substrate film and a near-infrared ray absorption layer was manufactured. Further, according to the same manner as that of Experiment 4-1-1 and using this near-infrared ray absorption filter, a near-infrared ray absorption filter having a sticky layer was also manufactured. Evaluation results of these near-infrared ray absorption filters are shown in Table 9.

As shown in Table 9, approximately equivalent properties to those of the near-infrared ray absorption filter of Experiment 4-1-1 are possessed, a degree of uneven distribution of the ultraviolet absorbing agent in a thickness direction in the substrate film is slightly inferior, and the effect of suppressing sublimation of the ultraviolet absorbing agent, and suppressing migration in the film is slightly deteriorated. In addition, accompanied with a change in the condition for an extruder at the stage of manufacturing the unstretched film, the surface appearance of the substrate film is slightly deteriorated. Further, the same anti-stain evaluation as that of Experiment 4-1-1 was also carried out, and both of wiping property of an oily pen, and wiping property of a fingerprint were better.

Experiment 4-1-4

According to the same manner as that of Experiment 4-1-1 except that the surfactant used in the coating solution for forming The near-infrared ray absorption layer was changed to a silicone surfactant (FZ-2105, available from Nippon Unicar Company Limited) having HLB of 11, the near-infrared ray absorption filter having an anti-reflective layer, a substrate film and a near-infrared ray absorption layer was manufactured. Further, according to the same manner as that of Experiment 4-1-1 and using this near-infrared ray absorption filter, the near-infrared ray absorption filter having a sticky layer was also manufactured. Evaluation results of these near-infrared ray absorption filters are shown in Table 9. Since the surfactant having greater HLB (having higher hydrophilicity) than that of the near-infrared ray absorption filter of Experiment 4-1-1 was used, stability with time under a high temperature and a high humility was slightly inferior, and slidability of a surface of the near-infrared ray absorption layer was slightly inferior, thereby, slight winding slippage occurred (evaluation is "◎") . In addition, the same anti-stain evaluation as that of Experiment 4-1-1 was also carried out, and both of wiping property of an oily pen, and wiping property of a fingerprint were better.

Experiment 4-1-5

According to the same manner as that of Experiment 4-1-1 except that the surfactant used in the coating solution for forming the near-infrared ray absorption layer was changed to a silicone surfactant (FZ-2136, available from Nippon Unicar Company Limited) having HLB of 3, a near-infrared ray absorption filter having an anti-reflective layer, a substrate film and a near-infrared ray absorption layer was manufactured. Further, according to the same manner as that of Experiment 4-1-1 and using this near-infrared ray absorption filter, a near-infrared ray absorption filter having a sticky layer was also manufactured. Evaluation results of these near-infrared ray absorption filters are shown in Table 9. Since the surfactant having smaller HLB (having higher hydrophobicity) than that of the near-infrared ray absorption filter of Experiment 4-1-1 was used, leveling property at formation of the near-infrared ray absorption layer was slightly inferior, and a fine defected was slightly increased. In addition, the same anti-stain evaluation as that of Experiment 4-1-1 was also carried out, and both of wiping property of an oily pen, and wiping property of a finger print were better.

Experiment 4-1-6

According to the same manner as that of Experiment 4-1-1 except that an ultraviolet absorbing agent was not blended in a substrate film, a second adhesion modifying layer was not formed on both sides of a substrate film, and a surfactant was not added to a coating solution for forming a near-infrared ray absorption layer, a near-infrared ray absorption filter having an anti-reflective layer, a substrate film and a near-infrared ray absorption layer was manufactured. Further, according to the same manner as that of Experiment 4-1-1 and using this near-infrared ray absorption filter, a near-infrared ray absorption filter having a sticky layer was also manufactured. Evaluation results of the near-infrared ray absorption filter is shown in Table 10.

Since the near-infrared ray absorption filter have a high ultraviolet-ray transmittance as shown in Table 10,

ultraviolet-ray deterioration of the near-infrared ray absorbing dye is great, and light resistance is inferior. In addition, since those filters have no second adhesion modifying layer, adherability between the anti-reflective layer and the substrate film, or between the substrate film and the near-infrared ray absorption layer is inferior as compared with the near-infrared ray absorption filter of Experiment 4-1-1. Further, a surfactant is not added to the coating solution for forming the near-infrared ray absorption layer, dispersity of the near-infrared ray absorbing dye or the dye for adjusting the color tone for neon cutting in the resin is inferior, and appearance of the near-infrared ray absorption layer is deteriorated as compared with the near-infrared ray absorption filter of Experiment 4-1-1. In addition, slidability of the surface of the near-infrared ray absorption layer was inferior, and winding into a roll was difficult.

Experiment 4-1-7

According to the same manner as that of Experiment 4-1-1 except that an anti-reflective layer was not formed, a near-infrared ray absorption filter having a substrate film and a near-infrared ray absorption layer was manufactured. Further, according to the same manner as that of Experiment 4-1-1 and using this near-infrared ray absorption filter, a near-infrared ray absorption filter having a sticky layer was also manufactured. Evaluation results of the near-infrared ray absorption filter are shown in Table 10. Since the near-infrared ray absorption filter has no anti-reflective layer, a surface reflectivity and a surface hardness are inferior as shown in Table 10. In addition, the same anti-stain evaluation as that of Experiment 4-1-1 was also carried out, and a line drawn with an oily pen, and a fingerprint remained also after wiping.

Experiment 4-1-8

According to the same manner as that of Experiment 4-1-1 except that a near-infrared ray absorption layer was not formed, a filter having an anti-reflective layer and a substrate film was manufactured. Further, according to the same manner as that of Experiment 4-1-1 and using this filter, a filter having a sticky layer was also manufactured. Evaluation results of the filter are shown in Table 10. Since the filter has no near-infrared ray absorption layer, the filter have a high transmittance in a near-infrared region as shown in Table 10, and have no fundamental function as a near-infrared ray absorption film. In addition, the filter has no color tone correcting function (neon light absorbing ability). Therefore, a stability with time test, a light resistance test, evaluation of appearance of a near-infrared ray absorption layer, and evaluation of winding property were ceased.

Experiment 4-1-9

According to the same manner as that of Experiment 4-1-1 except that an ultraviolet absorbing agent was not blended in a substrate film, a second adhesion modifying layer was not formed on both sides of the substrate film, and a surfactant was not added to a coating solution forming a near-infrared ray absorption layer, a near-infrared ray absorption filter having an anti-reflective layer, a substrate film and a near-infrared ray absorption layer was manufactured. Further, according to the same manner as that of Experiment 4-1-1 except that this near-infrared ray absorption filter was used, and 3% by mass of a benzotriazole type ultraviolet absorbing agent (TINUVIN386, available from Ciba Specialty Chemicals), and 1% by mass of a hindered phenol type antioxidant (IRGANOX1010, available from Ciba Specialty Chemicals) were blended in a sticky layer, a near-infrared ray absorption filter also having a sticky layer was manufactured. Evaluation results of the near-infrared ray absorption filter is shown in Table 10. As seen from Table 10, since the near-infrared ray absorption layer is provided on incident light (natural light) side than a layer having the ultraviolet absorbing agent [sticky layer], the near-infrared ray absorbing dye deterioration preventing effect due to the ultraviolet absorbing agent is not manifested, and light resistance is at a low level. In addition, since the second adhesion modifying layer is not laminated, adherability between the anti-reflective layer and the substrate film, or between the substrate film and the near-infrared ray absorption layer is inferior as compared with the near-infrared ray absorption filter of Experiment 4-1-1. Further, since a surfactant was not added to the coating solution for forming the near-infrared ray absorption layer, dispersity of the near-infrared ray absorbing dye or the dye for adjusting the color tone for neon cutting in the resin was inferior, and appearance of a near-infrared ray absorption layer is deteriorated as compared with the near-infrared ray absorption filter of Experiment 4-1-1. In addition, slidability of the surface of the near-infrared ray absorption layer was inferior, and winding in a roll was difficult. In addition, as shown in Table 10, a transmittance of the near-infrared ray absorption filter [without a sticky layer provide thereon] in the ultraviolet region is 95%, but in an aspect having a sticky layer, a transmittance in a ultraviolet region was 0%.

Experiment 4-1-10

According to the same manner as that of Experiment 4-1-1 except that a mono-layered biaxially oriented

polyester film was used in a substrate film, a second adhesion modifying layer was not formed on both sided of a substrate film, and a surfactant was not added to a coating solution for forming a near-infrared ray absorption layer, a near-infrared ray absorption filter having an anti-reflective layer, a substrate film and a near-infrared ray absorption layer was manufactured. Further, according to the same manner that of Experiment 4-1-1 and using this near-infrared ray absorption filter, a near-infrared ray absorption filter having a sticky layer was also manufactured. Evaluation results of the near-infrared ray absorption filter is shown in Table 10. Since this near-infrared ray absorption filter has the substrate film having the mono-layered structure, the effect of suppressing sublimation of the ultraviolet absorbing agent and the effect of suppressing bleeding from the interior of the film are inferior, pollution of the film surface due to the ultraviolet absorbing agent, and pollution of an apparatus at a film making step occurred, thereby, a flaw and a foreign matter of the substrate film surface are increased as shown in Table 10, and long term stable productivity is deteriorated.

In addition, since the second adhesion modifying layer is not laminated, adherability between the anti-reflective layer and the substrate film, or between the substrate film and the near-infrared ray absorption layer is inferior as compared with the near-infrared ray absorption filter of Experiment 4-1-1. Further, since a surfactant is not added to the coating solution for forming the near-infrared ray absorption layer, dispersity of the near-infrared ray absorbing dye or the dye for adjusting the color tone for neon cutting in the resin is inferior, and appearance of the near-infrared ray absorption layer is deteriorated as compared with the near-infrared ray absorption filter of Experiment 4-1-1. In addition, since slidability of the surface of the near-infrared ray absorption layer was inferior, and winding in a roll was difficult.

Experiment 4-1-11

According to the same manner as that of Experiment 4-1-1 except that a surfactant used in a coating solution for forming a near-infrared ray absorption layer was changed to a silicone surfactant (FZ-2110, available from Nippon Unicar Company Limited) having HLB of 1, a near-infrared ray absorption filter having an anti-reflective layer, a substrate film and a near-infrared ray absorption layer was manufactured. Further, according to the same manner as that of Experiment 4-1-1 and using this near-infrared ray absorption filter, a near-infrared ray absorption filter having a sticky layer was also prepared. Evaluation results of the near-infrared ray absorption filter is shown in Table 10. In the near-infrared ray absorption filter, since the surfactant having very small HLB (having high hydrophilicity) was used, leveling property at forming of the near-infrared ray absorption layer was inferior, and appearance of the near-infrared ray absorption layer was deteriorated, such as much increase in a fine defect. In addition, since slidability of the surface of a near-infrared ray absorption layer was too better, winding slippage occurred when wound into a roll.

Experiment 4-1-12

According to the same manner as that of Experiment 4-1-1 except that a surfactant used in a coating solution for forming a near-infrared ray absorption layer was changed to a silicone surfactant (TSF4440, available from Toshiba Silicones) having HLB of 14, a near-infrared ray absorption filter having an anti-reflective layer, a substrate film and a near-infrared ray absorption layer was manufactured. Further, according to the same manner as that of Experiment 4-1-1 and using this near-infrared ray absorption filter, a near-infrared ray absorption filter having a sticky layer was also manufactured. Evaluation results of the near-infrared ray absorption filter is shown in Table 10. In the near-infrared ray absorption filter, since the surfactant having very large HLB (having high hydrophilicity) was used, appearance of the near-infrared ray absorption layer was deteriorated, such as much increase in a fine defect. In addition, winding slippage occurred when bound in a roll.

Table 9

| | | Experiment 4-1 | | | | |
|---|---|---|---|---|---|---|
| | | 1 | 2 | 3 | 4 | 5 |
| Light transmittance (%) | Ultraviolet region | 0 | 0 | 0 | 0 | 0 |
| | Visible light region | 61.5 | 61.0 | 61.5 | 61.4 | 62.9 |
| | Neon light region | 34.0 | 35.0 | 34.0 | 34.0 | 34.6 |
| | Near-infrared region | 5.0 | 5.2 | 5.0 | 4.9 | 4.9 |
| Color tone | a value | -4.0 | -4.0 | -4.0 | -4.2 | -4.1 |
| | b value | -6.9 | -7.3 | -6.9 | -6. 9 | -7.5 |

Table continued

| | | Experiment 4-1 | | | | |
|---|---|---|---|---|---|---|
| | | 1 | 2 | 3 | 4 | 5 |
| Stability with time | Transmittance | ◎ | ◎ | ◎ | ○ | ◎ |
| | Color tone | ◎ | ◎ | ◎ | ○ | ◎ |
| Light resistance | R (%) | 95 | 95 | 95 | 93 | 92 |
| Surface reflectivity | (%) | 0. 8 | 0. 8 | 0. 8 | 0. 8 | 0. 8 |
| Surface hardness | | 3H | 3H | 3H | 3H | 3H |
| Appearance of near-infrared ray absorption layer | Fine defect | ◎ | ◎ | ◎ | ◎ | ○ |
| | Coating deterioration | ◎ | ◎ | ◎ | ◎ | ◎ |
| Adherability | (A) layer/(B) layer * | 100 | 100 | 100 | 100 | 100 |
| | (B)layer/(C)layer * | 92 | 92 | 92 | 92 | 92 |
| Degree of uneven distribution of ultraviolet absorbing agent in substrate film | | 0 | 0.08 | 0.16 | 0 | 0 |
| Surface flaw of substrate film | | ◎ | ◎ | ○ | ◎ | ◎ |
| Surface foreign matter of substrate film | | ◎ | ◎ | Δ | ◎ | ◎ |
| Winding property | | ◎ | ◎ | ◎ | ◎ | ◎ |
| * (A) layer: anti-reflective layer, (B) layer: substrate film, (C)layer: near-infrared ray absorption layer | | | | | | |

Table 10

| | | Experiment 4-1 | | | | | | |
|---|---|---|---|---|---|---|---|---|
| | | 6 | 7 | 8 | 9 | 10 | 11 | 12 |
| Light transmittance (%) | Ultraviolet region | 95 | 0 | 0 | 0 | 95 | 0 | 0 |
| | Visible light region | 62.5 | 62.5 | 88.5 | 62.5 | 62.5 | 62.9 | 61.2 |
| | Neon light region | 34.2 | 34.2 | 88.7 | 34.2 | 34.2 | 34.9 | 33.9 |
| | Near-infrared region | 5.0 | 5.0 | 88.9 | 5.0 | 5.0 | 5.0 | 5.0 |
| Color tone | a value | -4.2 | -4.2 | -0.1 | -4.2 | -4.2 | -4.2. | -4.4 |
| | b value | -7 . 3 | -7.3 | 0.6 | -7.3 | -7.3 | -7.6 | -5.9 |
| Stability with time | Transmittance | ◎ | ◎ | - | ◎ | ◎ | ◎ | × |
| | Color tone | ◎ | ◎ | - | ◎ | ◎ | ◎ | × |
| Light resistance | R (%) | 71 | 95 | - | 71 | 71 | 95 | 95 |
| Surface reflectivity | (%) | 0.7 | 3.0 | 0.7 | 0.7 | 0.7 | 0.7 | 0.7 |
| Surface hardness | | 3H | F | 3H | 3H | 3H | 3H | 3H |
| Appearance of near-infrared ray absorption layer | Fine defect | × | ◎ | - | × | × | × | × |
| | Coating deterioration | Δ | ◎ | - | Δ | Δ | Δ | Δ |
| Adherability | (A)layer/(B)layer* | 90 | - | 100 | 90 | 90 | 100 | 100 |
| | (B)layer/(C)layer* | 80 | 92 | - | 80 | 80 | 92 | 92 |
| Degree of uneven distribution of ultraviolet absorbing agent in substrate film | | 0 | 0 | 0 | 0 | 4 | 0 | 0 |
| Surface flaw of substrate film | | ◎ | ◎ | ◎ | ◎ | × | ◎ | ◎ |
| Surface foreign matter of substrate film | | ◎ | ◎ | ◎ | ◎ | × | ◎ | ◎ |

Table continued

| | Experiment 4-1 | | | | | | |
|---|---|---|---|---|---|---|---|
| | 6 | 7 | 8 | 9 | 10 | 11 | 12 |
| Winding property | × | ◎ | - | × | × | × | Δ |
| * (A) layer: anti-reflective layer, (B)layer: substrate film, (C)layer: near-infrared ray absorption layer | | | | | | | |

Experiment 4-2 (Manufacturing of plasma display panel)

A front panel was removed from a plasma display panel (PDS4211J-H, manufactured by Fujitsu), near-infrared ray absorption filters [with a sticky layer provided thereon] manufactured in Experiment 4-1-1 to Experiment 4-1-12 were adhered thereto by a sticky layer, and various functions were evaluated. In plasma display panels using near-infrared ray absorption filters of Experiment 4-1-1 to Experiment 4-1-5, the following effects were confirmed.

(1) Since anti-reflecting property of the surface was imparted, natural light reflection was suppressed, and a reflection of a fluorescent lamp using interior illumination was decreased.
(2) Since the surface hardnessof the filter is high, it is difficult to generate a flaw.
(3) Since anti-stain property is imparted to the filter, even when a fingerprint was adhered by touching with a hand, it could be easily wiped off.
(4) Since the filter possessed neon cutting ability, and a color tone was improved, color reproduction was increased. Specifically, red containing orange turned into pure red, greenish blue turned into clear blue, and yellowish white turned into pure white.
(5) Since the near-infrared ray absorbing effect is imparted to the filter, an erroneous motion of an infrared remote control devices disposed at a periphery could be prevented.
(6) Since light resistance and stability with time of the filter are excellent, the function of the (5) was stable even when used for a long term.

To the contrary, in plasma display panels using respective near-infrared ray absorption filters of Comparative Examples, the following disadvantages were seen. In a panel using the near-infrared ray absorption filter of Experiment 4-1-6, since appearance of the near-infrared ray absorption layer was inferior, image quality was deteriorated. In addition, since light resistance was inferior, a frequency of occurrence of an erroneous motion of an infrared remote control devices disposed at a periphery was increased due to long term use.

Since a panel using the near-infrared ray absorption filter of Experiment 4-1-7 had a high surface reflectivity, natural light reflection was high, there was a reflection of a fluorescent lamp used in interior illumination, and visibility of an image was low. In addition, since the surface hardness was low, a flaw was easily generated, and anti-stain was not imparted, wiping property of a fingerprint attached when a hand was touched was inferior.

Since a panels using the near-infrared ray absorption filter of Experiment 4-1-8 had no near-infrared ray absorbing ability, an erroneous motion of an infrared remote control devices disposed at a periphery occurred. In addition, since neon cutting property was not imparted, color reproduction of an image was inferior.

Since a panel using the near-infrared ray absorption filter of Experiment 4-1-9 was such that the ultraviolet absorbing agent was disposed on a plasma display panel side than the near-infrared ray absorption layer, the light resistance improving effect to natural light [incident light from the anti-reflective layer side] was not manifested, and a frequency of occurrence of an erroneous motion of an infrared remote control devices disposed at a periphery was increased due to long term use. In addition, since appearance of the near-infrared ray absorption layer was inferior, image quality was lowered.

Since a panel using the near-infrared ray absorption filter obtained in Experiment 4-1-10, in particularly, when the substrate film produced after 24 hours or longer from film making initiation was used, has many surface defects of the substrate film, deterioration in quality of an image due to the defect was seen.

Since panels using near-infrared ray absorption filters of Experiment 4-1-11 and Experiment 4-1-12 were inferior in appearance of the near-infrared ray absorption layer, image quality of a plasma display was reduced. In addition, in the near-infrared ray absorption filter of Experiment 4-1-12, since light resistance was inferior, further reduction in image quality was seen by long term use.

In addition, since panels using near-infrared ray absorption filters of Experiment 4-1-6, Experiment 4-1-9 and Experiment 4-1-10 were inferior in adherability of an interface between the substrate film and a functionality manifesting layer [anti-reflective layer and near-infrared ray absorption layer], partial peeling of an interface occurred due to long term use and image quality was reduced.

In addition, since near-infrared ray absorption filters of Experiment 4-1-1 to Experiment 4-1-5 had a small thickness, and were laminated with a sticky layer, when adhesion of the filter was carried out in the state where the plasma display panel surface was wetted with isopropanol, they could be adhered well while mixing of a bubble was suppressed, and had extremely better workability.

Experiment 4-3

Near-infrared ray absorption filters [with no sticky layer provided thereon] obtained in Experiment 4-1-1 to Experiment 4-1-5 were adhered to a front panel of a plasma display panels (PDS4211J-H, manufactured by Fujitsu) using an optical adhesive agent, with the surface of the near-infrared ray absorption layer being the plasma display panel side, and various functions were evaluated. The same result as that of Experiment 4-2 was obtained.

Experiment 4-4 (Manufacturing of near-infrared ray absorption filter having electromagnetic wave interrupting function)

An electronically conductive mesh [electromagnetic wave interrupting layer] was adhered to near-infrared ray absorption filters [with the sticky layer provided thereon] obtained in Experiment 4-1-1 to Experiment 4-1-5 by a sticky layer. The electronic conductive mesh is such that a mesh obtained by knitting a fiber of a diameter of 0.03 mm longitudinally and traversely at a density of 135 per 2.54 cm is plated with nickel and copper by an electroless plating method.
A front panel of a plasma display panel (PDS4211J-H, manufactured by Fujitsu) was removed, each near-infrared ray absorption filter having an electrically conductive mesh was adhered using an adhesive agent, and various functions were evaluated. It could be confirmed that, in addition to the effect confirmed in the Experiment 4-2, the electromagnetic wave interrupting effect could be exhibit.

Experiment 5

In the following Experiment Examples (Experiment 5 to Experiment 8), in addition to the aforementioned measuring and evaluating methods, the following measuring and evaluating methods were also adopted.

[Color difference Δ E-film longitudinal direction (MD direction)]

Regarding a film having a length of 500m obtained in each Experiment Example described later, concerning 51 parts at an interval of 10m from a first end (end on film manufacturing initial side) of the film to a second end (end on film manufacturing completion side) at a central part in the film width direction, a color difference Δ E defined by the following equation (12) was calculated from an L value, an a value, and a b value measured according to the aforementioned color tone measuring method regarding each measuring place, a greatest value among them was regarded as a maximum of a color difference Δ E in the film longitudinal direction.
In addition, in films of respective Experiment Examples described later, all have a color difference Δ E (MD) of 2 or less, and it could be confirmed that a steady region corresponds to a film full length.

$$\Delta E\ (MD) = [(L_a - L_m)^2 + (a_a - a_m)^2 + (b_a - b_m)^2]^{1/2} \quad (12)$$

[Color difference Δ E-film width direction (TD direction)]

Regarding a width direction (TD direction) of films obtained in respective Experiment Examples described later, letting one end to be a first end, and letting other end to be a second end, the both ends were parts to be measured and, at the same time, three measurement parts were set at an equal interval between the both ends, a color difference Δ E defined by the following equation (13) was calculated regarding respective measurement parts from an L value, an a value and a b value measured according to the aforementioned color tone measuring method regarding respective measuring parts, and a greatest value among them was regarded as a maximum of a color difference Δ E in the film width direction.

$$\Delta E\ (TD) = [(L_a - L_m)^2 + (a_a - a_m)^2 + (b_a - b_m)^2]^{1/2} \quad (13)$$

1. Manufacturing of substrate film

A polyethylene terephthalate resin having an intrinsic viscosity of 0.62 dl/g and containing no particles was fed to a biaxial screw extruder, the resin was melt extruded at 290°C through a T die, and adhered to solidify on a cooling rotation metal roll under electrostatic application, to obtain an unstretched film. Then, this unstretched film was heated to 90°C with a roll stretching machine, and longitudinally stretched at 3.5-folded (longitudinal direction stretching), thereafter, the coating solution A for the intermediate layer (Table 1) used in the Experiment 1-1 was coated on this film to a coating amount after drying of 0.5 g/m$^2$, and this film was passed through the hot air at a temperature of 120°C for 20 seconds at an air flow of 10 m/second, to form an intermediate layer. Further, this film was heated to 140°C with a tenter, stretched at 3.7-fold in a width direction, and heat-treated at 235°C while 5% relaxing in a width direction. The thus obtained long substrate film (biaxially stretched PET film) having an intermediate layer on both sides was wound into a roll. The resulting substrate film had a thickness of 100 μm, a total light transmittance of 90.2%, and a haze of 0.5%. A total light transmittance and a haze were measured according to JIS-K7136.

2. Manufacturing of coating solution for forming near-infrared ray absorption layer

Respective components of the coating solution N1-1 (Table 2) for forming a near-infrared ray absorption layer used in Experiment 1-1 were mixed, a dye and a resin were dissolved under warming 40°C, and undissolved matters were removed using a filter having a nominal filtration precision of 1 μm to obtain a coating solution. The coating solution had a solid content consideration of 17% by mass, and a viscosity (viscosity obtained by the aforementioned measuring method) of 40 cps.

Experiment 5-1

The coating solution N1-1 for forming a near-infrared ray absorption layer was continuously coated on the long substrate film by reversely rotating an oblique gravure roll (diameter: 60 cm, line number: 45 lines/2.54 cm, depth degree: 290 μm, cell volume: 139 cm$^3$/m$^2$) with a ceramic doctor blade contacted therewith at an angle of 50 degrees and a contact pressure of 0.3 MPa. Thereafter, this film was introduced into a drying furnace, and dried by passing through a drying zone at a temperature of 40°C and an air flow of 5 m/second for 20 seconds (first drying step), subsequently, passing through a drying zone at a temperature of 150°C and an air flow of 20 m/second for 20 seconds (second drying step), and passing through a cooling zone at a temperature of 90°C and an air flow of 20 m/second for 10 seconds (cooling step).

An on-line color difference meter (MCPD-3000, manufactured by Otsuka Electronics Co, Ltd.) was disposed between an outlet of a drying furnace to winding of a near-infrared ray absorption film. A rate ratio G/F of a rotation rate G of a gravure roll relative to a film running rate F was gradually changed from 0.90 to 0.94 so that the L value measured by this on-ine color difference meter became approximately constant, and a drying temperature was gradually changed from 150°C to 152°C so that the a value and the b value became constant. Like this, while a color tone of the film in a longitudinal direction was controlled, a long near-infrared ray absorption film was continuously manufactured, and wound up into a roll. Evaluation results of this near-infrared ray absorption film are shown in Table 11.

Experiment 5-2

In Experiment 5-1, control of the L value at continuous manufacturing of the long near-infrared ray absorption film was carried out by adjusting a contact angle (interior angle) between the doctor blade and the gravure roll, and the contact angle was gradually changed from 50 degrees to 46 degrees. Conditions other than the contact angle were set as in Experiment 5-1, and a long near-infrared ray absorption film was continuously manufactured, and wound up into a roll. Evaluation results of this near-infrared ray absorption film are shown in Table 11.

Experiment 5-3

In Experiment 5-1, a variation in a color tone at continuous manufacturing of a long near-infrared ray absorption film was managed by the a value and the b value, and an air flow in a drying furnace for which a drying temperature was set at 150°C so that these became approximately constant, was gradually changed from 20 m/second to 23 m/second. Conditions other than these steps managing methods and conditions were set as in Experiment 5-1, a long near-infrared ray absorption film was continuously manufactured, and wound up into a roll. Evaluation results of this near-infrared ray absorption film are shown in Table 11.

Experiment 5-4

In Experiment 5-1, a material of the doctor blade was changed to a Swedish steel, and a rate ration G/F was gradually changed from 0.90 to 1.2 while the L value was managed with an on-line color difference meter. Conditions other than them were set as in Experiment 5-1, a long near-infrared ray absorption film was continuously manufactured, and wound up into a roll. Evaluation results of this near-infrared ray absorption film are shown in Table 11.

Experiment 5-5

In Experiment 5-1, coating condition and drying condition were not changed at all at continuous manufacturing of a long near-infrared ray absorption film. Conditions other than them were set as in Experiment 5-1, a long near-infrared ray absorption film was continuously manufactured, and wound of into a roll. Evaluation results of this near-infrared ray absorption film are shown in Table 11.

Experiment 5-6

In Experiment 5-1, a material of the doctor blade was changed to a Swedish steel, and coating condition and drying condition were not changed at all at continuous manufacturing of a long near-infrared ray absorption film. Conditions other than them were set as in Experiment 5-1, a long near-infrared ray absorption film was continuously manufactured, and was wound up into a roll. Evaluation results of this near-infrared ray absorption film are shown in Table 11.

Table 11

| Experiment | Light transmittance (%) | | Color tone | | | Maximum of color difference ΔE(MD) | Appearance of near-infrared ray absorption layer | |
|---|---|---|---|---|---|---|---|---|
| | Near-infrared region | Visible light region | L value | a value | b value | | At manufacturing initiation | Immediately before manufacturing completion |
| 5-1 | 4.5 | 72.6 | 86.2 | -1.2 | 5.8 | 0.3 | ◎ | ◎ |
| 5-2 | 4.6 | 71.6 | 86.2 | -1.3 | 6.0 | 0.3 | ◎ | ◎ |
| 5-3 | 4.4 | 72.9 | 86.4 | -1.3 | 5.8 | 0.4 | ◎ | ◎ |
| 5-4 | 4.6 | 72.8 | 86.6 | -1.2 | 5.6 | 1.3 | ◎ | △ |
| 5-5 | 4.8 | 73.2 | 86.9 | -1.0 | 5.5 | 2.1 | ◎ | ○ |
| 5-6 | 5.0 | 74.6 | 87.1 | -0.9 | 5.3 | 3.0 | ◎ | △ |

As seen from Table 11, near-infrared ray absorption films obtained in Experiment 5-1 to Experiment 5-4 have a low transmittance in a near-infrared region, and a high transmittance in a visible light region. Further, a maximum of a color difference ΔE (MD) of the near-infrared ray absorption film in a longitudinal direction is small, and a variation in a color tone of the film in a longitudinal direction was suppressed. In addition, coated film appearance of the near-infrared ray absorption layer was very good.

In addition, the near-infrared ray absorption film obtained in Experiment 5-4 had a greater variation in a color tone at continuous manufacturing as compared with the near-infrared ray absorption film obtained in Experiment 5-1. For this reason, it is necessary to greatly change a rate ratio G/F and, finally, a variation in a color tone of the near-infrared ray absorption film became slightly greater. Further, since a final rate ratio G/F was set at a great value (1.2), a lack of thickness uniformity at a traverse step became greater at a later stage of manufacturing.

To the contrary, in the near-infrared ray absorption film obtained in Experiment 5-5, since a variation in the color tone at continuous manufacturing became great, a variation in the color tone of the near-infrared ray absorption film in the longitudinal direction also became great. In addition, coated film appearance of the near-infrared ray absorption layer was such that a streak-like irregularity became great as in a later stage of manufacturing. Further, in the near-infrared ray absorption film obtained in Experiment 5-6, a variation in the color tone in the longitudinal direction became greater than that of the near-infrared ray absorption film obtained in Experiment 5-5, and appearance of the near-infrared ray absorption layer was deteriorated. This was thought that the coating amount of the coating solution varied due to abrasion of the doctor blade.

Experiment 6

Using the long substrate film manufactured in the Experiment 5, and the coating solution N2-1 (Table 5) for forming a near-infrared ray absorption layer used in the Experiment 2-1, and according to the following procedure, long near-infrared ray absorption films were continuously manufactured, and wound up into rolls.

Experiment 6-1

The coating solution N2-1 for forming a near-infrared ray absorption layer was continuously coated on the long substrate film by reversely rotating an oblique line gravure roll (diameter: 60 cm, line number: 45 lines/2.54 cm, depth degree: 290 μm, cell volume: $139 cm^3/m^2$) with a ceramic doctor blade contacted therewith at an angle of 50 degrees and a contact pressure of 0.3 MPa. Thereafter, this was guided into a drying furnace, and dried by passing through a drying zone at a temperature of 40°C and an air flow of 5 m/second for 20 seconds (first drying step), subsequently, passing through a drying zone at a temperature of 150°C and an air flow of 20 m/second for 20 seconds (second drying step), and passing through a cooling zone at a temperature of 90°C and an air flow of 20 m/second for 10 seconds (cooling step).

In addition, an on-line color difference meter (MCPD-3000, manufactured by Otsuka Electronics Co., Ltd.) was disposed between an outlet of the drying furnace and winding position of a near-infrared ray absorption film. A rate ratio G/F of a rotation rate G of the gravure roll relative to a film running rate F was gradually changed from 0.90 to 0.94 so that the L value measured with this on-line color difference meter became approximately constant, and a drying temperature was gradually changed from 150°C to 152°C so that the a value and the b value became constant. Like this, while the color tone of the film in a longitudinal direction was controlled, a long near-infrared ray absorption film was continuously manufactured, and wound up into a roll. Assessment results of this near-infrared ray absorption film are shown in Table 12.

Experiment 6-2

In Experiment 6-1, control of the L value at continuous manufacturing of a long near-infrared ray absorption film was performed by adjusting a contact angle (interior angle) between the doctor blade and the gravure roll, and the contact angle was gradually changed from 50 degrees to 46 degrees. Conditions other than this were set as in Experiment 6-1, and a long near-infrared ray absorption film was continuously manufactured, and wound up into a roll. Assessment results of this near-infrared ray absorption film are shown in Table 12.

Experiment 6-3

In Experiment 6-1, a variation in the color tone at continuous manufacturing of a long near-infrared ray absorption film was managed by the a value and the b value, and an air flow in the drying furnace for which a drying temperature is set at 150°C so that these became approximately constant was gradually changed from 20 m/second to 23 m/second. Conditions other than these step managing methods and conditions were set as in Experiment 6-1, and a long near-infrared ray absorption film was continuously manufactured, and wound up into a roll. Assessment results of this near-infrared ray absorption film are shown in Table 12.

Experiment 6-4

In Experiment 6-1, step management at continuous manufacturing of a long near-infrared ray absorption film was performed not by the color tone, but by a light transmittance at a wavelength of 585 nm using an on-line spectrophotometer (MCPD-3000, manufactured by Otsuka Electronics Co., Ltd.), and the rate ratio F/G was gradually changed from 0.90 to 0.95 so that this transmittance became approximately constant. Conditions other than these step management methods and conditions were set as in Experiment 6-1, and a long near-infrared ray absorption film was continuously manufactured, and wound up into a roll. Assessment results of this near-infrared ray absorption film are shown in Table 12.

Experiment 6-5

According to the same manner as that of Experiment 6-1 except that the material of the doctor blade was changed to a Swedish steel, and the rate ratio G/F was gradually changed from 0.90 to 1.2 while the L value was managed with the on-line color difference meter in Experiment 6-1, a long near-infrared ray absorption film was continuously manufactured, and wound up into a roll. Assessment results of this near-infrared ray absorption film are shown in Table 12.

Experiment 6-6

In Experiment 6-1, the material of the doctor blade was changed to nickel, and the rate ratio G/F was gradually changed from 0.90 to 1.13 while the L value was managed with the on-line color difference meter. Conditions other than this condition were set as in Experiment 6-1, a long near-infrared ray absorption film was continuously manufactured, and wound up into a roll. Assessment results of this near-infrared ray absorption film are shown in Table 12.

Table 12

| | Light transmittance(%) | | | Color tone | | | Maximum of color difference ΔE(MD) | Appearance of near-infrared absorption layer | |
|---|---|---|---|---|---|---|---|---|---|
| | Near-infrared region | Neon light region | Visible light region | L value | a value | b value | | At manufacturing initiation | Immediately before manufacturing completion |
| Exp. 6-1 | 5.0 | 34.2 | 62.5 | 75.5 | -4.2 | -7.3 | 0.2 | ◎ | ◎ |
| Exp. 6-2 | 5.2 | 34.7 | 63.0 | 75.7 | -4.1 | -7.1 | 0.3 | ◎ | ◎ |
| Exp. 6-3 | 5.2 | 34.3 | 62.7 | 75.6 | -4.2 | -7.4 | 0.2 | ◎ | ◎ |
| Exp. 6-4 | 5.5 | 34.5 | 62.8 | 75.6 | -4.3 | -7.4 | 1.1 | ◎ | ◎ |
| Exp. 6-5 | 5.7 | 34.9 | 62.9 | 75.8 | -4.0 | -7.1 | 1.5 | ◎ | △ |
| Exp. 6-6 | 5.6 | 34.7 | 62.8 | 75.6 | -4.2 | -7.2 | 0.9 | ◎ | ○ |

As seen from Table 12, near-infrared ray absorption films obtained in Experiment 6-1 to Experiment 6-6 have low transmittances in the near-infrared region and the visible light region (neon light region) having a wavelength of orange, and have high transmittances in the visible light region other than orange. Further, the maxima of the color difference ΔE(MD) of the films in a longitudinal direction are small, and the variations in the color tone of the films in a longitudinal direction are suppressed. In addition, appearances of the near-infrared ray absorption layer are very good.
In addition, in near-infrared ray absorption films obtained in Experiment 6-5 and Experiment 6-6, the variations in the color tone at manufacturing were greater (slightly great, in Experiment 6-6) as compared with the near-infrared ray absorption film obtained in Experiment 6-1. For this reason, it was necessary to greatly change the rate ratio G/F, and the final variation in the color tone of the films became slightly great. Further, since the final rate ratio G/F were made to be great (Experiment 6-5: 1.2, Experiment 6-6; 1.13), the lacks of uniformity of the thickness such as traverse step spots of the long near-infrared ray absorption film became greater at later stage of manufacturing.

Experiment 7

1. Manufacturing substrate film

Using the long substrate film having the intermediate layer on both sides manufactured in Experiment 5, in a TD direction of this substrate film, the film was slit at a 1.3m width from a central part, and used in manufacturing near-infrared ray absorption film rolls.

2. Manufacturing of coating solution for forming near-infrared ray absorption layer

Using the coating solution N2-1 (Table 5) for forming a near-infrared ray absorption layer used in the Experiment 2-1, and according to the following procedure, long near-infrared ray absorption films were continuously manufactured, and wound up into rolls.

Experiment 7-1

Using a reverse gravure kiss coating apparatus, the coating solution N2-1 for forming a near-infrared ray absorption layer was coated on the substrate film. The apparatus used in coating was the oblique line gravure roll (diameter: 60 cm, line number: 45 lines/2.54 cm, depth degree: 290 μm, cell volume: 139 $cm^3/m^2$). This was contacted with a ceramic doctor blade, and the coating solution was coated by reversely rotating the gravure roll. A running rate F of the substrate film was 20 m/min, a rotation rate of the gravure roll was 18 m/min (rate ratio G/F was 0.9), a kiss length was 10 mm, and a tension in a MD direction at a coating part of the substrate film was 0.7 $N/mm^2$.
After coating of the coating solution, the film was guided into a drying furnace, and dried by passing through a drying zone at a temperature of 40°C and an air flow of 5 m/second for 20 seconds (first drying step), subsequently, passing through a drying zone at a temperature of 150°C and an air flow of 20 m/second for 20 seconds (second drying step) and, further, passing through a cooling zone at a temperature of 90°C and an air flow of 20 m/second for 10 seconds (cooling step). Like this, a long near-infrared ray absorption film having a width (TD direction) of 1.275m was continuously manufactured, and wound into a roll. Assessment results of this near-infrared ray absorption film are shown in Table 13.

Experiment 7-2

According to the same manner as that of Experiment 7-1 except that the tension in the MD direction at the coating part of the substrate film was changed to 1.0 $N/mm^2$, a long near-infrared ray absorption film was continuously manufactured, and wound up into a roll. Assessment results of this near-infrared ray absorption film are shown in Table 13.

Experiment 7-3

According to the same manner as that of Experiment 7-1 except that the tension in the MD direction at the coating part of the substrate film was changed to 1.2 $N/mm^2$, long near-infrared ray absorption film was continuously manufactured, and wound up into a roll. Assessment results of this near-infrared ray absorption film are shown in Table 13.

Experiment 7-4

According to the same manner as that of Experiment 7-1 except that the tension in the MD direction at the coating part of the substrate film was changed to 0.5 $N/mm^2$, a long near-infrared ray absorption film was continuously manufactured, and wound up into a roll. Assessment results of this near-infrared ray absorption film are shown in Table 13.

Experiment 7-5

According to the same manner as that of Experiment 7-1 except that the material of the doctor blade was changed to a Swedish steel, a long near-infrared ray absorption film was continuously manufactured, and wound up into a roll. Assessment results of this near-infrared ray absorption film are shown in Table 13.

Experiment 7-6

According to the same manner as that of Experiment 7-1 except that cyclopentanone and toluene were increased at an equivalent amount so that a solid content concentration became 15% by mass in the coating solution for forming a near-infrared ray absorption layer, and the rate ratio G/F was changed to 1.6, a long near-infrared ray absorption film was continuously manufactured, and wound up into a roll. Assessment results of this near-infrared ray absorption film are shown in Table 13.

Experiment 7-7

According to the same manner as that of Experiment 7-1 except that the contact angle of the doctor blade was 75 degrees, and the rate ratio G/F was changed to 0.8, a long near-infrared ray absorption film was continuously manufactured, and wound up into a roll. Assessment results of this near-infrared ray absorption film are shown in Table 13.

Table 13

| | Light transmittance (%) | | | Color tone | | | Maximum of color difference ΔE (TD) | Appearance of near-infrared ray absorption layer |
|---|---|---|---|---|---|---|---|---|
| | Near-infrared region | Neon light region | Visible light region | L value | a value | b value | | |
| Exp. 7-1 | 5.0 | 34.2 | 62.5 | 75.5 | -4.2 | -7.3 | 0.2 | ○ |
| Exp. 7-2 | 5.1 | 34.3 | 62.5 | 75.5 | -4.2 | -7.3 | 0.4 | ○ |
| Exp. 7-3 | 5.2 | 34.3 | 62.7 | 75.6 | -4.1 | -7.2 | 0.8 | ○ |
| Exp. 7-4 | 5.0 | 34.2 | 62.4 | 75.6 | -4.2 | -7.3 | 0.2 | ○ |
| Exp. 7-5 | 5.0 | 34.2 | 62.5 | 75.5 | -4.1 | -7.3 | 0.4 | ○ |
| Exp. 7-6 | 5.2 | 34.7 | 62.8 | 75.6 | -4.0 | -7.1 | 0.7 | ○ |
| Exp. 7-7 | 5.4 | 34.8 | 62.9 | 75.8 | -3.9 | -7.0 | 0.9 | ○ |

As seen from Table 13, near-infrared ray absorption films obtained in Experiment 7-1 to Experiment 7-7 have low transmittances in the near-infrared region and the visible light region (neon light region) having a wavelength of orange, and have high transmittances in the visible light other than orange. Further, the maxima of color difference ΔE (TD) in a TD direction of films are small, and variations in the color tone in a TD direction of films are suppressed. In addition, appearances of near-infrared ray absorption layer are very good.

Experiment 8

1. Manufacturing of substrate film

Using the long substrate film having the intermediate layer on both sides manufactured in Experiment 5, in a TD direction of this substrate film, the film was slit at a 1.3m width from a central part, and used in manufacturing near-infrared ray absorption film rolls.

2. Preparation of coating solution for forming near-infrared ray absorption layer

Using the coating solution N1-1 (Table 2) for forming a near-infrared ray absorption layer used in the Experiment 1-1, and according to the following procedure, long near-infrared ray absorption films were continuously manufactured, and wound up into rolls.

Experiment 8-1

The coating solution for forming a near-infrared ray absorption layer was coated on the substrate film using a reverse gravure kiss coating apparatus. The apparatus used in coating is the oblique line gravure roll (diameter: 60 cm, line number: 45 lines/2.54 cm, depth degree: 290 μm, cell volume: 139 $cm^3/m^2$).

This was contacted with a ceramic doctor blade, and the coating solution was coated by reversely rotating the gravure roll. A running rate F of a substrate film was 20m/min, a rotation rate of a gravure roll was 18m/min (rate ratio G/F is 0.9), a kiss length was 10 mm, and a tension in a MD direction at a coating part of the substrate film was 0.7 $N/mm^2$.

After coating of the coating solution, the film was guided into a drying furnace, and dried by passing through a drying zone at a temperature of 40°C and an air flow of 5 m/second for 20 seconds (first drying step), subsequently, passing through a drying zone at a temperature of 150°C and an air flow of 20 m/second for 20 seconds (second drying step) and, further, passing through a cooling zone at a temperature of 90°C and an air flow of 20 m/second for 10 seconds (cooling step) . Like this, a long near-infrared ray absorption film having a width (TD direction) of 1.275m was continuously manufactured, and wound up into a roll. Assessment results of this near-infrared ray absorption film are shown in Table 14.

Experiment 8-2

According to the same manner as that of Experiment 8-1 except that the tension in the MD direction at the coating part of the substrate film was changed to 1.0 $N/mm^2$, a long near-infrared ray absorption film was continuously manufactured, and wound up into a roll. Assessment results of this near-infrared ray absorption film are shown in Table 14.

Experiment 8-3

According to the same manner as that of Experiment 8-1 except that the tension in the MD direction at the coating part of the substrate film was changed to 1.2 $N/mm^2$, a long near-infrared ray absorption film was continuously manufactured, and wound up into a roll. Assessment results of this near-infrared ray absorption film are shown in Table 14.

Experiment 8-4

According to the same manner as that of Experiment 8-1 expect that the tension in the MD direction at the coating part of the substrate film was changed to 0.5 $N/mm^2$, a long near-infrared ray absorption film was continuously manufactured, and wound up into a roll. Assessment results of this near-infrared ray absorption film are shown in Table 14.

Experiment 8-5

According to the same manner as that of Experiment 8-1 expect that the material of the doctor blade was changed to a Swedish steel, a long near-infrared ray absorption film was continuously manufactured, and wound up into a roll. Assessment results of this near-infrared ray absorption film are shown in Table 14.

Experiment 8-6

According to the same manner as that of Experiment 8-1 expect that cyclopentanone and toluene were increased at an equivalent amount so that a solid content concentration became 15% by mass in the coating solution for forming a near-infrared ray absorption layer, and the rate ratio G/F was changed to 1.6, a long near-infrared ray absorption film was continuously manufactured, and wound up into a roll. Assessment results of this near-infrared ray absorption film are shown in Table 14.

Experiment 8-7

According to the same manner as that of Experiment 8-1 except that the contact angle of the doctor blade was 75 degrees, and the rate ratio G/F was changed to 0.8, a long near-infrared ray absorption film was continuously manufactured, and wound up into a roll. Assessment results of this near-infrared ray absorption film are shown in Table 14.

Experiment 8-8

According to the same manner as that of Experiment 8-1 except that the tension in the MD direction at the coating part of the substrate film was changed to 1.4 $N/mm^2$, a long near-infrared ray absorption film was continuously manufactured, and wound up into a roll. Assessment results of this near-infrared ray absorption film are shown in Table 14.

Experiment 8-9

According to the same manner as that of Experiment 8-1 expect that the tension in the MD direction at the coating part of the substrate film was changed to 0.3 $N/mm^2$, a long near-infrared ray absorption film was tried to be continuously manufactured. However, at coating of the coating solution, the substrate film meandered, and a long near-infrared ray absorption film could not be wound up into a roll better. Therefore, the film was not assessed.

Table 14

| | Light transmittance (%) | | Color tone | | | Maximum of color difference ΔE(TD) | Appearance of near-infrared ray absorption layer |
|---|---|---|---|---|---|---|---|
| | Near-infrared region | Visible light region | L value | a value | b value | | |
| Experiment 8-1 | 4.5 | 72.6 | 86.2 | -1.2 | 5.8 | 0.2 | ○ |
| Experiment 8-2 | 4.5 | 72.5 | 86.2 | -1.2 | 5.7 | 0.4 | ○ |
| Experiment 8-3 | 4.7 | 72.8 | 86.6 | -1.1 | 5.6 | 0.8 | ○ |
| Experiment 8-4 | 4.5 | 72.6 | 86.2 | -1.2 | 5.8 | 0.2 | ○ |
| Experiment 8-5 | 4.5 | 72.5 | 86.2 | -1.2 | 5.7 | 0.4 | ○ |
| Experiment 8-6 | 4.7 | 72.8 | 86.3 | -1.0 | 5.5 | 0.7 | ○ |
| Experiment 8-7 | 4.7 | 72.8 | 86.5 | -1.0 | 5.6 | 0.9 | ○ |
| Experiment 8-8 | 4.8 | 72.9 | 86.9 | -0.9 | 5.4 | 1.2 | × |

As apparent from Table 14, in near-infrared ray absorption films obtained in Experiment 8-1 to Experiment 8-7, transmittances in the near-infrared region are low, and transmittances in the visible light region are high. Further, maxima of color difference ΔE (TD) in the TD direction of films are small, and variations in the color tone in the TD direction of films are suppressed. In addition, appearances of the near-infrared ray absorption layer are very good.
To the contrary, in the near-infrared ray absorption film obtained in Experiment 8-8, a few belt-like streaks were generated over a MD direction at a central part in a TD direction, and a variation in the color tone in a TD direction became great.

Experiment 9

In the present Experiment Example, in addition to the aforementioned measuring and assessing methods, the following measuring and assessing methods were adopted.

[Acid value of resin]

Zero point two grams of a resin which had been dried for 2 hours under the condition of 100°C and 133 Pa was dissolved in 20 ml of chloroform, and this was titrated with a KOH ethanol solution having a concentration of 0.1 mol% to determine an equivalent per $10^6$g(1t) (eq./t). As an indicator for determination, phenolphthalein was used.

[Spectroscopic properties]

Using an autographic recording spectrophotometer (U-2001, manufactured by Hitachi, Ltd.), a light transmittance in a range of a wavelength of 1100 nm to a wavelength of 200 nm was measured.
[b*]
This was measured with a C light source using a color difference meter (ZE2000 , manufactured by Nippon Denshoku Industries Co., Ltd.).

[Environmental stability]

A sample was allowed to stand for 500 hours in the atmosphere of a temperature of 60°C and a relative humidity of 95%, thereafter, the aforementioned spectroscopic properties and b* were measured, a maximum of a changed amount V(%) in a transmittance was calculated using the following equation (14), and Δb* was calculated using the following equation (15).

$$V=100\times\left|T_{0(WL)}-T_{1(WL)}\right|/T_{0(WL)} \qquad (14)$$

$$\Delta b^{*}=b^{*}_{1} - b^{*}_{0} \qquad (15)$$

[The lack of coating uniformity]

A sample was cut off in a size of 15cm×15cm from the near-infrared ray absorption film, and this was further cut off in a total 9 of samples having a size of 5cm×5cm. Regarding the 9 samples, L*(using C light source) was measured using the color difference meter (ZE2000, manufactured by Nippon Denshoku Industries Co., Ltd.), and a difference between a maximum and a minimum thereof was obtained.

Experiment 9-1-1

1. Synthesis of resin for first adhesion modifying layer

A stainless steel autoclave equipped with a stirrer, a thermometer and a partial refluxing condenser was charged with 163 parts by mass of dimethyl terephthalate, 163 parts by mass of dimethyl isophthalate, 169 parts by mass of 1, 4-butanediol, 324 parts by mass of ethylene glycol, and 0.5 part by mass of tetra-n-butyl titanate, and a temperature was elevated from 160°C to 220°C to perform a transesterification reaction over 4 hours.
Then, 14 parts by mass of fumaric acid and 203 parts by mass of sebacic acid were added, and a temperature

was elevated from 200°C to 220°C over 1 hour to perform an esterification reaction. Then, a temperature was elevated to 255°C, the autoclave was gradually evacuated, and the reaction was performed under a pressure of 29 Pa for 1.5 hours. A copolymerized polyester resin (A-1) was obtained. The resulting copolymerized polyester resin (A-1) was pale yellow transparent. A composition and a weight-average molecular weight measured by nuclear magnetic resonance analysis (NMR) are shown in Table 15.

Then, the copolymerized polyester resin (A-1) was grafted. Seventy five parts by mass of the copolymerized polyester resin (A-1), 56 parts by mass of methyl ethyl ketone and 19 parts by mass of isopropanol were placed into a reactor equipped with a stirrer, a thermometer, a refluxing device and a quantitation addition device, and the mixture was heated and stirred at 65°C to dissolve the resin. After the resin was completely dissolved, 15 parts by mass of maleic anhydride was added to the polyester solution.

Then, a solution obtained by dissolving 10 parts by mass of styrene and 1.5 parts by mass of azobisdimethylvaleronitrile in 12 parts by mass of methyl ethyl ketone was added dropwise to the polyester solution at a rate of 0.1 ml/min, and stirring was further continued for 2 hours. Sampling for analysis was performed from the reaction solution, and 5 parts by mass of methanol was made to be contained therein. Then, 300 parts by mass of water and 15 parts by mass of triethylamine were added to the reaction solution, followed by stirring for 1 hour.

Thereafter, an inner temperature of the reactor was elevated to 100°C, and methyl ethyl ketone, isopropanol, and excessive triethylamine were distilled off by distillation. A pale yellow transparent water-dispersed graft resin (B-1a, first adherability modifying resin) was obtained. Regarding this water-dispersed graft resin (B-1a), an acid value measured by the aforementioned method was 1400 eq./t.

2. Preparation of coating solution for first adhesion modifying layer

Forty parts by mass of a 25% by mass aqueous dispersion of a water-dispersing graft resin (B-1a), 24 parts by mass of water and 36 parts by mass of isopropanol were mixed, and propionic acid and an anionic surfactant were added at 1% by mass relative to a coating solution, respectively, and a colloidal silica fine particle (Snowtex OL, manufactured by Nissan Chemical Industries, Ltd.; average particle diameter 40 nm) aqueous dispersion was added at 5% by mass in terms of a silica amount relative to a resin solid content to prepare a coating solution (C-1).

3. Manufacturing of substrate film and formation of first adhesion modifying layer

A PET resin pellet having an intrinsic viscosity of 0.62 dl/g and containing substantially no particles was dried at 135°C for 6 hours under reduced pressure at 133 Pa. Thereafter, this pellet was supplied to a biaxial extruder, melt extruded into a sheet at about 280°C, and rapidly cooled, adhered and solidified on a rotation cooling metal roll retained at a surface temperature of 20°C by electrostatic application method, to prepare an unstretched PET sheet having a thickness of 1400 μm.

This unstretched PET sheet was heated to 100°C with a heated roll group and an infrared-ray heater and, thereafter, stretched at 3.5-fold in a longitudinal direction with a roll group having a circumferential rate difference to prepare a monoaxially stretched PET film.

Then, the coating solution (C-1) was coated on both sides of the PET film at a coating amount after drying of 0.6 g/$m^2$ by a reverse roll method, and this was dried at 80°C for 20 seconds. After drying, this was subsequently stretched at 4.0-fold in a width direction at 120°C with a tenter, a first adhesion modifying layer was heated at 260°C for 0.5 second with an infrared ray heater in the state where a length in the film width direction was fixed, and 3% relaxation treatment in a width direction was performed under the condition of 200°C for 23 seconds to prepare a substrate film (D-1) with a first adhesion modifying layer laminated thereon.

4. Formation of near-infrared ray absorption layer

A coating solution N1-3 for forming a near-infrared ray absorption layer having a composition shown in Table 16 was prepared. This coating solution was coated on one side of the substrate film (D-1) with the first adhesion modifying layer laminated thereon to a coating amount after drying of 7.0 g/$m^2$ with a gravure roll, and this was hot air-dried at 130°C for 1 minute to prepare a near-infrared ray absorption film No.1. In the near-infrared ray absorption layer of this near-infrared ray absorption film No.1, a content of a diimmonium salt type compound relative to a resin was 3.4% by mass.

Assessment results of the near-infrared ray absorption film No.1 are shown in Table 18 and Fig.5. Fig.5 is a transmittance curve obtained by spectroscopic property measurement of the near-infrared ray absorption film No.1

Experiment 9-1-2

According to the same manner as that of Experiment 9-1-1 except that the following water-dispersing graft

resin (B-1b) as a resin for a first adhesion modifying layer was used in place of the water-dispersing graft resin (B-1a), a near-infrared ray absorption film No.2 was obtained. Assessment results of this near-infrared ray absorption film No. 2 are also described in Table 18.

From 75 parts by mass of the copolymerized polyester resin (A-1), 10 parts by mass of maleic anhydride, 7 parts by mass of styrene, and 8 parts by mass of ethyl acrylate, a water-dispersing graft resin (B-1b) was synthesized as in the water-dispersing graft resin (B-1a) of Experiment 9-1-1. Regarding the resulting water-dispersing graft resin (B-1b), an acid value measured by the aforementioned method was 950 eq./t.

Experiment 9-1-3

A copolymerized polyester resin (A-2) having a composition as measured by NMR, and a weight-average molecular weight as measured by GPC described in Table 15 was synthesized as in the copolymerized polyester resin (A-1) of Experiment 9-1-1. Further, according to the same manner as that of the water-dispersing graft resin (B-1a) of Experiment 9-1-1 except that this copolymerized polyester resin (A-2) was used, a water-dispersing graft resin (B-2) was synthesized. Regarding the resulting water-dispersing graft resin (B-2), an acid value measured by the aforementioned method was 1370 eq./t.

According to the same manner as that of Experiment 9-1-1 except that the water-dispersing graft resin (B-2) was used as a resin for forming a first adhesion modifying layer in place of the water-dispersing graft resin (B-1a), a near-infrared ray absorption film No.3 was obtained. Assessment results of this near-infrared ray absorption film No.3 are also described in Table 18.

Experiment 9-1-4

According to the same manner as that of Experiment 9-1-1 except that a resin used in a near-infrared ray absorption layer was changed to the following copolymerized polyester resin, a near-infrared ray absorption film No.4 was manufactured. Assessment results of this near-infrared ray absorption film No.4 are also described in Table 18.

5. Synthesis of resin for forming near-infrared ray absorption layer

An autoclave equipped with a thermometer and a stirrer was charged with 136 parts by mass of dimethyl terephthalate, 58 parts by mass of dimethyl isophthalate, 96 parts by mass of ethylene glycol, 137 parts by mass of tricyclodecanedimethanol, and 0.09 part by mass of antimony trioxide, and a transesterification reaction was performed over 180 minutes while a temperature was elevated from 170°C to 220°C. Then, a temperature of the reaction system was elevated to 245°C, a pressure was controlled at not lower than 1 mmHg and not higher than 10 mmHg, and the reaction was continued for 180 minutes to prepare a copolymerized polyester resin. The resulting copolymerized polyester resin had an intrinsic viscosity of 0.40 dl/g, and Tg of 90°C. Further, a copolymerization compositional ratio by NMR analysis was terephthalic acid: 71 mole%, isophthalic acid: 29 mole% relative to an acid component 100 mole%, and ethylene glycol: 28 mole%, tricylodecanedimethanol: 72 mole% relative an alcohol component 100mole%.

Experiment 9-1-5

According to the same manner as that of Experiment 9-1-1 except that a resin for forming a near-infrared ray absorption layer was changed to the following acryl type polymer, a near-infrared ray absorption film No. 5 was manufactured. Assessment results of this near-infrared ray absorption film No.5 are also described in Table 18.

6. Synthesis of resin for forming near-infrared ray absorption layer

Sixty parts by mass of t-butyl methacrylate as a monomer, 120 parts by mass of ethyl acetate, 120 parts by mass of methanol, and 0.51 part by mass of azobisisobutyronitrile were placed into a reactor, and the mixture was reacted for 8 hours while stirring at 60°C under the nitrogen atmosphere. After the reaction, reaction solution was placed into hexane to re-precipitate a polymer, which was recovered. A weight-average molecular weight of the resulting acrylic type polymer was 100,000.

Experiment 9-1-6

According to the same manner as that of the copolymerized polyester resin (A-1), a copolymerized polyester resin (A-3) having a composition as measured by NMR and a weight-average molecular weight described in Table 15 was synthesized. Regarding the copolymerized polyester resin (A-3), an acid value measured by the aforementioned

method was 50 eq./t. According to the same manner as that of Experiment 9-1-1 except that, as a first adhesion modifying layer, the copolymerized polyester resin (A-3) was used in place of the water-dispersing graft resin (B-1a), a near-infrared ray absorption film No.6 was obtained. Assessment results of this near-infrared ray absorption film No.6 are also described in Table 18.

Experiment 9-1-7

According to the same manner as that of Experiment 9-1-1 except that the following copolymerized acryl resin (A-4) was used in place of the water-dispersing graft resin (B-1a), a near-infrared ray absorption film No.7 was obtained, provided that butylcellosolve was added to a coating solution for forming a first adhesion modifying layer so that the copolymerized acryl resin (A-4) can be dissolved. Regarding the copolymerized acryl resin (A-4), an acid value measured by the aforementioned method was 2 eq./t. Assessment results of this near-infrared ray absorption film No. 7 are also described in Table 18.

(Synthesis of copolymerized acryl resin (A-4))

Forty two parts by mass of methyl methacrylate, 17.4 parts by mass of ethyl aclylate, and 0.6 part by mass of 2-hydroxyethyl acrylate as a monomer, 120 parts by mass of ethyl acetate, and 120 parts by mass of methanol as a solvent, and 0.51 part by mass of azobisisobutyronitrile as a catalyst were placed into a reactor, and the mixture was reacted for 8 hours while stirring at 60°C under the nitrogen atmosphere. After the reaction, the reaction solution was placed into hexane to re-precipitate a polymer, to prepare a copolymerized acryl resin (A-4). A weight-average molecular weight of this copolymerized acryl resin (A-4) was 100,000.

Experiment 9-1-8

According to the same manner as that of Experiment 9-1-1 except that a near-infrared ray absorbing dye to be contained in a near-infrared ray absorption layer was changed to only a dithiol metal complex type compound (SIR-128, manufactured by Mitsui Chemicals, Inc.), a near-infrared ray absorption film No.8 was obtained. Assessment results of this near-infrared ray absorption film No. 8 are also described in Table 18.

Experiment 9-1-9

According to the same manner as that of Experiment 9-1-4 except that a coating solution for forming a near-infrared ray absorption layer having a composition shown in Table 17 was used, a near-infrared ray absorption film No. 9 was obtained. Assessment results of this layer near-infrared ray absorption film No.9 are also described in Table 18.

Table 15

| | Copolymerization composition (mole%) | | |
|---|---|---|---|
| | A-1 | A-2 | A-3 |
| Terephthalic acid | 33 | 46 | 48 |
| Sebacic acid | 30 | - | - |
| Isophthalic acid | 33 | 46 | 48 |
| Sodium 5-sulfoisophthalate | - | 4 | 4 |
| Fumaric acid | 4 | 4 | - |
| Ethylene glycol | 60 | 60 | 60 |
| 1,4-Butanediol | 40 | 40 | 40 |
| Aromatic component | 66 | 96 | 100 |
| Weight-average molecular weight | 18000 | 15000 | 19000 |

In Table 15, the composition of respective compounds represents a composition of a component derived from these compounds in a resin, and the "aromatic component" represents an amount of a component derived from aromatic dicarboxylic acid in 100 mole% of components derived from an acid component in a resin.

Table 16

| Sorting | Material of coating solution N1-3 for forming near-infrared ray absorption layer | Blending amount (mass part) |
|---|---|---|
| Near-infrared ray absorbing dye | Diimmonium salt type compound (Kayasorb IRG-022, manufactured by Nippon Kayaku Co., Ltd.) | 0.80 |
| | Phthalocyanine type compound (Excolor IR-1, manufactured by Nippon Kayaku Co., Ltd.) | 0.20 |
| | Dithiol metal complex type compound (SIR-128, manufactured by Mitsui Chemicals, Inc.) | 0.30 |
| | Dithiol metal complex type compound (SIR-159, manufactured by Mitsui Chemicals, Inc.) | 0.10 |
| Resin | Copolymerized polyester resin having fluorene ring (O-PET OPN-IR, manufactured by Kanebo Ltd.) | 23.6 |
| Solvent | Methyl ethyl ketone | 25.0 |
| | Cyclopentanone | 25.0 |
| | Toluene | 25.0 |

Table 17

| Sorting | Material of coating solution for forming near-infrared ray absorption layer | Blending amount (mass part) |
|---|---|---|
| Near-infrared ray absorbing dye | Diimmonium salt type compound (Kayasorb IRG-022, manufactured by Nippon Kayaku Co., Ltd) | 1.20 |
| | Phthalocyanine type compound (Excolor IR1, manufactured by Nippon Kayaku Co., Ltd) | 0.30 |
| | Dithiol metal complex type compound (SIR-128, manufactured by Mitsui Chemicals, Inc.) | 0.45 |
| | Dithiol metal complex type compound (SIR-159, manufactured by Mitsui Chemicals, Inc.) | 0.15 |
| Resin | Copolymerized polyester resin synthesized in Experiment 9-1-4 | 14.6 |
| Solvent | Methyl ethyl ketone | 28.0 |
| | Cyclopentanone | 28.0 |
| | Toluene | 28.0 |

Table 18

| Item | Near-infrared ray absorption film No. | | | | | | | | |
|---|---|---|---|---|---|---|---|---|---|
| | 1 | 2 | 3 | 4 | 5 | 6 | 7 | 8 | 9 |
| (a) | 13 | 14 | 12 | 13 | 15 | 12 | 13 | 90 | 13 |
| (b) | 65 | 66 | 63 | 65 | 65 | 65 | 65 | 78 | 64 |
| (c) | 5 | 6 | 5 | 6 | 5 | 12 | 11 | 2 | 9 |
| (d) | 2.3 | 2.2 | 2.1 | 2.5 | 2.0 | 4.3 | 4.0 | 2.5 | 3.5 |
| (e) | 3.4 | 3.4 | 3.4 | 3.4 | 3.4 | 3.4 | 3.4 | - | 8.2 |

In Table 18, items (a) to (e) mean the following assessment content.

(a): Light transmittance in wavelength 820 nm to wavelength 1100 nm,
(b): Light transmittance in wavelength 450 nm to wavelength 650 nm,
(c): Maximum of change amount V(%) in light transmittance in the above wavelength region,
(d) : $\Delta b^*$,
(e): Content (mass %) of diimmonium salt type compound relative to resin.

As shown in Table 18, in near-infrared ray absorption films No.1 to No.5, the change in spectroscopic properties and the change in color tone are suppressed in environmental stability assessment, absorption in the near-infrared region are great, and the transmittance in a visible light region are also great. To the contrary, near-infrared ray absorption films No.6 and No.7 have a great change in spectroscopic properties and the color tone in environmental stability assessment.

In addition, the near-infrared ray absorption film No.8 is Reference Example not containing diimmonium salt type compound as a near-infrared ray absorbing dye, and result of environmental stability assessment is good, but inferior in absorption in the near-infrared region. The near-infrared ray absorption film No.9 is Reference Example in which a content of diimmonium salt type compound as the near-infrared ray absorbing dye exceeds a preferable range, and has the greater change in spectroscopic properties and the color tone in environmental stability assessment as compared with near-infrared ray absorption films No.1 to No.5.

Experiment 9-2

Experiment 9-2-1

A 380Å tin oxide layer was formed on a surface of the near-infrared ray absorption layer of the near-infrared ray absorption film No.1 manufactured in Experiment 9-1-1 using a high frequency Magnetron sputtering apparatus, subsequently, a 200Å silver layer was formed using a DC Magnetron sputtering apparatus and , further, a 410 Å tin oxide layer was formed by the aforementioned method, thereby, an electromagnetic wave shutting off layer was provided. A surface resistance of the near-infrared ray absorption film No.1 after formation of the electromagnetic wave shutting off layer was about 4Ω/□.

Experiment 9-2-2

A hard coated layer was provided on a surface of the first adhesion modifying layer on a side on which the near-infrared ray absorption layer was not provided, of the near-infrared ray absorption film No.1 manufactured in Experiment 9-1-1. The hard coated layer was cured by coating a ultraviolet curing-type resin composition obtained by adding 4 parts by mass of benzophenone to 100 parts by mass of an epoxyaclyl resin on a surface of the first adhesion modifying layer by a bar coating method, and pre-drying this at 80°C for 5 minutes, followed by irradiation with 500 $mJ/cm^2$ ultraviolet-ray. A thickness of the hard coated layer after curing was 5 μm.

Experiment 9-2-3

A copper foil having a thickness of 9 μm was laminated on a surface of the near-infrared ray absorption layer of the near-infrared ray absorption film No. 1 manufactured in Experiment 9-1-1 via an acryl type ultraviolet curing-type adhesive, and the copper foil was subjected to patterning using a photoresist, and etching-treated to form an electromagnetic wave shutting off layer. Thereupon, a copper foil wire width was about 15 μm, a pitch was 115 μm, and an opening rate was 75%.

Experiment 9-2-4

A coating solution containing 100 parts by mass of dipentaerythritol pentaaclyrate (photopolymerizable monomer), 2 parts by mass of diethoxybenzophenone (light reaction initiator), 1 part by mass of silicone surfactant, 50 parts by mass of methyl ethyl ketone, 50 parts by mass of ethyl acetate, and 50 parts by mass of isopropanol was coated on a surface of the first adhesion modifying layer on a side on which the near-infrared ray absorption layer was not provided, of the near-infrared ray absorption film No. 1 manufactured in Experiment 9-1-1, by a gravure coating method, and this was irradiated at 300 $mJ/cm^2$ with a high pressure mercury lamp to form a cured material layer having a thickness of 3.5 μm. Further, a thin film layer of MgF was formed (thickness:0.1 μm) on a surface of this layer using a vacuum deposition method by electron beam heating, to obtain an anti-reflective layer. When this film was mounted on a front

side of a 42 type wide plasma display (PDS4211J-H, manufactured by Fujitsu), and the anti-reflective layer was mounted on a visibility side, remarkable reflection of natural light was not recognized.

Experiment 9-3

When a front plate of the 42 type wide plasma display (PDS4211J-H, manufactured by Fujitsu) was removed and, instead, the near-infrared ray absorption film No. 1 was mounted as a near-infrared ray absorption filter, an erroneous motion was not seen in an infrared remote control apparatus disposed around the plasma display front.

Experiment 9-4

According to the same manner as that of Experiment 9-1-1 except that 0.034 part by mass of a silicone surfactant (Paintad 57, manufactured by Dow Corning; HLB=6.7) was added to the coating solution N1-3 for forming a near-infrared ray absorption layer shown in Table 16, a long near-infrared ray absorption film was manufactured. Spectroscopic properties of the resulting near-infrared ray absorption film were as follows: a maximum transmittance in a wavelength 820 nm to a wavelength 1100 nm was 13% and a minimum transmittance in a wavelength 450 nm to a wavelength 650 nm was 65%. Further, appearance of a coated surface in a range of continuous 10m of the long near-infrared ray absorption film was observed visually, and a defect such as omission of the coated layer was not recognized.

Experiment 9-5

Experiment 9-5-1

According to the same manner as that of Experiment 9-1-1 except that 2 stage drying of drying at 40°C for 1 minute immediately after coating of the coating solution N1-3 for a near-infrared ray absorption layer, and drying at 130°C for 1 minute was performed in Experiment 9-1-1, a long near-infrared ray absorption film was manufactured. Spectroscopic properties of the resulting near-infrared ray absorption film were as follows: a maximum transmittance in a wavelength 820 nm to a wavelength 1100 nm was 13% and a minimum transmittance in a wavelength 450 nm to a wavelength 650 nm was 65%. In addition, the manufactured long near-infrared ray absorption film was cut off in 15cm in a longitudinal direction of the film, and 15cm in a width direction. Then, a surface of the cut off sample was observed visually, and no the lack of uniformity of coating was seen. Further, the cut off sample was cut into 5cmx5cm to collect a total 9 of samples. A difference between a maximum and a minimum of the L* value of the resulting 9 samples was 0.6.

Experiment 9-5-2

According to the same manner as that of Experiment 9-5-1 except that drying was changed to one-stage drying of drying at 130°C for 1 minute 5 seconds after coating of the coating solution N1-3 for forming a near-infrared ray absorption layer in Experiment 9-5-1, a long near-infrared ray absorption film was manufactured. Spectroscopic properties of the resulting near-infrared ray absorption film were as follows: a maximum transmittance in a wavelength 820 nm to a wavelength 1100 nm was 13%, and a minimum transmittance in a wavelength 450 nm to a wavelength 650 nm was 65%. In addition, the film was cut off as in Experiment 9-16(sic). Then, when a surface of the cut off sample was observed visually, the lack of uniformity of coating was seen. Further, 9 samples were cut off as in Experiment 9-5-1. A difference between a maximum and a minimum of the L* value of the resulting 9 samples was 2.0.

Experiment 9-6

According to the same manner as that of Experiment 9-1-1 except that 0.067 part by mass of a dye (SD-184, manufactured by Kyowa Hakko Kogyo Co., Ltd.) having absorption around a neon light emitting wavelength was contained in the coating solution N1-3 for forming a near-infrared ray absorption layer used in Experiment 9-1-1 described in Table 16, a long near-infrared ray absorption film was obtained. The resulting near-infrared ray absorption film had the same results as those of Experiment 9-1-1 except that it had a steep absorption peak selective in a wavelength of 585 nm, and had a transmittance at that wavelength of 30%.

Experiment 9-7

(1)Preparation of ultraviolet absorbing agent-containing master batch

Ten parts by mass of a dried cyclic iminoester type ultraviolet absorbing agent (CYASORB UV-3638, manufactured by Cytec; 2,2'-(1,4-phenylene) bis(4H-3,1-benzoxazine-4-one)), and 90 parts by mass of a polyethylene terephthalate (PET) resin (ME553, manufactured by Toyobo, Ltd.) were mixed, and the mixture was melt kneaded using a kneading extruder, and extruded into a strand through a nozzle. Thereupon, an extruding temperature was 285°C, and an extruding time was 7 minutes. Then, the strand was cooled in a water bath, and cut to prepare a chip of a master batch.

(2)Formation of substrate film with first adhesion modifying layer laminated thereon

Ninety parts by mass of a pellet (ME553, manufactured by Toyobo, Ltd.) not containing particles of a polyethylene terephthalate resin having an intrinsic viscosity of 0.62 dl/g, and 10 parts by mass of the ultraviolet absorbing agent-containing master batch were dried at 135°C for 6 hours under reduced pressure (1Torr;$1.33\times10^2$ Pa), and supplied to an extruder. A resin temperature until a melting part, a kneading part, a polymer tube, a gear pump, and a filter of the extruder was set to be 280°C, and a resin temperature at a subsequent polymer tube was set to be 275°C, and the melt was extruded into a sheet through a nozzle of a flat die. As the filter, a filtering material (nominal filtration precision: removal rate of particles of 10 μm or larger is 95%) of a stainless sintered body was used. In addition, a resin temperature at a flat die was set at 275°C. The resin which had been melt extruded into a sheet was cooled and solidified by winding on a casting drum (roll diameter 400 mmϕ, Ra 0.1 μm or smaller) having a surface temperature of 30°C by an electrostatic application casting method, to make an unstretched film. A discharge amount at that time was 48kg/hr, and the resulting unstretched sheet had a width of 300 mm and a thickness of 1400 μm. Thereafter, a long substrate film with a first adhesion modifying method laminated on both sides was manufactured as in Experiment 9-1-1.

(3)Manufacturing of near-infrared ray absorption film

A near-infrared ray absorption layer was provided on one side of the above-obtained substrate film with an adhesion modifying layer laminated on both sides as in Experiment 9-1-1, thereby, a long near-infrared ray absorption film was manufactured.

(4)Light resistance experiment

Regarding the above-obtained near-infrared ray absorption film, a light resistance accelerating test was performed. An irradiation test with a ultraviolet autofademeter (XL-75, manufactured by Suga Test Instrument Co., Ltd.) was performed under the conditions of a black panel temperature of 63°C, a humidity of 50%, a luminous intensity of 50 W/m$^2$ and an irradiation time of 24 hours, and a transmittance at a maximum absorbing wavelength in a near-infrared region of a sample before and after the test was measured. A transmittance before the test was indicated by T, and a transmittance after the test was $T_1$. A near-infrared ray absorbing ability remaining rate R(%) was obtained from the measured values by the following equation (16), and was found to be 90% or more.

$$R(\%) = T/T_1 \times 100 \qquad (16)$$

INDUSTRIAL APPLICABILITY

Since the near-infrared ray absorption filter of the present invention not only can absorb an unnecessary near-infrared ray released from a display, and prevent an erroneous motion of precise instruments like the previous near-infrared ray absorption filter, but also is extremely good in forming property (appearance) of a near-infrared ray absorption layer due to the presence of a specified surfactant, quality of a completed near-infrared ray absorption filter is also excellent.

In addition, since the filter not only can absorb light at a wavelength of orange which reduces a color purity to make color correction, but also has anti-reflective property and ultraviolet absorbing property, it is excellent in optical properties, and durability and can suppress deterioration of a near-infrared ray absorbing dye due to a ultraviolet ray, particularly contained in natural light.

Further, since a near-infrared ray absorption layer is formed via an adhesion modifying layer constructed of an adhesion modifying resin having a specified acid value, a change in spectroscopic properties and a color tone is small even after allowed to stand for a long term and a high temperature and a high humidity. And, since the filter uses a resin as a main constitutional material, it is excellent in processibility, is light, and can suppress the cost low.

In addition, since the near-infrared ray absorption film of the present invention has a small variation in a color tone in a longitudinal direction of a long film, a difference in a color tone due to devices of a plasma display produced can be reduced and, at the same time, since the film has a small variation in a color tone in a width direction of the film,

when used in a filter for a plasma display, a variation in a color tone can be suppressed over an entire display screen and, since appearance of a near-infrared ray absorption layer is good, and there is extremely little optical effect, the film can be suitably used as an optical filter such as a display device requiring the function of absorbing a near-infrared ray, such as a plasma display.

Further, the near-infrared ray absorption film of the present invention is constructed of a film realizing multiple layers without applying a plurality of films, the film can be easily made to be thinner, and a excellent near-infrared ray absorbing ability and anti-reflecting ability, and a excellent light transmittance in a visible light region can be maintained. And, by making the film thinner, workability of application to a subject to be applied (plasma display panel) can be exerted, and the film is also economically excellent.

According to the process of the present invention, a near-infrared ray absorption film having highly excellent appearance can be advantageously manufactured.

## Claims

1. A near-infrared ray absorption film, **characterized in that** a near-infrared ray absorption layer comprising a composition containing a near-infrared ray absorbing dye having a maximum absorption in a range of 800 nm in wavelength to 1,200 nm in wavelength, and further containing a resin is provided on a transparent substrate film, wherein a surfactant having an HLB in a range of 2 to 12 is contained at 0.01% to 2.0% by mass in the composition.

2. The near-infrared ray absorption film according to claim 1, wherein the surfactant is a silicone type surfactant or a fluorine type surfactant.

3. The near-infrared ray absorption film according to claim 1, wherein the near-infrared ray absorption layer further contains a color correcting dye having a maximum absorption in a range of 550 nm in wavelength to 620 nm in wavelength.

4. The near-infrared ray absorption film according to claim 1, wherein the near-infrared ray absorbing dye comprises an aromatic diimmonium salt type compound.

5. The near-infrared ray absorption film according to claim 1, wherein the transparent substrate film comprises a laminated film made of at least three layers or more, and a layer having an ultraviolet absorbing agent is provided at an intermediate part other than a surface layer.

6. The near-infrared ray absorption film according to claim 1, wherein the near-infrared ray absorption layer is formed on the transparent substrate film with an adhesion modifying layer being interposed, the adhesion modifying layer containing, as a main component, an adhesion modifying resin having an acid value of 200 eq./t or more.

7. The near-infrared ray absorption film according to claim 6, wherein the adhesion modifying resin is a polyester type graft copolymer in which a polyester type resin is grafted with an acid anhydride having at least one double bond.

8. The near-infrared ray absorption film according to claim 1, wherein it has a light transmittance of not lower than 55% in a range of 450 nm in wavelength to 650 nm in wavelength, and a light transmittance of not higher than 20% in a range of 820 nm in wavelength to 1,100 nm in wavelength.

9. The near-infrared ray absorption film according to claim 3, wherein it has a light transmittance of 10% to 60% in a range of 550 nm in wavelength to 600 nm in wavelength, and a light transmittance of not higher than 20% in a range of 820 nm in wavelength to 1,100 nm in wavelength.

10. The near-infrared ray absorption film according to claim 1, wherein an anti-reflective layer is provided on a side opposite to the near-infrared ray absorption layer provided on the transparent substrate film.

11. A near-infrared ray absorption film roll, **characterized in that** it comprises a near-infrared ray absorption film according to claim 1 wound up at a length of 100 m or greater and a width of 0.5 m or greater, wherein a long film wound up in this roll has a maximum of a color difference Δ(MD) measured by a following measuring method (A) of 2.0 or smaller:

    (A) in a measurement of a color tone of the film, in a longitudinal direction (MD) of the film, letting one end of a

steady region where film physical properties are stabilized to be a first end, and letting the other end to be a second end, first measurement is carried out within 2 m on an inner side of the first end, and final measurement is carried out within 2 m on an inner side of the second end and, at the same time, measurement is carried out every about 10 m from the first measurement part, and a color difference $\Delta E(MD)$ defined by a following equation is calculated at each measurement part:

$$\Delta E(MD) = [(L_a - L_m)^2 + (a_a - a_m)^2 + (b_a - b_m)^2]^{1/2}$$

wherein $L_m$, $a_m$, and $b_m$ mean color tones L, a, and b at each measurement part, respectively, and $L_a$, $a_a$, and $b_a$ mean averages of color tones L, a, and b, respectively, at all measurement parts.

**12.** A near-infrared ray absorption film roll, **characterized in that** it comprises a near-infrared ray absorption film according to claim 1 wound up at a length of 100 m or greater and a width of 0.5 m or greater, wherein a long film wound up in this roll has a maximum of a color difference $\Delta(TD)$ measured by a following measuring method (B) of 1.0 or smaller:

(B) in a measurement of a color tone of the film, in a width direction (TD) of the film, letting one end of a steady region where film physical properties are stabilized to be a first end, and letting the other end to be a second end, first measurement is carried out within 0.1 m on an inner side of the first end, and final measurement is carried out within 0.1 m on an inner side of the second end and, at the same time, measurement is carried out at three parts at an approximately equal intervals between the first measurement part and the final measurement part, and a color difference $\Delta E(TD)$ defined by a following equation is calculated at these five measurement parts:

$$\Delta E(TD) = [(L_a - L_m)^2 + (a_a - a_m)^2 + (b_a - b_m)^2]^{1/2}$$

wherein $L_m$, $a_m$, and $b_m$ mean color tones L, a, and b at each measurement part, respectively, and $L_a$, $a_a$, and $b_a$ mean averages of color tones L, a, and b, respectively, at all measurement parts.

**13.** A process for preparing a near-infrared ray absorption film, **characterized in that** it comprises applying a coating solution containing a near-infrared ray absorbing dye, a resin, a surfactant, and an organic solvent on a transparent substrate film, followed by drying, to form a near-infrared ray absorption layer, wherein a surfactant having an HLB in a range of 2 to 12 is used as the surfactant, and this surfactant is contained at 0.01% to 2.0% by mass, relative to a solid content of the coating solution.

**14.** The process for preparing a near-infrared ray absorption film according to claim 13, wherein in a drying step after application of the coating solution, a step of drying with hot air is divided into multi-stage of 2 or more stages and, in a first stage drying step, drying is carried out at 20°C to 80°C for not shorter than 10 seconds and not longer than 120 seconds and, at a second or later drying step where a drying temperature is highest, drying is carried out at 80°C to 180°C for not shorter than 5 seconds and not longer than 60 minutes.

**15.** The process for preparing a near-infrared ray absorption film according to claim 13, wherein a reverse gravure method is used as a method of applying the coating solution.

**16.** The process for preparing a near-infrared ray absorption film according to claim 15, wherein a diameter of a gravure is 80 mm or smaller in the reverse gravure method.

**17.** A process for preparing a near-infrared ray absorption roll, **characterized in that** it comprises continuously coating a coating solution containing a near-infrared ray absorbing dye, a resin, a surfactant, and an organic solvent on a transparent substrate film, followed by drying, to prepare a near-infrared ray absorption film provided with a near-infrared ray absorption layer, and winding up the film at a length of 100 m or greater, and a width of 0.5 m or greater, wherein a surfactant having an HLB in a range of 2 to 12 is used as the surfactant, and this surfactant is contained at 0.01% to 2.0% by mass, relative to a solid content of the coating solution, and
a maximum of a color difference $\Delta(MD)$ measured by a following measuring method (A) is controlled at 2.0 or smaller by, after application of the coating solution and drying, measuring a color tone and/or a light transmittance at a

specific wavelength by on-line, and adjusting application conditions and/or drying conditions of the coating solution depending on measurement results:

(A) in a measurement of a color tone of the film, in a longitudinal direction (MD) of the film, letting one end of a steady region where film physical properties are stabilized to be a first end, and letting the other end to be a second end, first measurement is carried out within 2 m on an inner side of the first end, and final measurement is carried out within 2 m on an inner side of the second end and, at the same time, measurement is carried out every about 10 m from the first measurement part, and a color difference ΔE(MD) defined by a following equation is calculated at each measurement part:

$$\Delta E(MD) = [(L_a - L_m)^2 + (a_a - a_m)^2 + (b_a - b_m)^2]^{1/2}$$

wherein $L_m$, $a_m$, and $b_m$ mean color tones L, a, and b at each measurement part, respectively, and $L_a$, $a_a$, and $b_a$ mean averages of color tones L, a, and b, respectively, at all measurement parts.

**18.** The process for preparing a near-infrared ray absorption film roll according to claim 17, wherein application of the coating solution is carried out with a gravure coating apparatus having a gravure roll, and a rate ratio G/F of a rotation rate G (m/min) of a gravure roll to a running rate F (m/min) of a film is 0.8 to 1.5.

**19.** The process for preparing a near-infrared ray absorption film roll according to claim 18, wherein as the gravure coating apparatus, an apparatus having a mechanism of scraping up a coating solution from a liquid supplying pan with a reversely rotating gravure roll and scraping down an excess coating solution with a doctor blade, in which at least a part of the doctor blade coming in contact with the gravure roll is made of a ceramic or nickel, is used.

**20.** A process for preparing a near-infrared ray absorption roll, **characterized in that** it comprises continuously coating a coating solution containing a near-infrared ray absorbing dye, a resin, a surfactant, and an organic solvent on a transparent substrate film, followed by drying, to prepare a near-infrared ray absorption film provided with a near-infrared ray absorption layer, and winding up the film at a length of 100 m or greater, and a width of 0.5 m or greater, wherein a surfactant having an HLB in a range of 2 to 12 is used as the surfactant, and this surfactant is contained at 0.01% to 2.0% by mass, relative to a solid content of the coating solution, and
a maximum of a color difference Δ(TD) measured by a following measuring method (B) is controlled at 1.0 or smaller by applying the coating solution by a kiss coating method, and setting a tension in a longitudinal direction at an applying part of a transparent substrate film to be not smaller than 0.5 $N/mm^2$ and not greater than 1.2 $N/mm^2$:

(B) in a measurement of a color tone of the film, in a width direction (TD) of the film, letting one end of a steady region where film physical properties are stabilized to be a first end, and letting the other end to be a second end, first measurement is carried out within 0.1 m on an inner side of the first end, and final measurement is carried out within 0. 1 m on an inner side of the second end and, at the same time, measurement is carried out at three parts at an approximately equal intervals between the first measurement part and the final measurement part, and a color difference ΔE(TD) defined by a following equation is calculated at these five measurement parts:

$$\Delta E(TD) = [(L_a - L_m)^2 + (a_a - a_m)^2 + (b_a - b_m)^2]^{1/2}$$

wherein $L_m$, $a_m$, and $b_m$ mean color tones L, a, and b at each measurement part, respectively, and $L_a$, $a_a$, and $b_a$ mean averages of color tones L, a, and b, respectively, at all measurement parts.

**21.** The process for preparing a near-infrared ray absorption film roll according to claim 20, wherein application of the coating solution is carried out with a gravure coating apparatus having a gravure roll, and a rate ratio G/F of a rotation rate G (m/min) of the gravure roll to a running rate F (m/min) of a film is 0.8 to 1.5.

**22.** The process for preparing a near-infrared ray absorption film roll according to claim 21, wherein as the gravure coating apparatus, an apparatus having a mechanism of scraping up a coating solution from a liquid supplying pan with a reversely rotating gravure roll and scraping down an excess coating solution with a doctor blade, in which at least a part of the doctor blade coming in contact with the gravure roll is made of a ceramic or nickel, is used.

**23.** The process for preparing a near-infrared ray absorption film roll according to claim 21, wherein in a drying step after application of the coating solution, a step of drying with hot air is divided into multi-stage of 2 or more stages and, in a first stage of drying step, drying is carried out at 20°C to 80°C for not shorter than 10 seconds, and not longer than 120 seconds and, at a second or later drying step where a drying temperature is highest, drying is carried out at 80°C to 180°C for not shorter than 5 seconds and not longer than 60 minutes and, further, after the multi-stage hot air drying step, a cooling step of cooling with air at a glass transition temperature of a resin constituting the near-infrared ray absorption layer or lower is carried out.

**24.** A near-infrared ray absorption filter mounted on a front of a plasma display, **characterized in that** this near-infrared ray absorption filter uses a near-infrared ray absorption film according to claim 10, and the anti-reflective layer of the near-infrared ray absorption film is disposed on a surface side, and the near-infrared ray absorption layer is disposed on the display side.

**FIG.1**

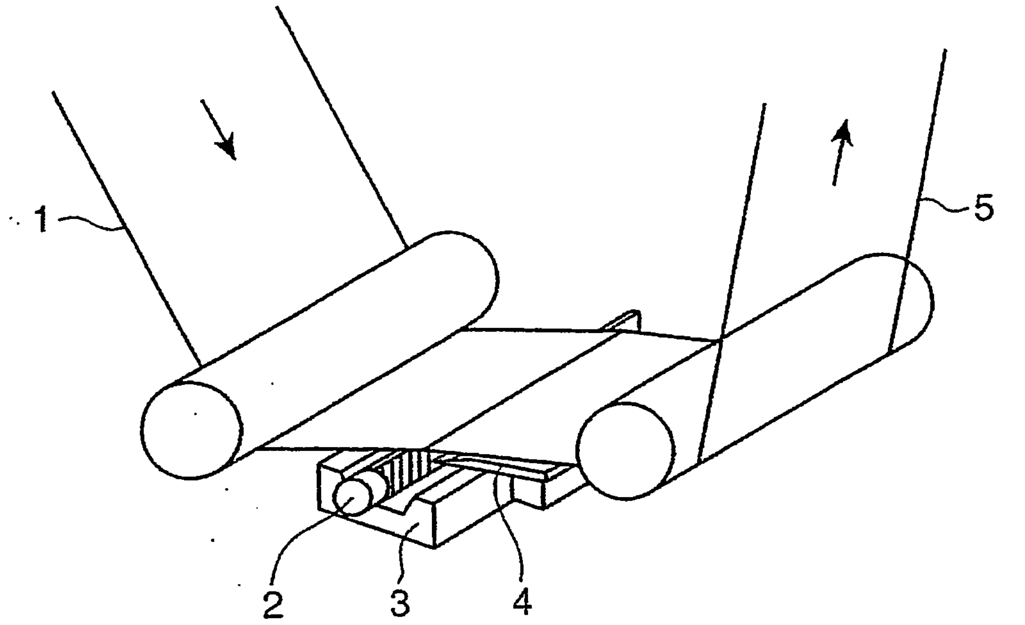

# FIG.2

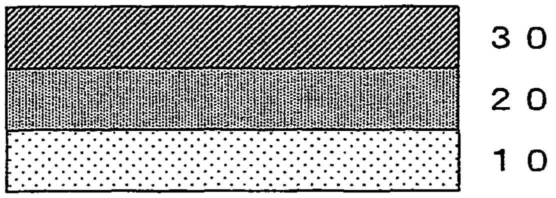


# FIG.3

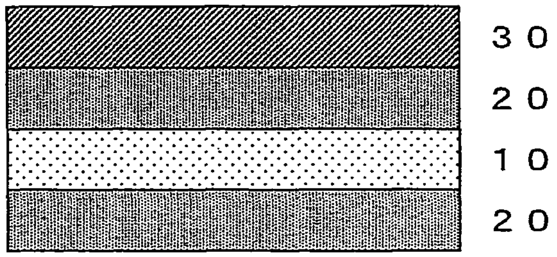


# FIG.4

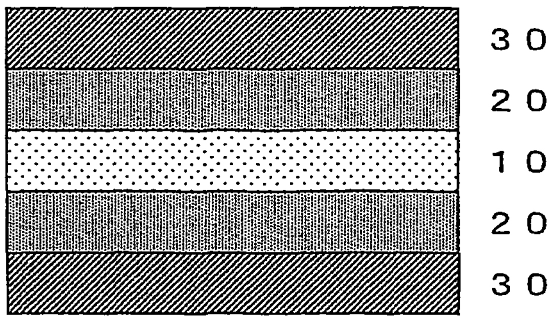

FIG.5

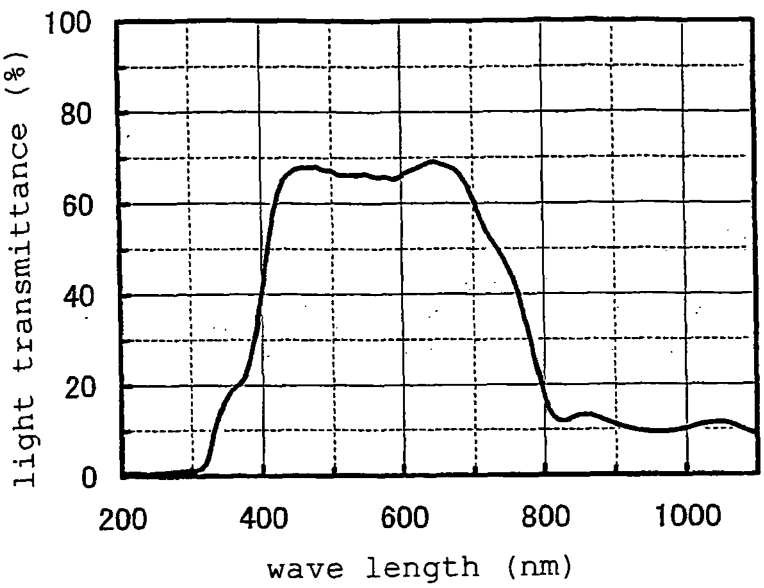
100
80
60
40
20
0
200
400
600
800
1000
light transmittance (%)
wave length (nm)